# EUROPÄISCHE PATENTSCHRIFT

(11) **EP 2 720 098 B1**
(45) Veröffentlichungstag und Bekanntmachung des Hinweises auf die Patenterteilung: **15.04.2020**
(21) Anmeldenummer: 12188009.0
(22) Anmeldetag: 10.10.2012
(51) Int. Cl.: H04L 12/26, G05B 9/02, H04L 12/437, H04L 12/40

(54) **Sicherheitssystem für eine Anlage umfassend einen Testsignalpfad mit Hin- und Rückleitungspfad**
Safety system for a plant comprising a test signal path with return path
Système de sécurité pour une installation comprenant un chemin de signal de test avec un chemin de retour

(43) Veröffentlichungstag der Anmeldung: 16.04.2014
(73) Patentinhaber: SICK AG, 79183 Waldkirch (DE)
(72) Erfinder: Henneberger, Stephan, 79110 Freiburg (DE); Behre, Frederik, 79365 Rheinhausen (DE)
(74) Vertreter: Manitz Finsterwald Patent- und Rechtsanwaltspartnerschaft mbB

(56) Entgegenhaltungen:
- EP-A1- 1 699 203
- EP-A2- 2 101 237
- DE-A1-102011 079 688
- US-A- 4 630 233

## Beschreibung

Die vorliegende Erfindung betrifft ein Sicherheitssystem, welches beispielsweise zur Erkennung eines Gefahrenfalls bei einer sicherheitskritischen Anlage oder Maschine und zur Durchführung einer Sicherheitsabschaltung im Gefahrenfall einsetzbar ist.

Sicherheitssysteme der betreffenden Art umfassen üblicherweise eine z.B. als Sicherheitssteuerung ausgebildete Sicherheitseinheit mit einem Ausgang und einem Sicherheitseingang und mit wenigstens einem durch ein Schutzgerät gebildeten Sicherheitsteilnehmer. Dabei bildet eine mit dem Ausgang und dem Sicherheitseingang verbundene Testsignalleitung bzw. Busleitung zusammen mit dem Sicherheitsteilnehmer einen Testsignalpfad zur Übertragung eines von der Sicherheitssteuerung erzeugten dynamischen Testsignals, wobei der Sicherheitsteilnehmer dazu ausgebildet ist, bei Vorliegen bzw. Eintreten eines nicht sicheren Zustandes eine Unterbrechung des Testsignalpfads zu bewirken. Bleibt das erwartete Testsignal an dem Sicherheitseingang der Sicherheitssteuerung aufgrund der Unterbrechung des Testsignalpfads aus, kann die Sicherheitssteuerung eine Sicherheitsmaßnahme ergreifen und zum Beispiel die Stromzufuhr zu einer sicherheitskritischen Anlage unterbrechen und diese dadurch abschalten, wodurch das Sicherheitssystem seine Sicherheitsfunktion erfüllt.

Ein Sicherheitssystem kann auch mehrere mit der Sicherheitssteuerung verbundene Schutzgeräte umfassen, die z.B. örtlich verteilt angeordnet sein können, wobei ein nicht sicherer Zustand eines beliebigen Schutzgeräts jeweils zur Unterbrechung des Testsignalpfads und zu dem Auslösen der Sicherheitsfunktion führt, d.h. z.B. dem Abschalten der Anlage durch die Sicherheitssteuerung.

Die Reaktion auf einen nicht sicheren Zustand eines Schutzgeräts, z.B. in Form einer Sicherheitsabschaltung, stellt die eigentliche, beabsichtigte Sicherheitsfunktion dar, die bei dem fehlerfreien Betrieb des Sicherheitssystems zuverlässig gewährleistet werden muss. Daneben können Fehler in dem Sicherheitssystem auftreten, wie z.B. Leitungs- oder Kabelfehler wie Unterbrechungen, Querschlüsse und Kurzschlüsse von Leitungsadern oder ähnliche Fehler. Damit das Sicherheitssystem ein hohes Sicherheitsniveau z.B. gemäß den Normen IEC 61508 oder EN ISO 13849-1 erfüllt, muss sichergestellt werden, dass ein solcher Fehlerfall erkannt wird bzw. zumindest nicht zu einem Verlust der Sicherheitsfunktion des Sicherheitssystems führt. Stattdessen soll bevorzugt auch in einem solchen Fehlerfall zuverlässig eine Sicherheitsabschaltung der Anlage erfolgen.

Es sind Sicherheitssysteme mit einer ringförmigen Busleitung bekannt, wobei an der ringförmigen Busleitung mehrere in einer ringförmigen Topologie angeordnete Sicherheitsteilnehmer bzw. Schutzgeräte angeschlossen und über die Busleitung in Serie geschaltet und dadurch kaskadiert sind. Die ringförmige Busleitung und die Schutzgeräte bilden dabei einen Testsignalpfad mit in getrennten Busleitungsabschnitten angeordnetem Hinleitungspfad und Rückleitungspfad. Das Testsignal durchläuft der Reihe nach alle Schutzgeräte der Kaskade, wobei diese jeweils zur Unterbrechung des Testsignalpfads bei dem Auftreten eines nicht sicheren Zustands eingerichtet sind, so dass das Testsignal bei fehlerfreier Funktion des Sicherheitssystems nur dann in der erwarteten Form zur Sicherheitssteuerung zurückgeführt wird, wenn alle Schutzgeräte sich in ihrem sicheren Zustand befinden. Das an dem Eingang der Sicherheitssteuerung empfangene Testsignal stellt somit eine Summeninformation bereit, die angibt, ob sich alle Schutzgeräte in ihrem sicheren Zustand befinden oder nicht. Durch die bei der Ringtopologie gewährleistete getrennte Leitungsführung des Hinleitungspfads und des Rückleitungspfads des Testsignalpfads wird es vermieden, dass ein Schutzgerät durch einen Querschluss zwischen dem Hinleitungspfad und dem Rückleitungspfad des Testsignalpfads überbrückt wird, so dass eine Überbrückung des jeweiligen Schutzgeräts und ein dadurch hervorgerufener Verlust der Sicherheitsfunktion vermieden werden.

EP 1 393 280 A1 offenbart ein Sicherheitssystem mit einer Sicherheitseinheit und mehreren Sicherheitsteilnehmern, die in einer wie vorstehend beschriebenen Ringtopologie an eine mit der Sicherheitseinheit verbundene Busleitung angeschlossen sind und mit der Busleitung einen ringförmigen Testsignalpfad bilden. Gemäß einer Ausführungsform sind mehrere Schutzgeräte sternförmig an eine Steckerbox angeschlossen, über die die Schutzgeräte an die Busleitung angeschlossen sind. Die Sicherheitseinheit sendet als Testsignal eine Pulsfolge über die Busleitung aus, wobei das Testsignal in jedem Schutzgerät phaseninvertiert und zeitlich verzögert wird. Die Sicherheitsteuerung kontrolliert, dass die in dem empfangenen Testsignal enthaltene Pulsfolge die erwartete Phasenlage und eine erwartete Zeitverzögerung aufweist. Durch die Überprüfung der Phasenlage wird sichergestellt, dass eine Überbrückung von Schutzgeräten z.B. durch einen Kurzschluss in dem Testsignalpfad zur Auslösung der Sicherheitsabschaltung durch das Sicherheitssystem führt.

Aus DE 10 2010 025 675 B3 ist ein Sicherheitssystem bekannt, das eine Sicherheitseinheit und mehrere über jeweils eine Zweidrahtleitung mit der Sicherheitseinheit verbundene und zueinander parallel geschaltete Schutzgeräte aufweist, wobei zwischen den zwei Adern einer Zweidrahtleitung jeweils eine überwiegend konstante Spannung anliegt und die Schutzgeräte jeweils dazu ausgebildet sind, abhängig von ihrem Schaltzustand ein definiertes Pulssignal auf der Zweidrahtleitung zu erzeugen. Zur Erzeugung eines Pulses des Pulssignals rufen die Schutzgeräte jeweils einen Spannungseinbruch zwischen den beiden Adern der Zweidrahtleitung hervor, beispielsweise durch Schließen eines Kurzschlussschalters.

Bei der Verwendung von mehreren Schutzgeräten, die entlang einer Anlage mit einer größeren linearen Erstreckung verteilt angeordnet sind, ist die Realisierung eines Sicherheitssystems mit einem gewünscht hohen Sicherheitsniveau nach dem Stand der Technik sehr aufwendig und teuer. Insbesondere ist die Anbindung und Verkabelung der Teilnehmer zur Herstellung des Sicherheitssystems mit einem erheblichen Material- und Zeitaufwand verbunden. Außerdem ist es nicht ohne erheblichen Mehraufwand möglich, zusätzlich zu der auf dem Testsignalpfad übertragenen Sicherheitsinformation Daten zwischen der Sicherheitssteuerung und den Schutzgeräten zu übertragen.

EP 2 101 237 A2 offenbart ein Sicherheitssystem gemäß dem Oberbegriff des Anspruchs 1.

Aufgabe der Erfindung ist es, ein Sicherheitssystem mit mehreren Schutzgeräten anzugeben, das mit geringerem Zeit- und Kostenaufwand bereitgestellt werden kann und insbesondere einen geringeren Verkabelungsaufwand erfordert und welches gleichzeitig ein hohes Sicherheitsniveau gewährleistet. Zudem soll das Sicherheitssystem bei geringer Komplexität und geringem Implementierungsaufwand eine Datenübertragung zwischen der Sicherheitssteuerung und den Sicherheitsteilnehmern bereitstellen. Zur Lösung dieser Aufgabe ist ein Sicherheitssystem mit den Merkmalen des Anspruchs 1 vorgesehen.

Das erfindungsgemäße Sicherheitssystem umfasst:
- eine Sicherheitseinheit, insbesondere Sicherheitssteuerung, mit einem Ausgang und einem Sicherheitseingang,
- eine Busleitung, die an dem Ausgang und dem Sicherheitseingang der Sicherheitseinheit angeschlossen ist und
- mehrere an die Busleitung angeschlossene Sicherheitsteilnehmer, die jeweils ein Schutzgerät umfassen.

Die Busleitung und die an die Busleitung angeschlossenen Sicherheitsteilnehmer bilden einen Testsignalpfad mit einem mit dem Ausgang der Sicherheitseinheit verbundenen Hinleitungspfad und einem mit dem Sicherheitseingang der Sicherheitseinheit verbundenen Rückleitungspfad. Wenigstens ein Teil der und vorzugsweise alle Sicherheitsteilnehmer des Systems sind entlang der Busleitung so in einer Linie angeordnet, dass sowohl der Hinleitungspfad als auch der Rückleitungspfad des Testsignalpfads durch dieselben Sicherheitsteilnehmer hindurch verlaufen, und sind derart eingerichtet, dass das Vorliegen eines nicht sicheren Zustandes des zugeordneten Schutzgeräts eine Unterbrechung des Testsignalpfads bewirkt. Das Sicherheitssystem umfasst ferner
- ein vorzugsweise an dem Ende der Linie angeschlossenes, den Hinleitungspfad und den Rückleitungspfad des Testsignalpfads verbindendes Abschlusselement,
wobei die Sicherheitseinheit dazu ausgebildet ist, an dem mit dem Hinleitungspfad verbundenen Ausgang ein Ausgangssignal auszusenden, und wobei das Abschlusselement dazu ausgebildet ist, das Ausgangssignal von dem Hinleitungspfad zu empfangen und in Abhängigkeit von dem von dem Hinleitungspfad empfangenen Ausgangssignal ein gegenüber dem empfangenen Ausgangssignal verändertes Testsignal an den Rückleitungspfad des Testsignalpfads auszugeben.

In der Sicherheitseinheit ist bevorzugt eine Erwartungshaltung in Bezug auf das an dem Sicherheitseingang empfangene Testsignal abgelegt und die Sicherheitseinheit, welche bevorzugt als Sicherheitssteuerung ausgebildet ist, ist dazu eingerichtet, zu überprüfen, ob das tatsächlich empfangene Testsignal dieser Erwartungshaltung entspricht, und andernfalls insbesondere eine Sicherheitsmaßnahme wie z.B. eine Sicherheitsabschaltung durchzuführen bzw. zu veranlassen. Beispielsweise kann die Erwartungshaltung umfassen, dass eine maximale zulässige zeitliche Abweichung oder Verzögerung zwischen dem Zeitpunkt, zu dem eine Testlücke des an der Sicherheitseinheit eingehenden Testsignals erwartet wird, und dem tatsächlichen Auftreten einer Testlücke in dem eingehenden Testsignal nicht überschritten wird und/oder dass die Dauer einer Testlücke des eingehenden Signals einer erwarteten Testlückendauer entspricht. Somit führt zum Beispiel ein dauerhaftes Anliegen eines niedrigen Signalpegels ("Low") an der Sicherheitseinheit, z.B. aufgrund einer Unterbrechung eines Schutzgeräts, zum Ansprechen der Sicherheitsfunktion und vorzugsweise zum Auslösen einer Sicherheitsabschaltung, ebenso wie ein Ausbleiben einer erwarteten Testlücke aufgrund eines so genannten "Stuck-at-High"-Fehlers, d.h. einem dauerhaft anliegenden hohen Signalpegel ("High").

Das erfindungsgemäße Sicherheitssystem umfasst eine Busleitung, an die mehrere Sicherheitsteilnehmer angeschlossen sind, die zusammen mit der Busleitung einen Testsignalpfad bilden und die dazu ausgebildet sind, den Testsignalpfad bei Vorliegen eines nicht sicheren Zustandes ihres Schutzgeräts zu unterbrechen.

Erfindungsgemäß ist ein Schutzgerät ein sicheres Schutzgerät, welches dazu ausgebildet ist, abhängig von einer für die Sicherheit einer Person relevanten äußeren Einwirkung einen sicheren Zustand oder nicht sicheren Zustand anzunehmen. Beispielsweise kann es sich um einen Not-Aus-Taster handeln, der einen oder mehrere z.B. mechanische Schaltkontakte umfasst, die im sicheren, d.h. nicht betätigten, Zustand des Not-Aus-Tasters geschlossen sind und die im nicht sicheren, d.h. betätigten, Zustand des Not-Aus-Tasters geöffnet sind. Ein weiteres Beispiel ist eine Zuhaltungsvorrichtung einer Sicherheitstür, die einen oder mehrere insbesondere magnetisch angesteuerte Schaltkontakte aufweist, die in der sicheren, d.h. geschlossenen, Stellung der Tür geschlossen sind und die in der nicht sicheren, d.h. geöffneten, Stellung der Tür geöffnet sind.

Die Sicherheitsteilnehmer sind über die Busleitung zu einer einkanalig getesteten Kaskade verschaltet, derart, dass ein nicht sicherer Zustand an einem beliebigen der über die Busleitung elektrisch in Serie geschalteten Sicherheitsteilnehmer zum Ausbleiben eines der Erwartungshaltung entsprechenden Testsignals an dem Sicherheitseingang der Sicherheitseinheit und vorzugsweise zur Auslösung einer Sicherheitsmaßnahme führt. Das an dem Sicherheitseingang empfangene Testsignal repräsentiert somit eine Sicherheitsinformation bzw. Summeninformation derart, dass ein der Erwartungshaltung entsprechendes Testsignal nur dann zu der Sicherheitseinheit gelangt, wenn sich alle Schutzgeräte in ihrem sicheren Zustand befinden und der Testsignalpfad nicht unterbrochen ist.

Mehrere und vorzugsweise alle Sicherheitsteilnehmer des Systems sind entlang der Busleitung derart in einer Linie angeordnet, dass sowohl der Hinleitungspfad als auch der Rückleitungspfad des Testsignalpfads durch dieselben Sicherheitsteilnehmer hindurch verlaufen. Dadurch wird ein Sicherheitssystem mit einer Linientopologie realisiert, bei dem die zwischen zwei Sicherheitsteilnehmern angeordneten Abschnitte sowohl des Hinleitungspfad als auch des Rückleitungspfads des Testsignalpfads z.B. als getrennte Adern in einem gemeinsamen Buskabel der Busleitung angeordnet sein können und über ein gemeinsames Steckverbindungselement mit dem jeweiligen Sicherheitsteilnehmer verbunden sein können. Im Vergleich zu einer Ringtopologie mit einer von der Hinleitung getrennt geführten Rückleitung des Testsignalpfads wird dadurch der für die Verkabelung erforderliche Aufwand erheblich reduziert.

Die durch die Sicherheitsteilnehmer gebildete Linie wird durch ein vorzugsweise an ihrem Ende angeordnetes Abschlusselement abgeschlossen, welches dazu ausgebildet ist, das von der Sicherheitseinheit ausgesendete, über den Hinleitungspfad übertragene Ausgangssignal zu empfangen und in Abhängigkeit von dem von dem Hinleitungspfad empfangenen Ausgangssignal ein gegenüber dem empfangenen Ausgangssignal verändertes dynamisches Testsignal an den Rückleitungspfad des Testsignalpfads auszusenden. Eine Überbrückung des Abschlusselements, insbesondere durch einen in der Busleitung auftretenden Querschluss zwischen dem Hinleitungspfad und dem Rückleitungspfad des Testsignalpfads, führt demzufolge zuverlässig dazu, dass kein der Erwartung entsprechendes Testsignal empfangen wird, da die durch das Abschlusselement bei fehlerfreier Funktion durchgeführte Veränderung des Ausgangssignals unterbrochen bzw. überbrückt ist.

Die Sicherheitseinheit und deren Erwartungshaltung können dementsprechend so konfiguriert sein, dass ein gegenüber dem ausgesendeten Ausgangssignal verändertes Signal erwartet wird bzw. dass die an das empfangene Testsignal gestellte Erwartungshaltung die durch das Abschlusselement durchgeführte Signalveränderung bzw. -umwandlung voraussetzt. Dadurch wird erreicht, dass die Erwartungshaltung durch das an dem Sicherheitseingang eingehende Testsignal zuverlässig verletzt wird, wenn, bei ansonsten fehlerfreier Funktion des Sicherheitssystems, ein Querschluss zwischen dem Hinleitungspfad und dem Rückleitungspfad des Testsignalpfads vorliegt, durch den das Abschlusselement überbrückt wird. Insbesondere bedeutet dies, dass das von der Sicherheitseinheit ausgesendete bzw. das von dem Abschlusselement im fehlerfreien Betrieb empfangene Ausgangssignal die Erwartungshaltung der Sicherheitseinheit an das zurückgeführte Testsignal nicht erfüllen. Die Sicherheitseinheit erhält somit zuverlässig nur dann das erwartete Testsignal, wenn sowohl der Hinleitungspfad als auch der Rückleitungspfad nicht unterbrochen oder quergeschlossen sind und wenn auch sonst kein Leitungsfehler in dem Sicherheitssystem vorliegt. Beispielsweise kann die durch das Abschlusselement durchgeführte Signalveränderung bzw. -umwandlung in dem Sicherheitssystem einmalig sein, d.h. dass die Sicherheitsteilnehmer nicht dazu eingerichtet sind, eine entsprechende Signalveränderung bzw. - umwandlung des über den Testsignalpfad übertragenen Signals durchzuführen.

Da das Abschlusselement den Hin- und Rückleitungspfad des Testsignalpfads verbindet und vorzugsweise am Ende der Linie angeordnet ist, führt eine wie vorstehend beschriebene durch einen Querschluss hervorgerufene Überbrückung an einer beliebigen Stelle der Busleitung auch zu einer Überbrückung des Abschlusselements und somit zu der vorstehend beschriebenen Verletzung der Erwartungshaltung, so dass es nicht möglich ist, dass ein Schutzgerät und deren schützende Funktion aufgrund eines Leitungsfehlers überbrückt wird, ohne dass der Fehler erkannt und eine Sicherheitsmaßnahme eingeleitet wird. Auf diese Weise wird trotz der Linientopologie, der dabei zulässigen Führung von Hin- und Rückleitungspfad des Testsignalpfads in einem gemeinsamen Kabel und der damit einhergehenden Möglichkeit eines Querschlusses zwischen diesen Pfaden ein hohes Sicherheitsniveau erreicht.

Vorteilhafte Ausführungsformen der Erfindung sind in den Unteransprüchen, der Beschreibung und den Figuren beschrieben.

Die Sicherheitseinheit kann prinzipiell eine Sicherheitskomponente wie z.B. ein Sicherheitsrelais, einen Sicherheitssensor, einen Sicherheitsaktor oder eine ähnliche Sicherheitskomponente umfassen, welche einen Ausgang und einen Sicherheitseingang für ein Ausgangssignal bzw. Testsignal aufweist.

Vorzugsweise ist die Sicherheitseinheit durch eine Sicherheitssteuerung gebildet, welche bevorzugt dazu eingerichtet ist, bei Ausbleiben des erwarteten Testsignals eine Sicherheitsmaßnahme durchzuführen und insbesondere eine überwachte Anlage oder eine damit verbundene Einrichtung aktiv anzusteuern, um die Anlage in einen sicheren Zustand zu überführen. Zum Beispiel kann die Sicherheitssteuerung eine Unterbrechung der Stromzufuhr zu der Anlage bewirken, insbesondere durch Ansteuerung eines in einer Stromzufuhrleitung angeordneten Relais. Die Sicherheitssteuerung kann eine digitale Logikeinheit umfassen, welche einen oder mehrere Mikroprozessoren umfassen kann und welche vorzugsweise das Aussenden des Ausgangssignals und/oder die Auswertung des eingehenden Testsignals steuert.

Wenn im Nachfolgenden die vorteilhaften Ausführungsformen der Erfindung unter Bezugnahme auf eine Sicherheitssteuerung erläutert sind, sind diese Erläuterungen allgemein auf die Anwendung der Erfindung auf eine Sicherheitseinheit zu beziehen, wobei die Realisierung der Erfindung mit einer Sicherheitssteuerung eine bevorzugte Ausführungsform darstellt.

Vorzugsweise ist das Abschlusselement dazu eingerichtet, nur bei ordnungsgemäßem Empfang des von der Sicherheitssteuerung ausgesendeten Ausgangssignals ein der Erwartungshaltung der Sicherheitssteuerung entsprechendes Testsignal auszugeben. Das Abschlusselement ist vorzugsweise dazu ausgebildet, ein zu dem von der Sicherheitssteuerung ausgesendeten dynamischen Ausgangssignal synchronisiertes Testsignal auszugeben. Gemäß einer Ausführungsform weist das von der Sicherheitssteuerung ausgesendete Ausgangssignal, insbesondere periodisch wiederkehrende, Synchronisationsmerkmale auf, die vorzugsweise periodisch und zueinander zeitlich beabstandet wiederkehren. Ein Synchronisationsmerkmal kann beispielsweise eine steigende und/oder eine fallende Flanke des Ausgangssignals umfassen und kann vorzugsweise durch eine Testlücke einer bestimmten Länge, d.h. einem für eine bestimmte Dauer anliegenden niedrigen Signalpegel, gebildet sein oder durch eine Testlücke einer bestimmten Länge gefolgt von einem für eine bestimmte Dauer anliegenden hohen Signalpegel. Um das ausgegebene Testsignal mit dem empfangenen Ausgangssignal zu synchronisieren, erfasst und identifiziert das Abschlusselement vorzugsweise die Synchronisationsmerkmale und synchronisiert das ausgegebene Testsignal mit dem Auftreten der Synchronisationsmerkmale in dem empfangenen Ausgangssignal, so dass das Testsignal bzw. erwartete Merkmale des Testsignals wie z.B. Testlücken des Testsignals zu dem Ausgangssignal zumindest im Wesentlichen synchron sind. Vorzugsweise fällt dabei der Zeitpunkt der Aussendung der Testmerkmale durch das Abschlusselement mit dem Zeitpunkt der Aussendung der Synchronisationsmerkmale in dem Ausgangssignal durch die Sicherheitssteuerung zumindest annähernd zusammen. Das Abschlusselement kann dazu eine eigene, von dem empfangenen Ausgangssignal unabhängige Zeitbasis aufweisen, beispielsweise einen Taktgeber eines zur Erzeugung des Testsignals verwendeten Mikroprozessors, und kann das Auftreten der Synchronisationsmerkmale in dem empfangenen Ausgangssignal überwachen und die Zeitbasis mit dem Auftreten der Synchronisationsmerkmale synchronisieren.

Die Erwartungshaltung der Sicherheitssteuerung, d.h. die Kriterien, auf die die Sicherheitssteuerung das an ihrem Sicherheitseingang empfangene Testsignal überprüft, um festzustellen, ob ein nicht sicherer Zustand eines Schutzgeräts oder sonstiger Fehlerfall vorliegt, umfasst vorzugsweise die Synchronität des empfangenen Testsignals mit dem ausgesendeten Ausgangssignal, zumindest im Rahmen eines vorgegebenen zeitlichen Toleranzfensters. Durch ein solches Synchronitätskriterium wird gewährleistet, dass ein nicht sicherer Zustand eines Schutzgeräts oder ein sonstiger Fehlerfall besonders zuverlässig erkannt wird und z.B. zu einer Sicherheitsabschaltung führt und ein unerwünschtes Auftreten eines der Erwartungshaltung zufällig entsprechenden Signals an dem Sicherheitseingang in einem nicht sicheren Zustand eines Schutzgeräts oder in einem Fehlerzustand des Sicherheitssystems zuverlässig ausgeschlossen ist.

Das von dem Abschlusselement ausgegebene Testsignal kann sich prinzipiell in beliebiger Hinsicht von dem an dem Abschlusselement empfangenen Ausgangssignal der Sicherheitssteuerung unterscheiden, soweit die Erwartungshaltung der Sicherheitssteuerung im Falle eines nicht sicheren Zustands eines Schutzgeräts und in einem Fehlerfall wie insbesondere einem das Abschlusselement überbrückenden Querschluss des Hin- und Rückleitungspfads des Testsignalpfads zuverlässig verletzt wird. In einem besonders einfachen Fall kann das Abschlusselement ein gegenüber dem von dem Hinleitungspfad empfangenen Signal zeitlich verzögertes Signal an den Rückleitungspfad aussenden, wobei die Erwartungshaltung der Sicherheitssteuerung dann so angepasst sein kann, dass ihre Erwartungshaltung die Verzögerung voraussetzt. Das Testsignal kann sich auch in seiner Signalform von dem Ausgangssignal unterscheiden und beispielsweise ein oder mehrere, insbesondere periodisch wiederkehrende, Testmerkmale aufweisen, die sich von Synchronisationsmerkmalen des Ausgangssignals unterscheiden können, und/oder durch ein Fehlen von in dem Ausgangssignal enthaltenen wie nachstehend beschriebenen Datenmerkmalen. Vorzugsweise ist das Abschlusselement dazu eingerichtet, das Testsignal aktiv zu erzeugen, wobei aktive und eine eigene Signaldynamik aufweisende Bauteile wie beispielsweise ein Mikroprozessor und/oder eine eigene Zeitbasis des Abschlusselements zum Einsatz kommen können. Vorzugsweise ist das Abschlusselement ferner dazu eingerichtet, das Testsignal aktiv, d.h. signaltreibend, an den Rückleitungspfad auszusenden.

Gemäß einer vorteilhaften Ausführungsform ist das Sicherheitssystem dazu eingerichtet, neben der über den Testsignalpfad übermittelten Sicherheitsinformation zusätzlich Daten zwischen der Sicherheitssteuerung und den Sicherheitsteilnehmern und/oder dem Abschlusselement zu übertragen. Dabei kann die Sicherheitssteuerung dazu ausgebildet sein, Daten an die Sicherheitsteilnehmer und/oder das Abschlusselement zu senden und/oder die Sicherheitsteilnehmer und/oder das Abschlusselement können dazu ausgebildet sein, Daten an die Sicherheitssteuerung zu senden.

Die von den Sicherheitsteilnehmern an die Sicherheitssteuerung gesendeten Daten umfassen vorzugsweise Diagnose- und/oder Statusinformationen, die von den Sicherheitsteilnehmern bzw. deren Schutzgeräten erzeugt werden. Die Diagnose- und/oder Statusinformationen können z.B. eine von einem Standardausgang eines Schutzgeräts gelieferte Information umfassen wie z.B. ein von einem Standardausgang eines als Laserscanner ausgebildeten Schutzgeräts geliefertes "Weak"-Signal, welches anzeigt, ob eine Verschmutzung der Frontscheibe des Laserscanners vorliegt.

Die Informationen können auch den sicherheitsrelevanten Schaltzustand des jeweiligen Schutzgeräts anzeigen, der gleichzeitig für die Unterbrechung des Testsignalpfads ausschlaggebend ist, d.h. die Information, ob sich der Sicherheitsteilnehmer in dem sicheren oder nicht sicheren Zustand befindet. Auch Fehlerdaten wie z.B. eine Information über einen durch den Sicherheitsteilnehmer festgestellten Fehler seiner eigenen Funktion oder der Funktion einer anderen Komponente im Sicherheitssystem können enthalten sein. Diese zusätzlichen Informationen ermöglichen es der Sicherheitssteuerung, festzustellen, welches Schutzgerät gegebenenfalls eine Sicherheitsabschaltung verursacht hat bzw. ob eine Sicherheitsabschaltung aufgrund eines nicht sicheren Zustands eines Schutzgeräts oder eines Fehlers in dem Sicherheitssystem ausgelöst wurde.

Die von der Sicherheitssteuerung an die Sicherheitsteilnehmer gesendeten Daten können Steuerungsdaten zum Ansteuern von Funktionen der Sicherheitsteilnehmer umfassen wie z.B. das Aktivieren oder Deaktivieren einer Zuhaltefunktion eines mit einer Zuhaltefunktion für eine Sicherheitstür ausgestatteten Sicherheitsteilnehmers.

Zur Durchführung der vorstehend beschriebenen Datenkommunikation umfasst das Sicherheitssystem einen von den Sicherheitsteilnehmern und dem Abschlusselement gemeinsam genutzten Datenpfad, wobei die Sicherheitsteilnehmer und das Abschlusselement in einer Reihe hintereinander zum Empfangen und/oder Senden von Daten an den Datenpfad angeschlossen und mit diesem verbunden sind. Durch die Verwendung eines gemeinsamen Datenpfads können der erforderliche Verkabelungsaufwand und die Anzahl der an der Sicherheitssteuerung verwendeten Ein- und Ausgänge deutlich reduziert werden, da keine parallele Verkabelung der einzelnen Sicherheitsteilnehmer mit der Sicherheitssteuerung oder einer weiteren Logiksteuerung notwendig ist.

Der Datenpfad weist einen mit einem Ausgang der Sicherheitssteuerung verbundenen Datenhinleitungspfad für die Übertragung von der Sicherheitssteuerung erzeugter, ausgehender Daten und einen mit einem Eingang der Sicherheitssteuerung verbundenen Datenrückleitungspfad für die Übertragung von den Sicherheitsteilnehmern und/oder dem Abschlusselement erzeugter Daten an die Sicherheitssteuerung auf. Der Datenhinleitungspfad und der Datenrückleitungspfad bilden einen geschlossenen, an einen Ausgang und einen Eingang der Sicherheitssteuerung angeschlossenen ringförmigen Datenpfad. Sowohl der Datenhinleitungspfad als auch der Datenrückleitungspfad laufen durch dieselben Sicherheitsteilnehmer des Sicherheitssystems hindurch, so dass die Sicherheitsteilnehmer auch in Bezug auf den ringförmigen Datenpfad eine Linientopologie bilden, wobei das Abschlusselement vorzugsweise an dem Ende der Linie angeordnet ist.

Der Datenhinleitungspfad wird durch den Hinleitungspfad des Testsignalpfads gebildet, wobei das von der Sicherheitssteuerung an den Hinleitungspfad des Testsignalpfads ausgesendete Ausgangssignal vorzugsweise die an die Sicherheitsteilnehmer gesendeten Ausgangsdaten der Sicherheitssteuerung umfasst. Somit kann auf einen separaten Datenhinleitungspfad verzichtet werden. Hier kann die vorstehend beschriebene Veränderung des von dem Abschlusselements gesendeten Testsignals gegenüber dem empfangenen Ausgangssignal der Sicherheitssteuerung umfassen oder daraus bestehen, dass das Ausgangssignal die übertragenen Daten repräsentierende Datenmerkmale umfasst, welche das Testsignal nicht umfasst. Der Datenrückleitungspfad ist vorzugsweise als separater Signalpfad ausgebildet.

Bevorzugt findet auf dem Datenpfad eine serielle digitale Kommunikation statt, d.h. dass die einzelnen Datenmerkmale, welche jeweils z.B. ein Datenbit repräsentieren, nacheinander in voneinander getrennten aufeinander folgenden Zeitfenstern übertragen werden. Die Bit-Dauer, d.h. die Dauer eines ein Bit repräsentierenden Datenmerkmals, kann z.B. zwischen 1 und 10 ms, insbesondere etwa 4 ms, betragen. Die Datenmerkmale unterscheiden sich vorzugsweise eindeutig von den zur Synchronisation des Testsignals dienenden Synchronisationsmerkmalen des Ausgangssignals der Sicherheitssteuerung. Das auf dem Datenpfad übertragene Datensignal kann als z.B. binärwertiges Gleichstrom- oder bevorzugt Gleichspannungssignal ausgebildet sein, wobei der Wert der Spannung des binärwertigen Gleichspannungssignals z.B. zwischen einem niedrigen Wert bzw. niedrigen Pegel "Low" von z.B. 0 Volt oder Massepotential und einem hohen Wert bzw. Pegel "High" von z.B. 24 Volt wechseln kann.

Bevorzugt ist das Sicherheitssystem dazu eingerichtet, auf dem Datenpfad eine Buskommunikation durchzuführen, insbesondere eine Buskommunikation nach dem Master-Slave-Prinzip, an der vorzugsweise die Sicherheitssteuerung, die Sicherheitsteilnehmer und/oder das Abschlusselement als Busteilnehmer bzw. "Teilnehmer" teilnehmen, wobei bevorzugt die Sicherheitssteuerung den Busmaster bildet und dazu eingerichtet, die Kommunikation auf dem Datenpfad zu steuern und/oder ein Signal zu erzeugen, anhand dessen die Kommunikation synchronisiert wird.

Vorzugsweise findet zwischen den über den Datenpfad in einer Reihe miteinander verbundenen Kommunikationsteilnehmern eine sequentielle Kommunikation und ein sequentieller Datenfluss, insbesondere nach der Art einer Daisy-Chain-Kommunikation oder einer Nachrichtenkette, statt. Die Teilnehmer sind dabei bevorzugt jeweils dazu eingerichtet, an einem Eingang ein von einem vorhergehenden Teilnehmer in der Reihe ausgesendetes, eingehendes Datensignal bzw. Daten enthaltendes Signal zu empfangen, die empfangenen Daten auszulesen und ggf. zu verarbeiten und, bevorzugt gleichzeitig, ein gegenüber dem eingehenden Datensignal vorzugsweise verändertes ausgehendes Datensignal zu erzeugen und an einem von dem Eingang verschiedenen Ausgang für den nächsten Teilnehmer in der Reihe bereitzustellen und an diesen signaltreibend auszusenden. Dabei ist vorzugsweise jeder Teilnehmer mit genau einem vorhergehenden und genau einem nachfolgenden Teilnehmer in dieser Weise kommunikativ verbunden. Ein Teilnehmer umfasst dazu bevorzugt eine Sende- und Empfangsschaltung, welche beispielsweise einen Mikroprozessor umfassen kann. Die Datenübertragung kann ausgehend von der Sicherheitssteuerung in der vorstehend beschriebenen sequentiellen Weise über die übrigen Kommunikationsteilnehmer ringförmig bis zurück zur Sicherheitssteuerung erfolgen, so dass eine Ringkommunikation bzw. Ringbuskommunikation realisiert wird.

Bevorzugt sind die in den ausgehenden Datensignalen der Sicherheitsteilnehmer und ggf. des Abschlusselements enthaltenen Daten zumindest teilweise mit den in dem jeweiligen eingehenden Datensignal enthaltenen Daten identisch, d.h. dass die identischen Daten der Reihe nach von einem dieser Teilnehmer zum nächsten weitergereicht werden. Auf diese Weise können z.B. von der Sicherheitssteuerung erzeugte und ausgesendete und für einen beliebigen Teilnehmer in der Kette bestimmte Daten ausgehend von der Sicherheitssteuerung über die in der Kette vor dem jeweiligen Teilnehmer angeordneten Sicherheitsteilnehmer bis zu dem gewünschten Teilnehmer weitergereicht und übertragen werden.

Die in dem ausgehenden Datensignal eines Teilnehmers enthaltenen Daten, die aus dem eingehenden Datensignal des Teilnehmers stammen, sind in dem ausgehenden Datensignal vorzugsweise gegenüber den eingehenden Daten zeitlich verzögert und vorzugsweise um eine feste Dauer wie z.B. eine Bitdauer oder eine einer festgelegten Anzahl von Bits entsprechende Dauer zeitlich versetzt. Ein Teilnehmer kann einen Datenpuffer oder Datenspeicher zum Zwischenspeichern der weiter zu reichenden Daten umfassen. Durch eine solche Verzögerung kann unabhängig von dem Zeitbedarf, den ein Teilnehmer für die von dem Teilnehmer durchgeführte Signalerzeugung, Datenverarbeitung etc. benötigt, eine zeitlich abgestimmte und insbesondere synchrone Kommunikation aller Teilnehmer auf dem Datenpfad gewährleistet werden.

In ähnlicher Weise können von einem Sicherheitsteilnehmer oder dem Abschlusselement erzeugte Daten durch die in der Kette auf den jeweiligen Teilnehmer folgenden Teilnehmer an die Sicherheitssteuerung weitergereicht und übertragen werden. Vorzugsweise weist das ausgehende Datensignal eines jeweiligen Teilnehmers dazu von dem jeweiligen Teilnehmer erzeugte Daten auf, die über den Datenpfad zunächst an den nächsten Teilnehmer in der Kette und dadurch letztendlich in der vorstehend beschriebenen Weise an die Sicherheitssteuerung übertragen werden.

Im Rahmen der Erfindung wird der Hinleitungspfad des Testsignalpfads durch die Sicherheitsteilnehmer bis zu dem Abschlusselement durchgeschleift. Die vorstehend beschriebene Sende- und/oder Empfangstätigkeit der Sicherheitsteilnehmer findet folglich vorzugsweise auf dem Datenrückleitungspfad des Sicherheitssystems statt.

Den Sicherheitsteilnehmern und ggf. dem Abschlusselement ist vorzugsweise jeweils eine eindeutige Busadresse zugeordnet. Vorzugsweise sind anhand der Busadresse die Zeitfenster identifizierbar, während derer in dem eingehenden Datensignal des jeweiligen Teilnehmers die Daten bzw. Bits enthalten sind, die für den jeweiligen Teilnehmer adressiert sind und von diesem empfangen und beispielsweise zur Steuerung der Vorgänge in dem Teilnehmer, z.B. zum Ansteuern einer Funktion wie etwa einer Zuhaltefunktion des Schutzgeräts des Sicherheitsteilnehmers, verwendet werden sollen. Ebenso können anhand der Adressen Zeitfenster in dem ausgehenden Datensignal des jeweiligen Teilnehmers identifizierbar sein, in denen der Teilnehmer die von ihm erzeugten, insbesondere für die Sicherheitssteuerung bestimmten Ausgangsdaten, in das ausgehende Datensignal einfügen und senden kann, beispielsweise von dem Sicherheitsteilnehmer erzeugte Diagnose- und/oder Statusinformationen wie z.B. eine "Weak"-Informationen eines als Laserscanner ausgebildeten Schutzgeräts. Die Teilnehmer sind dazu eingerichtet, anhand ihrer Adresse die entsprechenden Zeitfenster zu identifizieren, um die an sie adressierten Daten in dem eingehenden Signal zu identifizieren bzw. um die von ihnen erzeugten und an die Sicherheitssteuerung zu sendenden Daten wie Diagnose- und/oder Statusinformationen in den passenden Zeitfenstern zu senden.

Um eine korrekte und übereinstimmende zeitliche Bestimmung der jeweiligen Zeitfenster durch die Teilnehmer zu ermöglichen, synchronisieren sich die Teilnehmer vorzugsweise miteinander, beispielsweise durch Synchronisation mit dem auf dem Datenpfad übertragenen Datensignal bzw. mit darin enthaltenen Synchronisationsmerkmalen. Dabei berücksichtigen die Teilnehmer anhand ihrer Adresse gegebenenfalls auch einen zusätzlichen zeitlichen Versatz, der durch eine wie vorstehend beschriebene zeitliche Verzögerung der Daten in dem ausgesendeten Datensignal eines Teilnehmers gegenüber den entsprechenden Daten in dem eingehenden Datensignal desselben Teilnehmers hervorgerufen wird. Bevorzugt sind die Teilnehmer entsprechend ihrer Reihenfolge in der Datenflussrichtung aufsteigend durchadressiert, so dass jeder Teilnehmer anhand seiner Adresse die Anzahl der in dem Datenpfad vorausgegangenen Teilnehmer und dadurch die erwartete kumulierte Verzögerung der Daten in dem eingehenden Datensignal ermitteln kann.

Gemäß einer vorteilhaften Ausführungsform liest ein Teilnehmer die an ihn adressierten Daten des eingehenden Datensignals aus und gibt zumindest einen Teil der übrigen empfangenen Daten über sein ausgehendes Datensignal weiter, nicht aber die an den jeweiligen Teilnehmer adressierten und von diesem ausgelesenen Daten. Die dadurch "frei werdenden" Zeitfenster in dem ausgehenden Signal können zur Übersendung der von dem Teilnehmer erzeugten Ausgangsdaten verwendet werden. Dadurch wird eine optimale Ausnutzung der Datenübertragungskapazität des Datenpfades erreicht.

Wie vorstehend beschrieben, synchronisieren sich die Teilnehmer der Datenkommunikation vorzugsweise miteinander, um eine synchronisierte Datenkommunikation und eine synchrone Weitergabe des Datenverkehrs zu gewährleisten. Vorzugsweise erfolgt diese Synchronisation auf Grundlage eines von der Sicherheitssteuerung ausgesendeten Signals. Die Synchronisation kann etwa auf Grundlage der in dem Ausgangssignal der Sicherheitsteuerung enthaltenen Synchronisationsmerkmale erfolgen, die auch zur synchronisierten Ausgabe des Testsignals durch das Abschlusselement verwendet werden. Die von den Sicherheitsteilnehmern und/oder dem Abschlusselement als Teilnehmer der Kommunikation wie vorstehend beschrieben erzeugten ausgehenden Datensignale können jeweils Synchronisationsmerkmale enthalten, die mit den Synchronisationsmerkmalen des eingehenden Datensignals des jeweiligen Teilnehmers synchronisiert sind und vorzugsweise im Wesentlichen gleichzeitig mit diesen ausgesendet werden. Diese Synchronisationsmerkmale können von dem jeweils nachfolgenden Teilnehmer zur Synchronisation verwendet werden. Wenn, wie vorstehend beschrieben, nicht nur der Datenrückleitungspfad, sondern auch der durch den Hinleitungspfad des Testsignalpfads gebildete Datenhinleitungspfad durch die Sicherheitsteilnehmer hindurch verläuft, können die Sicherheitsteilnehmer auch das auf dem Datenhinleitungspfad übertragene Ausgangssignal der Sicherheitssteuerung zur Synchronisation verwenden und ihre Datenkommunikation mit den darin enthaltenen Synchronisationsmerkmalen synchronisieren.

Vorzugsweise werden die Datensignale aus aufeinander folgenden Datenrahmen oder Datenframes (von englisch "data frame") aufgebaut, die jeweils aus mehreren aufeinander folgenden Zeitfenstern bestehen. Die vorstehend beschriebenen Synchronisationsmerkmale können dabei verwendet werden, um den Anfang eines jeweiligen Datenframes zu markieren, d.h. die Synchronisationsmerkmale können als Frame-Signal dienen. Vorzugsweise wird dabei eine in dem Synchronisationsmerkmal enthaltene steigende oder fallende Signalflanke als Startmarkierung des DatenFrames verwendet. Jedem Teilnehmer an der Datenkommunikation sind dann eindeutige Zeitfenster innerhalb eines Datenframes zugeordnet, innerhalb derer Daten für den jeweiligen Teilnehmer gesendet werden bzw. der Teilnehmer von ihm erzeugte Daten aussendet. Die Frame-Dauer ist vorzugsweise mit der Zykluszeit des Testsignals identisch und kann z.B. geringer als 100 ms sein und vorzugsweise etwa 40 ms betragen.

Das Sicherheitssystem kann dazu eingerichtet sein, die Adressen der Teilnehmer an der Kommunikation in einer Einlern- bzw. Konfigurationsphase des Sicherheitssystems automatisch festzulegen und den Teilnehmern mitzuteilen. Bevorzugt wird dabei ausgehend von der Sicherheitssteuerung ein Adressierungssignal über den Datenpfad übertragen, welches das Abschlusselement und die Teilnehmer entlang der Kette der Reihe nach durchläuft, wobei jeder Sicherheitsteilnehmer jeweils eine dem empfangenen Adressierungssignal entsprechende Adresse annimmt und abspeichert und ein der nächsthöheren Adresse entsprechendes Adressierungssignal an den nächsten Sicherheitsteilnehmer weitersendet, bis die Reihe durchlaufen ist und die Sicherheitsteilnehmer und das Abschlusselement ihrer Reihenfolge in der Kette entsprechend durchadressiert sind.

Bevorzugt ist das Sicherheitssystem so eingerichtet, dass die Datenübertragung einem festgelegten Protokoll folgt, welches z.B. die Übertragung von festgelegten Daten oder Nachrichten vorsieht, die z.B. von dem Abschlusselement und/oder den Sicherheitsteilnehmern an die Sicherheitssteuerung übertragen werden. Das Protokoll ist so gewählt, dass nur bei intaktem Datenpfad, d.h. bei Nichtvorliegen von Leitungsfehlern wie Querschlüssen, Kurzschlüssen oder Unterbrechungen des Datenpfads, ein dem Protokoll entsprechendes Datensignal zu der Sicherheitssteuerung gelangt. Ferner ist das Protokoll vorzugsweise so ausgelegt, dass sich die übertragenen Datensignale eindeutig von dem Testsignal des Abschlusselements unterscheiden. Die Sicherheitssteuerung verifiziert das empfangene Datensignal, und überprüft die Integrität der empfangenen Daten bzw. Datenframes auf Übertragungsfehler und Plausibilitätsfehler. Wenn das empfangene Signal dem Protokoll nicht entspricht bzw. eine dauerhaft ungültige Kommunikation festgestellt wird, kann eine Sicherheitsabschaltung durchgeführt werden. Die zu erwartende Fehleraufdeckungszeit des Sicherheitssystems kann durch diese zusätzliche Überprüfung des Datenprotokolls reduziert werden.

Gemäß einer bevorzugten Ausführungsform umfasst die Sicherheitssteuerung ein Sicherheitsmodul und ein mit dem Sicherheitsmodul verbundenes Anschlussmodul. Dabei können die Busleitung, die Sicherheitsteilnehmer und das Abschlusselement über das Anschlussmodul mit dem Sicherheitsmodul verbunden sein. Das Sicherheitsmodul und das Anschlussmodul sind vorzugsweise als voneinander unabhängige und insbesondere jeweils mit einem eigenen Gehäuse ausgestattete Geräte ausgebildet, die über einen oder mehrere von außen zugängliche Anschlüsse miteinander verbunden sind. Das Sicherheitsmodul kann auch mehrere jeweils mit einem eigenen Gehäuse ausgestattete Module umfassen, die zusammen das Sicherheitsmodul bilden, beispielsweise ein Hauptmodul und ein oder mehrere Ein-/Ausgangsmodule. Die Modularität der Sicherheitssteuerung ermöglicht es, das erfindungsgemäße Sicherheitssystem mit den hierin beschriebenen Vorteilen unter Verwendung von bekannten Sicherheitsmodulen zu realisieren, indem das mit dem Sicherheitsmodul verbundene Anschlussmodul die dafür notwendigen zusätzlichen Funktionen bereitstellt.

Während das Anschlussmodul und das ggf. aus einem Hauptmodul und ein oder mehreren Ein-/Ausgangsmodulen bestehende Sicherheitsmodul also Teil der Sicherheitssteuerung sind, sind die nachfolgend an anderer Stelle beschriebenen Anschaltungsmodule jeweils Teil eines jeweiligen Sicherheitsteilnehmers.

Das Sicherheitsmodul kann in an sich bekannter Weise zumindest einen Ausgang zum Aussenden eines ausgehenden dynamischen Testsignals und zumindest einen Sicherheitseingang zum Empfangen eines eingehenden dynamischen Testsignals umfassen. Das Sicherheitsmodul kann dazu ausgebildet sein, festzustellen und insbesondere eine Sicherheitsabschaltung durchzuführen, wenn das an dem Sicherheitseingang empfangene Testsignal nicht der Erwartungshaltung entspricht, wobei von dem Sicherheitsmodul beispielsweise ein gegenüber seinem ausgehenden Testsignal im Wesentlichen unverändertes eingehendes Testsignal erwartet wird.

Das Anschlussmodul ist vorzugsweise dazu ausgebildet, in Abhängigkeit von dem an einem ersten Ausgang des Sicherheitsmoduls ausgesendeten Testsignal das dynamische Ausgangssignal der Sicherheitssteuerung zu erzeugen und an den Hinleitungspfad des Testsignalpfads auszusenden. Das Anschlussmodul erzeugt das Ausgangssignal abhängig von dem ausgesendeten Testsignal des Sicherheitsmoduls vorzugsweise derart, dass das Ausgangsignal synchron zu diesem Testsignal ist und z.B. Synchronisationsmerkmale enthält, die zu dem von dem Sicherheitsmodul ausgesendeten Testsignal und insbesondere darin enthaltenen periodisch auftretenden Synchronisationsmerkmalen wie z.B. Testlücken synchron sind.

Bevorzugt empfängt das Anschlussmodul das über den Rückleitungspfad des Testsignalpfads übertragene Testsignal und wertet dieses aus, um festzustellen, ob das System fehlerfrei funktioniert und sich die Sicherheitsteilnehmer in ihrem sicheren Zustand befinden. Diese Auswertung kann zusätzlich zu einer nachfolgend beschriebenen, durch das Sicherheitsmodul durchgeführten Sicherheitsüberprüfung stattfinden.

Das Sicherheitsmodul kann einen dem ersten Ausgang des Sicherheitsmoduls zugeordneten ersten Sicherheitseingang aufweisen und dazu eingerichtet sein, zu überprüfen, ob das an dem ersten Sicherheitseingang empfangene Testsignal einer Erwartungshaltung entspricht, wobei insbesondere ein gegenüber dem an dem ersten Ausgang ausgesendeten Testsignal unverändertes Signal erwartet werden kann. Das System ist dabei so eingerichtet, dass an dem ersten Sicherheitseingang des Sicherheitsmoduls genau dann ein der Erwartungshaltung entsprechendes Testsignal empfangen wird, wenn das System ordnungsgemäß funktioniert und sich die Sicherheitsteilnehmer jeweils in ihrem sicheren Zustand befinden. Dazu kann das über den Rückleitungspfad des Testsignalpfads übertragene Testsignal an den ersten Sicherheitseingang des Sicherheitsmoduls geliefert werden, und zwar vorzugsweise über das Anschlussmodul. Das Anschlussmodul kann das Testsignal unverändert an das Sicherheitsmodul weiterleiten oder eine Veränderung des Testsignals vornehmen, insbesondere um im Normalbetrieb ein der Erwartungshaltung des Sicherheitsmoduls entsprechendes Testsignal zu übermitteln.

Gemäß einer Ausführungsform umfasst das Sicherheitsmodul einen zweiten Ausgang und einen dem zweiten Ausgang zugeordneten zweiten Sicherheitseingang. Das Sicherheitsmodul kann dazu eingerichtet sein, an dem zweiten Ausgang ein Testsignal auszusenden und zu überprüfen, ob ein an dem zweiten Sicherheitseingang empfangenes Signal einer Erwartungshaltung entspricht, wobei insbesondere ein gegenüber dem an dem zweiten Ausgang ausgesendeten Testsignal unverändertes Signal erwartet werden kann. Der zweite Ausgang und der zweite Sicherheitseingang sind vorzugsweise mit dem Anschlussmodul verbunden. Das Anschlussmodul ist dabei dazu eingerichtet, das von dem zweiten Ausgang ausgesendete Testsignal unverändert an den zweiten Sicherheitseingang weiterzuleiten, wenn das Anschlussmodul bei der vorstehend beschriebenen, durch das Anschlussmodul durchgeführten Überprüfung feststellt, dass das System fehlerfrei funktioniert und sich die Sicherheitsteilnehmer in ihrem sicheren Zustand befinden. Andernfalls wird die Weiterleitung durch das Anschlussmodul unterbunden. Das Anschlussmodul kann auf diese Weise das Ansprechen einer Sicherheitsfunktion des Sicherheitsmoduls wie z.B. einer Sicherheitsabschaltung verursachen.

Das Anschlussmodul kann zusätzlich eine wie vorstehend in Bezug auf die Sicherheitssteuerung beschriebene Datenkommunikation mit den Sicherheitsteilnehmern und/oder dem Abschlusselement realisieren und z.B. in der beschriebenen Weise Daten an die Teilnehmer der Kommunikation aussenden und/oder von diesen empfangen, bevorzugt durch Erzeugen eines Daten bzw. Datenmerkmale enthaltenden, über den Hinleitungspfad des Testsignalpfads ausgesendeten Ausgangssignals. Das Anschlussmodul bildet dabei bevorzugt den Busmaster einer auf dem Datenpfad durchgeführten Buskommunikation.

Gemäß einer vorteilhaften Ausführungsform ist das Anschlussmodul mit einem Logiksteuerungsmodul wie beispielsweise einer speicherprogrammierbaren Steuerung verbunden und dazu ausgebildet, die von den Sicherheitsteilnehmern empfangenen Daten an das Logiksteuerungsmodul zu senden und/oder von dem Logiksteuerungsmodul erzeugte Daten zu empfangen und über den Datenpfad an die Sicherheitsteilnehmer und/oder das Abschlusselement zu senden. Die vorstehend beschriebene Möglichkeit, Diagnose- und/oder Statusinformationen von den Sicherheitsteilnehmern und/oder dem Abschlusselement zu empfangen oder Daten an die Sicherheitsteilnehmer und/oder das Abschlusselement zu senden, wird dadurch selbst dann geschaffen, wenn das Sicherheitsmodul nicht zur Durchführung der entsprechenden Funktionen eingerichtet ist. Ein solches Logiksteuerungsmodul ist aber nicht zwingend erforderlich.

Das Anschlussmodul kann auch eine visuelle Anzeige umfassen, an der einem Benutzer relevante Informationen angezeigt werden können, die z.B. davon abhängen können, ob das System fehlerfrei funktioniert, und/oder davon, ob sich die Sicherheitsteilnehmer in ihrem sicheren Zustand befinden, und/oder von den über den Datenpfad übertragenen Daten.

Das Anschlussmodul ist bevorzugt dazu ausgebildet, das Abschlusselement so zu konfigurieren, dass das Abschlusselement während des fehlerfreien und ordnungsemäßen Betriebs des Sicherheitssystems ein Testsignal erzeugt und an den Rückleitungspfad des Testsignalpfads aussendet, welches dem von dem Sicherheitsmodul erwarteten Testsignal entspricht. Hierzu kann das Anschlussmodul entsprechende Konfigurationsinformationen an das Abschlusselement senden. Das Abschlusselement kann prinzipiell aber auch während einer Konfigurationsphase von einer anderen Quelle, beispielsweise einem Konfigurationscomputer, mit den entsprechenden Informationen versorgt und konfiguriert werden. Die Informationen können beispielsweise die Zykluszeit des Testsignals wie z.B. die Periodendauer einer periodisch wiederkehrenden Testlücke des erwarteten Testsignals umfassen.

Die Sicherheitsteilnehmer umfassen erfindungsgemäß jeweils wenigstens ein sicheres Schutzgerät, welches dazu ausgebildet ist, abhängig von einer für die Sicherheit z.B. einer Person relevanten äußeren Einwirkung einen sicheren Zustand oder nicht sicheren Zustand anzunehmen. Die Sicherheitsteilnehmer sind derart eingerichtet und in das Sicherheitssystem eingebunden, dass das Vorliegen eines nicht sicheren Zustands ihres Schutzgeräts eine Unterbrechung des Testsignalpfads bewirkt, wobei die Unterbrechung des Testsignalpfads ein Ausbleiben des Testsignals an dem Sicherheitseingang der Sicherheitssteuerung verursacht, was im Rahmen der Sicherheitsfunktion des Sicherheitssystems z.B. zu einer Sicherheitsabschaltung durch die Sicherheitssteuerung führt.

Ein Sicherheitsteilnehmer umfasst vorzugsweise wenigstens einen bei dem Eintreten des nicht sicheren Zustands des zugehörigen Schutzgeräts unterbrechbaren und im sicheren Zustand des zugehörigen Schutzgeräts geschlossenen, insbesondere elektrischen oder optischen, Signalübertragungspfad, welcher in dem Testsignalpfad angeordnet ist, so dass der Testsignalpfad durch Schließen und Unterbrechen des Signalübertragungspfads schließbar und unterbrechbar ist.

Dieser Signalübertragungspfad kann beispielsweise als elektrischer Schaltpfad ausgebildet sein und einen, z.B. elektrischen oder elektronischen, Schalter umfassen, welcher sich im sicheren Zustand des Schutzgeräts in seinem geschlossenen elektrisch leitenden Zustand, befindet und welcher sich in dem nicht sicheren Zustand des Schutzgeräts in seinem geöffneten elektrisch nicht leitenden Zustand befindet. Ein elektrischer Schalter umfasst vorzugsweise einen mechanischen elektrischen Schaltkontakt, welcher beispielsweise mechanisch betätigbar sein kann, beispielsweise ein mechanisch betätigbarer Schaltkontakt eines als Not-Aus-Taster ausgebildeten Schutzgeräts, oder welcher elektrisch betätigbar sein kann, wie z.B. der Schaltkontakt eines Sicherheitsrelais. Der Schaltkontakt kann auch magnetisch betätigbar sein, wie z.B. der Schaltkontakt eines Reed-Schalters, welcher beispielsweise bei einem als Türzuhaltung ausgebildeten Schutzgerät eingesetzt werden kann und welcher durch Schließen und Öffnen der Tür schließbar und unterbrechbar ist. Ein elektronischer Schalter umfasst vorzugsweise einen elektronisch ansteuerbaren Schalter wie z.B. einen Transistor, insbesondere einen Bipolartransistor oder einen Feldeffekttransistor. Ein solcher elektronischer Schalter kann mit einem Schaltsignalausgang des Schutzgeräts verbunden sein, welcher ein den sicheren oder nicht sicheren Zustand des Schutzgeräts repräsentierendes Schaltsignal aussendet oder bereitstellt, wobei der elektronische Schalter abhängig von dem Schaltsignal elektronisch angesteuert und entsprechend dem sicheren oder nicht sicheren Zustand des Schutzgeräts geschlossen oder geöffnet wird. Der durch das Schaltsignal repräsentierte Zustand, d.h. sicher oder nicht sicher, wird somit elektronisch umgewandelt und auf einen geschlossenen oder geöffneten Zustand des durch den Schalter gebildeten unterbrechbaren Signalübertragungspfads abgebildet. Das Schutzgerät kann in diesem Fall beispielsweise als optisches Schutzgerät wie z.B. als Lichtschranke, Lichtgitter oder Laserscanner ausgebildet sein. Der Schaltsignalausgang kann insbesondere als aktiver und/oder digitaler Schaltsignalausgang ausgebildet sein und ist vorzugsweise als halbleiterbasierter Schaltsignalausgang wie z.B. als OSSD-Schaltsignalausgang und/oder als pnphalbleiterbasierter Schaltsignalausgang ausgebildet.

Eine wie vorstehend beschriebene Abbildung des Schaltzustands über ein Schaltsignal kann auch dazu genutzt werden, einen geschlossenen Zustand eines Schalters des Schutzgeräts auf einen geöffneten Zustand des unterbrechbaren Signalübertragungspfads abzubilden und umgekehrt, so dass auch Schutzgeräte mit z.B. einem Schalter verwendet werden können, der im sicheren Zustand des Schutzgeräts geöffnet und im nicht sicheren Zustand geschlossen ist. Dabei wird der Schaltzustand des jeweiligen Schalters auf den jeweils anderen Schaltzustand des unterbrechbaren Signalübertragungspfads abgebildet. Der Schalter des Schutzgeräts bzw. dessen Hinleiter und Rückleiter stellen dann einen, insbesondere passiven, Schaltsignalausgang des Schutzgeräts dar, wobei ein an diesem Schaltsignalausgang vorhandenes Schaltsignal zur Ansteuerung des zugehörigen unterbrechbaren Signalübertragungspfads genutzt wird.

Bei dem unterbrechbaren Signalübertragungspfad kann es sich ferner um einen optischen Signalübertragungspfad handeln, beispielsweise einen von dem Sender und dem Empfänger einer Lichtschranke definierten Lichtpfad, welcher z.B. durch einen zu schützenden Raumbereich verläuft und durch ein in den Raumbereich eintretendes Objekt unterbrechbar ist. Es kann sich bei den Schutzgeräten prinzipiell um einkanalige oder mehrkanalige, d.h. zumindest zweikanalige, Schutzgeräte handeln, d.h. Schutzgeräte mit einem oder mehreren Schutzkanälen, wobei ein Schutzkanal vorzugsweise jeweils einen abhängig von dem sicheren oder nicht sicheren Zustand des Schutzgeräts geschlossenen oder unterbrochenen Signalübertragungspfad des Schutzgeräts oder einen den sicheren oder nicht sicheren Zustand des Schutzgeräts anzeigenden Schaltsignalausgang des Schutzgeräts umfasst. In letzterem Fall steuert der Schaltsignalausgang bevorzugt einen unterbrechbaren Signalübertragungspfad des Sicherheitsteilnehmers an, um diesen abhängig von dem sicheren oder nicht sicheren Zustand des Schutzgeräts zu öffnen und zu schließen, beispielsweise einen elektrischen oder elektronischen Schalter wie z.B. einen Feldeffekttransistor. Mehrere Schutzkanäle eines Schutzgeräts sind vorzugsweise dazu ausgebildet, bei fehlerfreier Funktion den sicheren und nicht sicheren Zustand des Schutzgeräts gemeinsam anzuzeigen, d.h. ein Wechsel des Schutzgeräts zwischen dem sicheren und dem nicht sicheren Zustand soll zu einem Auslösen bzw. Wechseln des Zustands der Schutzkanäle des Schutzgeräts führen, d.h. zu einem im Wesentlichen gleichzeitigen bzw. synchronen Unterbrechen oder Schließen beider unterbrechbarer Signalübertragungspfade bzw. zu einem im Wesentlichen gleichzeitigen bzw. synchronen Wechseln der von den Schaltsignalausgängen des Schutzgeräts repräsentierten Zustände des Schutzgeräts. Es wird somit eine redundante Schutzfunktion des Schutzgeräts gewährleistet, die die Sicherheit des Gesamtsystems erhöht.

Die unterbrechbaren Signalübertragungspfade desselben Sicherheitsteilnehmers bzw. Schutzgeräts sind vorzugsweise elektrisch miteinander in Serie geschaltet und in dem Testsignalpfad angeordnet, so dass ein Auslösen zumindest eines Schutzkanals den Testsignalpfad unterbricht. Ein zweikanaliges Schutzgerät kann beispielsweise zwei elektrische Schaltkontakte umfassen, die zum gemeinsamen Wechseln ihres Schaltzustandes mechanisch zwangsgeführt sein können. Es können aber insbesondere auch Schutzgeräte mit zwei nicht mechanisch zwangsgeführten elektrischen Schaltkontakten eingesetzt werden, beispielsweise elektrische Schalter mit zwei Reed-Schalter-Kontakten. Vorzugsweise werden Schutzgeräte mit zwei äquivalent schaltenden elektrischen Schaltpfaden eingesetzt, d.h. Schutzgeräte, die dazu ausgebildet sind, abhängig von dem sicheren oder nicht sicheren Zustand des Schutzgeräts entweder beide Schaltpfade, vorzugsweise gleichzeitig, zu schließen oder beide Schaltpfade zu öffnen. Das System kann prinzipiell auch zumindest einen Sicherheitsteilnehmer oder ein Schutzgerät mit zwei antivalent schaltenden Schaltpfaden umfassen, d.h. einen Sicherheitseilnehmer bzw. ein Schutzgerät, bei dem im sicheren Zustand ein Signalübertragungspfad geschlossen und ein anderer Signalübertragungspfad geöffnet ist, während im nicht sicheren Zustand der eine Signalübertragungspfad geöffnet und der andere Signalübertragungspfad geschlossen ist. Vorzugsweise wird dann der Schaltzustand zumindest eines Signalübertragungspfads durch eine wie vorstehend erläuterte Umwandlung bzw. Abbildung auf den entgegen gesetzten Schaltzustand eines weiteren unterbrechbaren Signalübertragungspfads abgebildet, so dass in dem Sicherheitsteilnehmer wiederum zumindest zwei äquivalent schaltende Signalübertragungspfade vorhanden sind, die bei Eintreten eines nicht sicheren Zustands vorzugsweise gemeinsam unterbrechbar sind.

Gemäß einer Ausführungsform des Sicherheitssystems, die im Zusammenhang mit der Figurenbeschreibung eingehender erläutert ist, umfasst ein Sicherheitsteilnehmer ein Schutzgerät und zumindest einen ersten und einen zweiten unterbrechbaren Signalübertragungspfad, die bei dem Eintreten eines nicht sicheren Zustands des Schutzgeräts gemeinsam unterbrechbar sind. Die beiden unterbrechbaren Signalübertragungspfade sind miteinander in Serie geschaltet und in dem Testsignalpfad angeordnet. Ferner weist der Sicherheitsteilnehmer einen in dem Testsignalpfad angeordneten Unterbrechungsschalter sowie eine Auswerteeinheit auf. Die Auswerteeinheit ist mit dem ersten Signalübertragungspfad und/oder - im Falle der Verwendung eines Schutzgeräts mit einem den ersten unterbrechbaren Signalübertragungspfad ansteuernden ersten Schaltsignalausgang - optional mit diesem Schaltsignalausgang des Schutzgeräts verbunden. Die Auswerteeinheit ist außerdem mit dem zweiten Signalübertragungspfad und/oder - im Falle der Verwendung eines Schutzgeräts mit einem den zweiten unterbrechbaren Signalübertragungspfad ansteuernden zweiten Schaltsignalausgang - optional mit diesem zweiten Schaltsignalausgang verbunden. Diese Verbindungen ermöglichen es der Auswerteeinheit, den Zustand oder einen Wechsel des Zustands des unterbrechbaren Signalübertragungspfads bzw. des durch den Schaltsignalausgang repräsentierten Zustand des Schutzgeräts zu erkennen. Die Auswerteeinheit ist dazu eingerichtet, bevorzugt kontinuierlich, zu überprüfen, ob der erste und zweite Signalübertragungspfad gemeinsam unterbrochen oder durch einen entsprechenden Schaltsignalausgang zur Unterbrechung angesteuert werden, und um den Unterbrechungsschalter zu öffnen, wenn der erste und zweite unterbrechbare Signalübertragungspfad nicht gemeinsam unterbrochen oder zur Unterbrechung angesteuert werden.

Dadurch kann an dem Sicherheitsteilnehmer lokal erkannt werden, wenn die gewünschte gemeinsame Schaltbarkeit der beiden unterbrechbaren Signalübertragungspfade nicht mehr gewährleistet ist, sondern eine Diskrepanz der beiden Schutzkanäle und somit eine Fehlfunktion des Sicherheitsteilnehmers vorliegt, die auch als Diskrepanzfehler bezeichnet wird. Eine solche Fehlfunktion kann beispielsweise durch ein Festschweißen eines der Schaltkontakte des Schutzgeräts bedingt sein, das ein fehlerfreies Öffnen des Schaltkontakts bei dem Eintreten eines nicht sicheren Zustands des Schutzgeräts verhindert, oder durch eine Fehlfunktion eines Schaltsignalausgangs des Schutzgeräts, beispielsweise wenn dieser dauerhaft einen sicheren Zustand des Schutzgeräts repräsentiert. Die Überprüfung durch die lokale Auswerteeinheit stellt eine wichtige zusätzliche Schutzfunktion dar. Zwar wird auch bei fehlerfreiem Auslösen nur eines Schutzkanals, d.h. nur eines der unterbrechbaren Signalübertragungspfade, infolge der Serienschaltung der zwei Signalübertragungspfade in dem Testsignalpfad eine Unterbrechung des Testsignalpfads und damit eine Sicherheitsabschaltung bewirkt, jedoch geht die durch das Vorsehen der zwei unterbrechbaren Signalübertragungspfade bezweckte Redundanz und die damit einhergehende erhöhte Sicherheit verloren. Die Fehlererkennung durch die Auswerteeinheit verhindert, dass ein Erstfehler in Form einer solchen Fehlfunktion eines Schutzkanals unerkannt bleibt und toleriert wird und dadurch die Möglichkeit einer Fehlerhäufung dergestalt geschaffen wird, dass eine Fehlfunktion des anderen Schutzkanals zu einem vollständigen Verlust der sichernden Funktion des Sicherheitsteilnehmers führt.

Die Auswerteeinheit kann auch dazu dienen, einen Leitungsfehler wie insbesondere einen Kurzschluss oder Querschluss zu erkennen, der in einer oder mehreren Verbindungsleitungen auftreten kann, welche die verschiedenen Schutzkanäle des Schutzgeräts mit einem nachstehend genauer erläuterten Anschaltungsmodul verbinden, in welchem vorzugsweise die Auswerteeinheit aufgenommen ist. Eine Verbindungsleitung kann z.B. eine Schaltsignalleitung umfassen, die einen wie vorstehend beschriebenen Schaltsignalausgang des Schutzgeräts mit dem Anschaltungsmodul verbindet, oder einen Hinleiter und einen Rückleiter, zwischen denen ein jeweiliger unterbrechbarer Signalübertragungspfad eines Schutzgeräts in Serie geschaltet ist.

Um den Schaltzustand der unterbrechbaren Signalübertragungspfade zu überprüfen, kann die Auswerteeinheit z.B. jeweils mit einem Hinleiter und mit einem Rückleiter verbunden sein, zwischen denen der jeweilige unterbrechbare Signalübertragungspfad in Serie geschaltet ist. Der Hinleiter und der Rückleiter können dabei Teil einer Anschaltungsleitung sein und dazu dienen, die unterbrechbaren Signalübertragungspfade, die z.B. Teil des Schutzgeräts sein können, mit einem nachstehend erläuterten Anschaltungsmodul zu verbinden, in dem die Auswerteeinheit angeordnet ist. In diesem Fall kann die Auswerteeinheit auch einen Leitungsfehler erkennen wie insbesondere einen Kurzschluss oder einen Querschluss zwischen den Hinleitern und Rückleitern. Beispielsweise kann ein Kurzschluss zwischen dem Hinleiter und dem Rückleiter eines unterbrechbaren Signalübertragungspfads oder auch ein Querschluss zwischen dem Hinleiter oder Rückleiter eines unterbrechbaren Signalübertragungspfads und dem Hinleiter oder Rückleiter des anderen Signalübertragungspfads aus der Sicht der Auswerteeinheit jeweils wie ein dauerhaft geschlossener erster bzw. zweiter Signalübertragungspfad erscheinen und deshalb z.B. ähnlich wie ein festgeschweißter Schaltkontakt zu einem Diskrepanzfehler führen, so dass die Auswerteeinheit auch einen solchen Fehler erkennen kann. Diese Erkennung von Leitungsfehlern durch die Auswerteeinheit kann die gefahrlose Führung von mehreren Verbindungsleitungen bzw. Hin- und Rückleitern eines insbesondere mehrkanaligen Schutzgeräts in einem gemeinsamen Anschaltungskabel ermöglichen.

Die Auswerteeinheit ist vorzugsweise in einem Gehäuse des Sicherheitsteilnehmers angeordnet, beispielsweise einem Gehäuse nach der Gehäuseschutzart IP 67 oder IP 20.

Gemäß einer vorteilhaften Ausführungsform ist die Auswerteeinheit dazu ausgebildet, zu überprüfen, ob der erste und zweite Signalübertragungspfad des Sicherheitsteilnehmers zumindest bis auf eine vorgegebene Diskrepanzzeit gleichzeitig unterbrochen oder zur Unterbrechung angesteuert werden. Ebenso kann die Auswerteeinheit dazu ausgebildet sein, zu überprüfen, ob die zwei Signalübertragungspfade bis auf eine vorgegebene Diskrepanzzeit gleichzeitig geschlossen oder zum Schließen angesteuert werden, beispielsweise bei einem Einschalten oder Wiedereinschalten des Sicherheitssystems. Eine solche Einschaltüberwachung kann getrennt von der Überwachung des gemeinsamen Unterbrechens der Signalübertragungspfade realisiert sein. Um die Gleichzeitigkeit des Unterbrechens oder Ansteuerns zum Unterbrechen bzw. die Gleichzeitigkeit des Schließens oder Ansteuerns zum Schließen zu überwachen, kann die Auswerteeinheit beispielsweise einen entsprechend eingerichteten Mikroprozessor und/oder eine eigene Zeitbasis wie z.B. einen Taktgeber des Mikroprozessors umfassen.

Vorzugsweise realisiert die Auswerteeinheit eine Wiederanlaufsperre für die sicherheitskritische Anlage nach einem von der Auswerteeinheit erkannten Diskrepanzfehler. Dabei kann die Auswerteeinheit dazu eingerichtet sein, den Unterbrechungsschalter, wenn die zwei Signalübertragungspfade nicht gemeinsam unterbrochen oder zur Unterbrechung angesteuert wurden, zu öffnen und erst wieder zu schließen, wenn eine Behebung des erkannten Fehlers bzw. eine entsprechende Fehlerquittierung erfolgt ist. Dabei schließt die Auswerteeinheit den Unterbrechungsschalter nicht bereits dann wieder, wenn das Schutzgerät seinen sicheren Zustand annimmt und die zwei Signalübertragungspfade wieder beide geschlossen sind oder zum Schließen angesteuert werden. Dadurch würde nämlich der Fehler, dass einer der beiden unterbrechbaren Signalübertragungspfade dauerhaft geschlossen ist oder zum Schließen angesteuert wird, nicht behoben. Stattdessen ist in diesem Fall zumindest in aller Regel ein Austausch des Sicherheitsteilnehmers bzw. insbesondere des Schutzgeräts erforderlich, bevor die Wiederinbetriebnahme des Sicherheitssystems und der Anlage durch Schließen des Unterbrechungsschalters ermöglicht werden darf.

Der Sicherheitsteilnehmer kann es einem Benutzer ermöglichen, nach dem Austauschen des defekten Schutzgeräts den Fehler an dem Sicherheitsteilnehmer, beispielsweise über ein an dem Sicherheitsteilnehmer vorhandenes Eingabeelement, lokal zu quittieren. Der Unterbrechungsschalter kann dann so lange geöffnet gehalten werden, bis eine solche lokale Fehlerquittierung durch den Benutzer erfolgt.

Die Auswerteeinheit kann auch dazu eingerichtet sein, zur Erkennung einer Behebung des Fehlers wie z.B. einem Austauschen des Schutzgeräts zu überprüfen, ob auf eine wie vorstehend beschriebene Fehlererkennung und Öffnung des Unterbrechungsschalters eine vollständige ordnungsgemäße Schaltsequenz folgt, und in diesem Fall den Fehler zu quittieren. Eine solche Schaltsequenz besteht darin, dass die zumindest zwei unterbrechbaren Signalübertragungspfade des Sicherheitsteilnehmers beide gemeinsam geöffnet bzw. zum Öffnen angesteuert werden und anschließend gemeinsam geschlossen bzw. zum Schließen angesteuert werden. Nach einer solchen Erkennung kann die Auswerteeinheit dann den Unterbrechungsschalter wieder schließen, so dass eine Wiederinbetriebnahme des Sicherheitssystems und der damit verbundenen Anlage ermöglicht wird.

Eine Überprüfung einer ordnungsgemäßen Schaltsequenz kann insbesondere umfassen, dass überprüft wird, ob das Öffnen bzw. Ansteuern zum Öffnen der Signalübertragungspfade zumindest im Rahmen einer vorgegebenen Diskrepanzzeit gleichzeitig erfolgt, und/oder dass überprüft wird, ob das Schließen bzw. Ansteuern zum Schließen der Signalübertragungspfade zumindest im Rahmen einer vorgegebenen Diskrepanzzeit gleichzeitig erfolgt.

Der Sicherheitsteilnehmer kann eine Benachrichtigungseinheit umfassen, die dazu ausgebildet ist, in Abhängigkeit von der durch die Auswerteeinheit durchgeführten Überprüfung, ob die zwei Signalübertragungspfade gemeinsam unterbrochen oder zur Unterbrechung angesteuert werden, eine für einen Benutzer wahrnehmbare Benachrichtigung wie z.B. eine visuelle Anzeige zu erzeugen, beispielsweise um dem Benutzer einen erkannten Fehler anzuzeigen. Alternativ oder zusätzlich kann der Sicherheitsteilnehmer dazu ausgebildet sein, um im Falle eines solchen Fehlers eine entsprechende, den Fehler anzeigende Nachricht an die Sicherheitssteuerung mittels einer Datenkommunikation zu übermitteln.

Zusätzlich zu dem ersten und zweiten unterbrechbaren Signalübertragungspfad kann der Sicherheitsteilnehmer noch einen oder mehrere weitere unterbrechbare Signalübertragungspfade aufweisen, die bei dem Eintreten eines nicht sicheren Zustands des Schutzgeräts gemeinsam mit dem ersten und zweiten unterbrechbaren Signalübertragungspfad unterbrechbar sein können. Die Auswerteeinheit überprüft dann vorzugsweise, ob alle gemeinsam unterbrechbaren Signalübertragungspfade des Sicherheitsteilnehmers gemeinsam unterbrochen oder zur Unterbrechung angesteuert werden, und öffnet andernfalls den Unterbrechungsschalter.

Ein wie hierin beschriebener Sicherheitsteilnehmer kann prinzipiell vollständig durch ein Schutzgerät gebildet sein, welches die hierin beschriebenen Funktionen bereitstellt. Vorzugsweise umfasst wenigstens einer der Sicherheitsteilnehmer jedoch zusätzlich zu dem Schutzgerät ein Anschaltungsmodul, über das der Sicherheitsteilnehmer in das Sicherheitssystem eingebunden ist. Das Anschaltungsmodul und das Schutzgerät können in separaten Gehäusen angeordnet und/oder über eine Anschaltungsleitung, die mindestens ein Anschaltungskabel umfassen kann, miteinander verbunden sein. Ein solches separates Anschaltungsmodul kann direkt mit der Busleitung verbunden sein, um den Sicherheitsteilnehmer in den Testsignalpfad einzubinden. Ein solches Anschaltungsmodul ermöglicht es, bereits vorhandene Schutzgeräte in einfacher Weise in das erfindungsgemäße Sicherheitssystem einzubinden und dabei die hierin beschriebenen Funktionen zu realisieren. Beispielsweise kann das Anschaltungsmodul eine insbesondere durch einen Mikroprozessor realisierte Logikeinheit umfassen, die mit dem Testsignalpfad und/oder dem Datenpfad verbunden ist und die hierin beschriebene Datenkommunikation des Sicherheitsteilnehmers mit der Sicherheitssteuerung steuert, wobei die Logikeinheit insbesondere als Sende- und Empfangseinheit verwendet werden kann. Der Mikroprozessor kann mit einem Taktgeber verbunden sein, der den Mikroprozessor taktet und dessen Takt im Rahmen der Datenkommunikation für die Synchronisation des Auslesens und Sendens von Daten durch den Sicherheitsteilnehmer verwendet wird. Das Anschaltungsmodul kann ferner eine, z.B. durch einen weiteren oder durch den vorgenannten Mikroprozessor realisierte, wie im Vorstehenden beschriebene Auswerteeinheit umfassen.

Wie vorstehend beschrieben, kann das Schutzgerät selbst einen beim Auftreten eines nicht sicheren Zustands des Schutzgeräts unterbrechbaren Signalübertragungspfad aufweisen, beispielsweise einen elektrischen Schaltkontakt oder eine unterbrechbare Lichtschranke. Wenn das Schutzgerät selbst einen unterbrechbaren Signalübertragungspfad aufweist, kann das Anschaltungsmodul den unterbrechbaren Signalübertragungspfad dadurch in das Sicherheitssystem einbinden, dass es diesen, bevorzugt über ein Anschaltungskabel zwischen dem Schutzgerät und dem Anschaltungsmodul, so mit dem Testsignalpfad verbindet, dass der unterbrechbare Signalübertragungspfad unmittelbarer Bestandteil des Testsignalpfads ist und das Testsignal den unterbrechbaren Signalübertragungspfad als unmittelbaren Übertragungsweg nutzt. Gemäß einer vorteilhaften Ausführungsform umfasst der unterbrechbare Signalübertragungspfad des Sicherheitsteilnehmers einen in dem Schutzgerät angeordneten Schalter, der über einen Hinleiter und einen Rückleiter in den Testsignalpfad eingebunden ist, wobei der Hinleiter und der Rückleiter in einer das Schutzgerät und das Anschaltungsmodul verbindenden Anschaltungsleitung angeordnet sind. Der Hinleiter und der Rückleiter eines Signalübertragungspfads können dabei jeweils in verschiedenen Anschaltungskabeln derselben Anschaltungsleitung geführt sein, um Kurzschlüsse zu vermeiden, insbesondere wenn es sich um ein einkanaliges Schutzgerät handelt. Der Hinleiter und der Rückleiter zumindest eines und vorzugsweise zumindest zweier unterbrechbarer Signalübertragungspfade eines bevorzugt zumindest zweikanaligen Schutzgeräts können demgegenüber auch in einem gemeinsamen Anschaltungskabel der Anschaltungsleitung angeordnet sein, um den Verkabelungsaufwand zu reduzieren.

Ebenso kann das Schutzgerät einen aktiven oder passiven, insbesondere digitalen, Schaltsignalausgang wie z.B. einen OSSD-Ausgang aufweisen, an dem ein den sicheren und nicht sicheren Zustand des Schutzgeräts repräsentierendes Schaltsignal ausgegeben wird bzw. vorhanden ist.

Wenn das Schutzgerät einen den sicheren oder nicht sicheren Zustand des Schutzgeräts repräsentierenden Schaltsignalausgang umfasst, ist der unterbrechbare Signalübertragungspfad des Sicherheitsteilnehmers vorzugsweise in dem Anschaltungsmodul angeordnet und beispielsweise durch einen elektronischen Schalter gebildet. Dieser ist dann bevorzugt über ein Anschaltungskabel mit dem Schaltsignalausgang des Schutzgeräts verbunden und wird abhängig von dem an dem Schaltsignalausgang vorhandenen Schaltsignal angesteuert, um dem sicheren bzw. nicht sicheren Zustand des Schutzgeräts entsprechend den geschlossenen bzw. geöffneten Zustand anzunehmen.

Gemäß einer vorteilhaften Ausführungsform, die im Zusammenhang mit der Figurenbeschreibung eingehend erläutert ist, umfasst das Anschaltungsmodul einen Testsignaleingang für ein eingehendes Testsignal und einen Testsignalausgang für ein ausgehendes Testsignal. Das mit dem Anschaltungsmodul über eine Anschaltungsleitung verbundene Schutzgerät umfasst zumindest einen ersten und einen zweiten Schalter, die jeweils über einen Hinleiter und einen Rückleiter der Anschaltungsleitung des Sicherheitsteilnehmers mit dem Anschaltungsmodul verbunden sind. Jeder Schalter bildet dabei mit dem zugeordneten Hinleiter und Rückleiter einen unterbrechbaren elektrischen Schaltpfad, wobei die elektrischen Schaltpfade in dem Testsignalpfad über eine nachstehend erläuterte Testschaltung in Serie geschaltet sind.

Das Anschaltungsmodul umfasst eine Testschaltung für die beiden Schaltpfade, welche eine gesteuerte Stromquelle, eine gesteuerte Stromsenke und ein Stromrichtungselement umfasst. Die Testschaltung für die beiden Schaltpfade dient dazu, sowohl im Falle eines geöffneten Zustands zumindest eines der beiden Schalter als auch bei einem Querschluss zwischen den beiden Schaltpfaden in der zwischen dem Anschaltungsmodul und dem Schutzgerät angeordneten Anschaltungsleitung das über den Testsignalpfad übertragene Signal zu unterbrechen bzw. an dem Testsignalausgang ein Testsignal auszugeben, das zuverlässig zu einer Verletzung der Erwartungshaltung der Sicherheitssteuerung führt.

Dazu ist der Testsignaleingang des Anschaltungsmoduls mit einem Steuereingang der gesteuerten Stromquelle oder der gesteuerten Stromsenke verbunden, so dass die gesteuerte Stromquelle oder Stromsenke durch das eingehende Testsignal oder ein davon abgeleitetes Signal ansteuerbar ist, wobei ein gesteuerter Ausgang derselben von Stromquelle und Stromsenke mit dem Hinleiter des ersten Schaltpfades verbunden ist, um einen Strom über den ersten Schaltpfad zu übertragen. Der Rückleiter des ersten Schaltpfades ist mit dem Steuereingang der jeweils anderen der gesteuerten Stromquelle und der gesteuerten Stromsenke verbunden, so dass die gesteuerte Stromquelle oder Stromsenke durch das über den ersten Schaltpfad übertragene Stromsignal oder ein davon abgeleitetes Signal ansteuerbar ist. Der gesteuerte Ausgang der anderen der gesteuerten Stromquelle und Stromsenke ist mit dem Hinleiter des zweiten Schaltpfads verbunden, um einen Strom über den zweiten Schaltpfad zu übertragen. Dabei ist der Rückleiter des zweiten Schaltpfades mit einem Stromrichtungselement verbunden, welches dazu ausgebildet ist, ein von dem über den zweiten Schaltpfad übertragenen Strom, insbesondere von dessen Richtung, abhängiges Signal zu liefern. Der Testsignalausgang des Anschaltungsmoduls ist mit dem Stromrichtungselement verbunden, um das von dem Stromrichtungselement erzeugte Signal oder ein davon abgeleitetes Signal als ausgehendes Testsignal des Sicherheitsteilnehmers auszugeben.

Das Schutzgerät kann zusätzlich zu dem ersten und zweiten Schalter auch noch einen oder mehrere weitere Schalter umfassen, die, beispielsweise über die Testschaltung, in den Testsignalpfad seriell zur Bildung eines elektrischen Schaltpfades eingeschaltet sein können, so dass sie den Testsignalpfad abhängig von ihrem Schaltzustand schließen oder unterbrechen.

Die durch die vorstehend beschriebene Testschaltung bezweckte Erkennung eines Querschlusses zwischen den beiden Schaltpfaden beruht darauf, dass im fehlerfreien Betrieb und im sicheren Zustand des Schutzgeräts der Strom durch die zwei Schaltpfade in unterschiedlichen Richtungen getrieben wird, da der Strom durch einen der elektrischen Schaltpfade von einer Stromquelle getrieben wird, die einen ausgehenden elektrischen Stromfluss erzeugt, und der Strom durch den anderen elektrischen Schaltpfad von einer Stromsenke getrieben wird, die einen eingehenden elektrischen Stromfluss erzeugt. Ein Querschluss zwischen beiden Schaltpfaden führt deshalb zu einer Richtungsumkehr des Stromflusses in dem mit dem Stromrichtungselement verbundenen elektrischen Schaltpfad oder zumindest zu einer Verringerung des Stromflusses in der erwarteten Richtung im Vergleich zu dem bei fehlerfreiem Betrieb, d.h. in Abwesenheit eines Querschlusses zwischen beiden Schaltpfaden, fließenden Strom. Das Stromrichtungselement kann das Vorliegen einer solchen Abweichung des Stromflusses von dem Stromfluss bei fehlerfreiem Betrieb erkennen und dafür sorgen, dass ein Testsignal an dem Testsignalausgang des Sicherheitsteilnehmers ausgeben bzw. angelegt wird, welches von dem bei fehlerfreien Betrieb übertragenen Testsignal abweicht und die Erwartungshaltung der Sicherheitssteuerung verletzt und somit zu einem Ansprechen der Sicherheitsfunktion führt.

Das Sicherheitssystem umfasst vorzugsweise wenigstens eine elektrische Stromversorgungseinheit, die eine elektrische Spannung zur Stromversorgung von einem oder mehreren Verbrauchern elektrischer Leistung in dem Sicherheitssystem bereitstellt, wobei die Sicherheitssteuerung, die Sicherheitsteilnehmer und/oder das Abschlusselement die Verbraucher des Sicherheitssystems darstellen. Das Sicherheitssystem umfasst dazu eine erste und eine zweite elektrische Stromversorgungsleitung, zwischen denen die elektrische Spannung bereitgestellt ist und über die die ein oder mehreren Verbraucher mit der Stromversorgungseinheit elektrisch leitfähig verbunden sind. Die erste und zweite elektrische Stromversorgungsleitung sind jeweils bevorzugt in der Busleitung bzw. in den Buskabeln der Busleitung angeordnet. Dadurch ergibt sich ein einfaches Energieversorgungskonzept unter Verwendung einer gemeinsamen Busleitung mit entsprechend geringem Verkabelungsaufwand.

Gemäß einer vorteilhaften Ausführungsform umfasst das Sicherheitssystem mehrere separate elektrische Stromversorgungseinheiten, die jeweils eine elektrische Spannung zur Stromversorgung wenigstens eines Verbrauchers bereitstellen. Das Sicherheitssystem ist dabei in Segmente mit jeweils einem oder mehreren Verbrauchern unterteilt, denen jeweils eine Stromversorgungseinheit zugeordnet ist und die jeweils eine erste Stromversorgungsleitung und eine zweite Stromversorgungsleitung aufweisen, über die die ein oder mehreren Verbraucher des jeweiligen Segments mit der zugeordneten Stromversorgungseinheit elektrisch leitfähig verbunden sind und zwischen denen die elektrische Spannung der zugeordneten Stromversorgungseinheit bereitgestellt ist. Die erste Stromversorgungsleitung und die zweite Stromversorgungsleitung eines Segments sind dabei jeweils nicht unmittelbar mit der ersten Stromversorgungsleitung und der zweiten Stromversorgungsleitung eines anderen Segments elektrisch leitfähig verbunden und sind vorzugsweise von der ersten Stromversorgungsleitung und der zweiten Stromversorgungsleitung des anderen Segments galvanisch getrennt.

Durch diese Segmentierung des Sicherheitssystems in Bezug auf die Energieversorgung wird die elektrische Absicherung des Bussystems gegen gefährliche Überströme erheblich erleichtert und die elektrische Sicherheit des Bussystems erhöht. Aufgrund der nicht vorhandenen direkten elektrisch leitfähigen Verbindung zwischen den ersten und zweiten Stromversorgungsleitungen verschiedener Segmente bzw. der galvanischen Trennung zwischen diesen Stromversorgungsleitungen zwischen den Segmenten wird der Stromfluss in jedem Segment des Sicherheitssystems im Wesentlichen nur durch die in dem jeweiligen Segment angeordneten Verbraucher beeinflusst. Dadurch werden die in den ersten und zweiten Stromversorgungsleitungen zu erwartenden maximalen Stromstärken sowie die zu erwartenden Schwankungen der Stromstärke in diesen Stromversorgungsleitungen verringert. Eine elektrische Absicherung, welche die erforderliche Sicherheit gewährleistet, ist mit einfacheren Mitteln realisierbar, da diese nur für geringere maximale Stromflüsse und geringere Schwankungen des Stromflusses ausgelegt sein muss. Bei der Konzipierung bzw. Implementierung des Sicherheitssystems können die verschiedenen Segmente im Hinblick auf die Energieversorgung und die elektrische Absicherung unabhängig voneinander betrachtet werden, wobei bei der Planung der Energieversorgung und elektrischen Absicherung eines Segments nur die Verbraucher des jeweiligen Segments zu berücksichtigen sind. Die Projektierung bzw. Planung eines Sicherheitssystems mit einem die Anforderungen erfüllenden Energieversorgungskonzept und einer eine hohe Sicherheit aufweisenden elektrischen Absicherung gegen Überströme wird dadurch erheblich vereinfacht. Ferner werden galvanische Wechselwirkungen zwischen den Stromversorgungsleitungen getrennter Segmente eliminiert und der Einfluss von elektromagnetischen Störeinflüssen auf den Betrieb des Sicherheitssystems verringert und dadurch die elektromagnetische Verträglichkeit (EMV) des Sicherheitssystems erheblich gesteigert.

Darunter, dass die Stromversorgungsleitungen verschiedener Segmente nicht direkt miteinander elektrisch leitfähig verbunden sind, ist zu verstehen, dass die Stromversorgungsleitungen der unterschiedlichen Segmente voneinander getrennt, d.h. nicht als Teil einer einzigen Stromversorgungsleitung ausgebildet sind, zumindest jedoch nicht in niederohmigem elektrisch leitenden Kontakt miteinander stehen. Unter galvanischer Trennung ist zu verstehen, dass keinerlei galvanische, d.h. elektrisch leitfähige Verbindung bzw. Kopplung, zwischen den Stromversorgungsleitungen vorhanden ist. Eine möglicherweise vorhandene galvanische Kopplung der Stromversorgungsleitungen miteinander über das übergeordnete Versorgungsnetz, mit dem die Stromversorgungseinheiten eingangsseitig zu ihrer eigenen Leistungs- und Stromversorgung, möglicherweise galvanisch, verbunden sind, wird dabei nicht notwendigerweise berücksichtigt, d.h. die galvanische Trennung bezieht sich auf das an das Versorgungsnetz angeschlossene Bussystem. Es kann aber auch zumindest eine Stromversorgungseinheit eingesetzt werden, die eine galvanische Trennung der Stromversorgungsleitungen von dem Stromversorgungsnetz gewährleistet, wie beispielsweise ein Netzteil mit einem Transformator, so dass auch eine derartige galvanische Kopplung vermieden und eine absolute galvanische Trennung der Stromversorgungsleitungen gewährleistet werden kann.

Eines oder mehrere Segmente des Systems können prinzipiell durch jeweils genau einen Verbraucher gebildet sein. Vorzugsweise umfasst das System allerdings ein oder mehrere Segmente, die jeweils zumindest zwei Verbraucher umfassen. Durch die Versorgung mehrerer Verbraucher eines Segments mit einer gemeinsamen Stromversorgungseinheit wird ein verringerter für die Stromversorgung erforderlicher Material- und Verkabelungsaufwand gewährleistet. Gleichzeitig wird durch die Trennung der Stromversorgungsleitungen eine Verschlechterung der elektrischen Sicherheit oder der Störungsfreiheit bei dem Betrieb des Bussystems verhindert, so dass insgesamt ein sicheres und zuverlässiges und zugleich einfach zu realisierendes Bussystem geschaffen wird.

Die Stromversorgungseinheit eines Segments und ein Verbraucher des zugehörigen Segments können in einem gemeinsamen Gerät integriert sein. Die Stromversorgungseinheit und die Verbraucher des Segments können aber ebenso als getrennte Geräte realisiert sein, die über die jeweiligen Stromversorgungsleitungen miteinander verbunden sind.

Bevorzugt weist auch zumindest einer der Bussignalpfade, d.h. der Hinleitungspfad, der Rückleitungspfad und/oder der Datenrückleitungspfad, jeweils mehrere Abschnitte auf, die durch eine Kopplungseinheit signalübertragend und nicht-galvanisch, insbesondere optisch, induktiv oder kapazitiv, miteinander gekoppelt sind. Die über die Kopplungseinheit nicht-galvanisch gekoppelten Abschnitte des Bussignalpfads sind dabei vorzugsweise auch sonst galvanisch voneinander getrennt. Dadurch wird die elektromagnetische Verträglichkeit noch weiter gesteigert.

Zwei Abschnitte des Hinleitungspfads, des Rückleitungspfads und/oder des Datenrückleitungspfads können dabei unterschiedlichen Segmenten zugeordnet sein und mit einem oder mehreren und bevorzugt allen Verbrauchern des zugeordneten Segments elektrisch leitfähig verbunden sein.

Bevorzugt sind wenigstens zwei und vorzugsweise alle Verbraucher eines Segments ausgehend von der zugeordneten Stromversorgungseinheit über die erste und/oder zweite Stromversorgungsleitung des Segments in einer Reihe hintereinander an die dem Segment zugeordnete Stromversorgungseinheit angeschlossen. Bevorzugt ist ferner, wenn die erste und/oder zweite Stromversorgungsleitung eines Segments zumindest abschnittsweise in der Busleitung, vorzugsweise in einem Buskabel, angeordnet ist.

Ein wie vorstehend beschriebenes segmentiertes Sicherheitssystem kann wenigstens ein Einspeisemodul umfassen, das einem Segment des Sicherheitssystems zugeordnet ist und über das die zugeordnete Stromversorgungseinheit zur Bereitstellung der elektrischen Spannung mit dem Segment und insbesondere mit einem oder mehreren mit dem Einspeisemodul verbundenen Verbrauchern des Segments des Sicherheitssystems verbunden ist. Das Einspeisemodul stellt dabei vorzugsweise selbst einen Verbraucher des Segments dar, der insbesondere an die Busleitung des Bussystems angeschlossen ist. Das Einspeisemodul kann prinzipiell den einzigen Verbraucher eines genau einen Verbraucher aufweisenden Segments darstellen. Vorzugsweise umfasst das Segment aber zusätzlich zu dem Einspeisemodul ein oder mehrere weitere Verbraucher, die wie vorstehend beschrieben über das Einspeisemodul mit der Stromversorgungseinheit verbunden sind.

Das Einspeisemodul kann sowohl mit der ersten und der zweiten Stromversorgungsleitung des dem Einspeisemodul zugeordneten Segments des Sicherheitssystems als auch mit der ersten und/oder der zweiten Stromversorgungsleitung eines benachbarten Segments des Sicherheitssystems verbunden sein und die Stromversorgungsleitungen der verschiedenen Segmente können in dem Einspeisemodul galvanisch voneinander getrennt sein. Dadurch wird die Verkabelung der Komponenten des Sicherheitssystems weiter vereinfacht.

Bevorzugt weist das Einspeisemodul eine wie vorstehend beschriebene Kopplungseinheit zur signalübertragenden und nicht-galvanischen Kopplung zweier bevorzugt galvanisch voneinander getrennter Abschnitte wenigstens eines Bussignalpfads auf. Dabei ist vorzugsweise ein Abschnitt des Bussignalpfads mit den ein oder mehreren Verbrauchern des dem Einspeisemodul zugeordneten Segments elektrisch leitfähig verbunden und der andere Abschnitt ist vorzugsweise mit den ein oder mehreren Verbrauchern eines dazu benachbarten Segments elektrisch leitfähig verbunden.

Der Sicherheitseingang der Sicherheitssteuerung umfasst bevorzugt einen sicheren Eingang. Der Sicherheitseingang kann dabei durch einen sicheren Eingang einer Sicherheitssteuerung selbst gebildet sein oder, im Falle einer modularen Zusammensetzung der Sicherheitssteuerung aus einem Sicherheitsmodul und einem damit verbundenen Anschlussmodul, durch einen mit einem sicheren Eingang des Sicherheitsmoduls verbundenen Eingang des Anschlussmoduls. Der sichere Eingang zeichnet sich durch eine fehlersichere Auswertung des eingehenden Signals in der Sicherheitssteuerung aus, wozu zum Beispiel eine zweikanalige Auswertung erfolgen kann, die z.B. durch zwei parallel arbeitende redundante und einander kontrollierende Mikroprozessoren durchgeführt wird.

Das Sicherheitssystem und dessen hierein beschriebene Sicherheitsfunktion erfüllen vorzugsweise den Sicherheitslevel SIL 3 gemäß der Norm IEC 61508 und/oder den Sicherheitslevel Performance Level e ("PL e") gemäß der Norm EN ISO 13849-1.

Ein bei einem erfindungsgemäßen Sicherheitssystem einsetzbares Abschlusselement weist einen Eingang zur Verbindung mit dem Hinleitungspfad des Testsignalpfads und einen Ausgang zur Verbindung mit dem Rückleitungspfad des Testsignalpfads des Sicherheitssystems auf und ist dazu ausgebildet, das an seinem Eingang anliegende Signal zu empfangen und in Abhängigkeit von dem empfangenen Signal ein gegenüber dem empfangenen Signal verändertes Testsignal an den Rückleitungspfad des Testsignalpfads auszugeben. Das Abschlusselement ist dabei dazu eingerichtet, ein zu dem an seinem Eingang anliegenden Signal synchronisiertes Testsignal auszusenden. Es kann dazu zum Beispiel eine eigene Zeitbasis des Abschlusselements wie z.B. einen Taktgeber eines Mikroprozessors des Abschlusselements verwenden.

Ein bei einem erfindungsgemäßen Sicherheitssystem einsetzbares Abschlusselement ist bevorzugt so eingerichtet, dass die Ausgabe des Testsignals nur von dem an dem Eingang des Abschlusselements empfangenen Signal abhängt, d.h. das Abschlusselement selbst umfasst z.B. keinen durch eine sonstige äußere Einwirkung unterbrechbaren Signalübertragungspfad, mit dem der Testsignalpfad bzw. das Testsignal unterbrechbar sind.

Nachfolgend wird die Erfindung beispielhaft anhand einer vorteilhaften Ausführungsform unter Bezugnahme auf die beigefügten Figuren beschrieben. Es zeigen:
- Fig. 1: ein Sicherheitssystem gemäß einer Ausführungsform der Erfindung;
- Fig. 2a,b: ein beispielhaftes Ausgangssignal (Fig. 2a) und Testsignal (Fig. 2b), die bei dem Betrieb des Sicherheitssystems von Fig. 1 übertragen werden;
- Fig. 3: ein beispielhaftes Ausgangssignal und Datensignale, die bei dem Betrieb des Sicherheitssystems von Fig. 1 übertragen werden;
- Fig. 4: eine weitere schematische Darstellung des Sicherheitssystems von Fig. 1;
- Fig. 5: eine schematische Darstellung eines Sicherheitsteilnehmers mit einer Auswerteeinheit;
- Fig. 6: eine schematische Darstellung eines Sicherheitsteilnehmers mit einer Auswerteeinheit und einer Testschaltung;
- Fig. 7: eine schematische Darstellung eines weiteren Sicherheitsteilnehmers mit einer Auswerteeinheit und einer Testschaltung;
- Fig. 8: eine schematische Darstellung eines Sicherheitsteilnehmers mit einer Testschaltung;
- Fig. 9: beispielhafte durch die Testschaltung des Sicherheitsteilnehmers von Fig. 8 übertragene Strom- und Spannungssignale;
- Fig. 10: eine schematische Darstellung eines weiteren erfindungsgemäßen Sicherheitssystems; und
- Fig. 11: eine schematische Darstellung eines noch weiteren erfindungsgemäßen Sicherheitssystems mit einer verbesserten Stromversorgung.

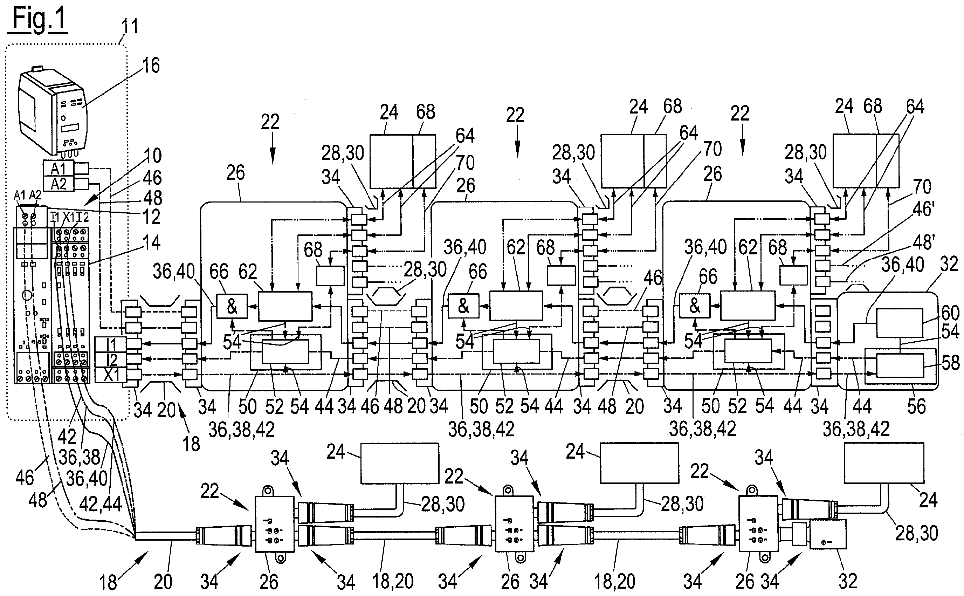

Fig. 1 zeigt ein Sicherheitssystem gemäß einer Ausführungsform der Erfindung, wobei der obere Teil der kombinierten Darstellung in Fig. 1 eine schematische Ansicht und der untere Teil der kombinierten Darstellung in Fig. 1 eine im Wesentlichen fotographische Ansicht desselben Sicherheitssystems ist. Sich in den beiden Darstellungen entsprechende Elemente tragen dieselben Bezugszeichen.

Das Sicherheitssystem umfasst eine Sicherheitssteuerung 10, die in einem Schaltschrank 11 angeordnet ist und ein Hauptmodul 12 und ein Ein-/Ausgangsmodul 14 umfasst, die über eine nicht dargestellte Busschiene miteinander verbunden sind, wobei das Ein-/Ausgangsmodul 14 einen Ausgang X1, einen Sicherheitseingang I1 sowie einen nicht sicheren Standardeingang I2 umfasst. In dem Schaltschrank 11 ist ferner eine als Netzteil, beispielsweise als Schaltnetzteil, ausgebildete Stromversorgungseinheit 16 zur Stromversorgung des Sicherheitssystems angeordnet, die ein konstantes Gleichspannungspotential mit einem hohen Pegel von beispielsweise 24 Volt gegenüber Masse und ein Massepotential bzw. ein konstantes Gleichspannungspotential mit einem niedrigen Pegel von z.B. 0 Volt gegenüber Masse bereitstellt, wobei das Potential mit dem hohen Pegel an einen Anschluss A1 des Hauptmoduls 12 und das Potential mit dem niedrigen Pegel an einen Anschluss A2 des Hauptmoduls 12 geliefert wird.

Das Sicherheitssystem umfasst eine Busleitung 18 mit mehreren Buskabeln 20, wobei eines der Buskabel 20 an die Sicherheitssteuerung 10 angeschlossen ist. Das Sicherheitssystem umfasst ferner mehrere Sicherheitsteilnehmer 22, die über die Buskabel 20 in einer Linie hintereinander geschaltet und über die Busleitung 18 mit der Sicherheitssteuerung 10 verbunden sind. Die Sicherheitsteilnehmer 22 umfassen jeweils ein Schutzgerät 24 und ein Anschaltungsmodul 26, welches über eine durch ein Anschaltungskabel 28 gebildete Anschaltungsleitung 30 mit dem jeweiligen Schutzgerät 24 verbunden ist und welches direkt mit den jeweils benachbarten Buskabeln 20 verbunden ist. Am Ende der durch die Sicherheitsteilnehmer 22 gebildeten Linie befindet sich ein Abschlusselement 32, welches hier direkt, d.h. ohne ein zwischengeschaltetes Kabel, mit dem letzten Sicherheitsteilnehmer 22 der Linie verbunden ist. Prinzipiell könnte das Abschlusselement 32 aber auch durch ein weiteres Buskabel an die Busleitung 18 angeschlossen sein.

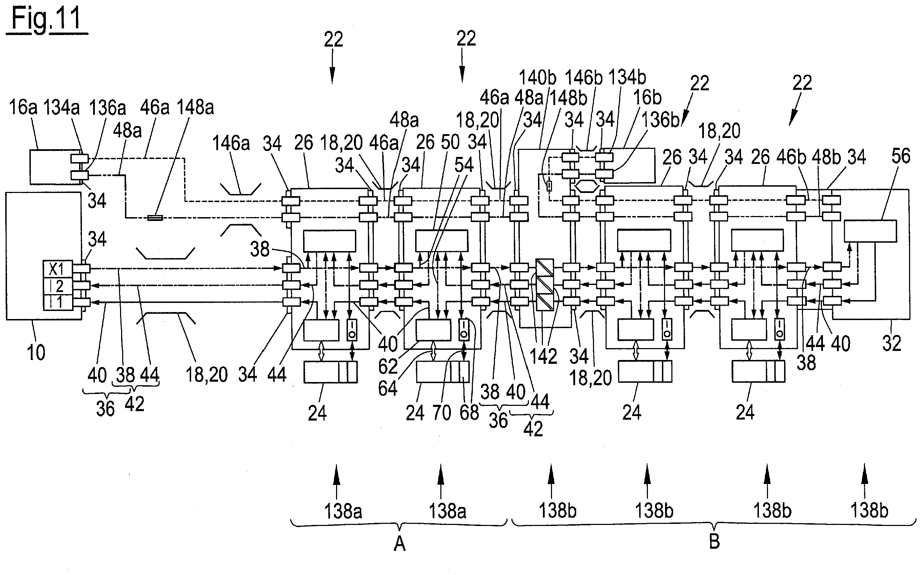

Ein Kabel ist in den Figuren prinzipiell jeweils durch zwei aufeinander zu gewandte Klammern dargestellt, die den Mantel des Kabels repräsentieren, wobei in der Regel eine der Klammern mit dem entsprechenden Bezugszeichen versehen ist, d.h. dem Bezugszeichen 20 für ein Buskabel, dem Bezugszeichen 28 für ein Anschaltungskabel oder einem der Bezugszeichen 146a, 146b für ein in Fig. 11 gezeigtes Stromkabel. Die zwischen den Klammern eines Kabels jeweils eingezeichneten Linien repräsentieren jeweils eine in dem jeweiligen Kabel angeordnete elektrische Leitung, welche aus einer oder mehreren in dem Kabelmantel angeordneten elektrischen Leitungsadern bestehen kann.

Das Sicherheitssystem ist als Feldbussystem ausgebildet, d.h. dass Komponenten des Sicherheitssystems, insbesondere die Sicherheitsteilnehmer 22 und das Abschlusselement 32, örtlich verteilt angeordnet sind. Der Abstand zwischen zwei verschiedenen Sicherheitsteilnehmern 22 kann dabei erheblich sein und z.B. einen oder mehrere Meter betragen. Die Verbindung der Sicherheitssteuerung 10, der Schutzgeräte 24 und der Anschaltungsmodule 26 mit den Buskabeln 20, den Anschaltungskabeln 28 und dem Abschlusselement 32 sind im vorliegenden Ausführungsbeispiel jeweils durch eine beispielsweise aus einem Steckverbinder, z.B. vom Typ M12, des einen Elements und einer entsprechenden Steckerbuchse des anderen Elements bestehende elektrische Steckverbindung 34 gebildet. Die Schutzgeräte 24, Anschaltungsmodule 26 und das Abschlusselement 32 weisen jeweils ein eigenes Gehäuse auf, welches vorzugsweise nach der Gehäuseschutzart IP 67 oder IP 20 oder einer sonstigen gegen Schmutz oder Feuchtigkeit schützenden Gehäuseschutzart ausgebildet ist. Die Buskabel 20 verlaufen außerhalb der Gehäuse und sind als gegen Schmutz oder Feuchtigkeit schützende, für die Verlegung außerhalb von Gehäusen geeignete und zulässige Standard-Sensor/Aktor-Kabel, beispielsweise vom Typ M12, mit einem Leiter- bzw. Aderquerschnitt von vorzugsweise mindestens 0,34 mm² ausgebildet. Den Abständen zwischen den Sicherheitsteilnehmern 22 entsprechend kann ein Buskabel 20 eine Länge von z.B. einem oder mehreren Metern aufweisen.

Die Busleitung 18 und die an die Busleitung 18 angeschlossenen Sicherheitsteilnehmer 22 bilden einen Testsignalpfad 36 mit einem mit dem Ausgang X1 der Sicherheitssteuerung 10 verbundenen Hinleitungspfad 38 und einem mit dem Sicherheitseingang I1 der Sicherheitssteuerung 10 verbundenen Rückleitungspfad 40, wobei der Hinleitungspfad 38 und der Rückleitungspfad 40 über das Abschlusselement 32 miteinander verbunden sind und sowohl der Hinleitungspfad 38 als auch der Rückleitungspfad 40 durch die Sicherheitsteilnehmer 22 hindurch verlaufen. Ferner bilden die Sicherheitsteilnehmer 22, die Busleitung 18 und das Abschlusselement 32 einen Datenpfad 42 aus, der einen durch den Hinleitungspfad 38 des Testsignalpfads 36 gebildeten, d.h. mit diesem identischen, Datenhinleitungspfad und einen separaten, an den Eingang I2 der Sicherheitssteuerung 10 angeschlossenen Datenrückleitungspfad 44 umfasst, die zusammen eine Ringbusleitung bilden. Ferner sind eine über den Anschluss A1 des Hauptmoduls 12 geführte erste Stromversorgungsleitung 46 und eine über den Anschluss A2 des Hauptmoduls 12 geführte zweite Stromversorgungsleitung 48 vorgesehen, über die die Sicherheitssteuerung 10, die Sicherheitsteilnehmer 22 und das Abschlusselement 32 mit Strom versorgt werden. Wie in Fig. 1 gezeigt, können die Anschaltungskabel 28 jeweils eine erste und zweite Stromversorgungsader 46', 48' (der Übersichtlichkeit halber wurden diese Elemente nur für den rechten Sicherheitsteilnehmer 22 der Fig. 1 mit Bezugszeichen versehen) umfassen, über die das jeweilige Schutzgerät 24 an die erste und zweite Stromversorgungsleitung 46, 48 anschließbar und dadurch mit Strom versorgbar ist.

Wie in Fig. 1 gezeigt, sind der Testsignalpfad 36, der Datenpfad 42, die erste Stromversorgungsleitung 46 und die zweite Stromversorgungsleitung 48 in der gemeinsamen Busleitung 18 angeordnet und werden alle in denselben gemeinsamen Buskabeln 20 der Busleitung 18 geführt. Die Buskabei 20 weisen dabei jeweils eine elektrisch leitfähige Ader für den Hinleitungspfad 38 des Testsignalpfads 36, der gleichzeitig den Datenhinleitungspfad darstellt, für den Datenrückleitungspfad 44, für die erste Stromversorgungsleitung 46 und für die zweite Stromversorgungsleitung 48 auf, so dass die gesamte Verkabelung der Sicherheitsteilnehmer 22 mit der Sicherheitssteuerung 10 durch eine linienförmige Busleitung 18 aus Buskabeln 20 mit jeweils mindestens fünf Adern realisiert ist. Es ist somit nur ein Buskabel 20 erforderlich, um zwei benachbarte Sicherheitsteilnehmer 22 miteinander bzw. mit der Sicherheitssteuerung 10 zu verbinden.

Von der Sicherheitssteuerung 10 wird ein Ausgangssignal erzeugt und über den Ausgang X1 an den Hinleitungspfad 38 ausgesendet. Dieses Ausgangssignal wird in den Anschaltungsmodulen 26 der Sicherheitsteilnehmer 22, wie in Fig. 1 ersichtlich, direkt und ohne Unterbrechungsmöglichkeit im Wesentlichen unverändert durchgeschleift und im Wesentlichen unverändert bis zu dem Abschlusselement 32 übertragen. Gleichzeitig ist in den Anschaltungsmodulen 26 jeweils eine Logikeinheit 50 mit einem Mikroprozessor 52 vorgesehen, die über einen Signalpfad 54 mit dem Hinleitungspfad 38 verbunden ist und dazu eingerichtet ist, das auf dem Hinleitungspfad 38 übertragene Ausgangssignal zu überwachen, beispielsweise zum Zweck einer nachstehend im Einzelnen erläuterten Synchronisierung.

Das Abschlusselement 32 weist eine mit dem Hinleitungspfad 38 verbundene Logikeinheit 56 mit einem Mikroprozessor 58 auf, die das über den Hinleitungspfad 38 übertragene Ausgangssignal empfängt und auswertet. Die Logikeinheit 56 ist mit einem Testsignalgenerator 60 des Abschlusselements 32 verbunden und steuert diesen an, um aktiv ein Testsignal zu generieren und an den mit dem Testsignalgenerator 60 verbundenen Rückleitungspfad 40 des Testsignalpfads 36 signaltreibend auszusenden.

Der Rückleitungspfad 40 des Testsignalpfads 36 verläuft durch die Sicherheitsteilnehmer 22 hindurch. Diese sind dazu eingerichtet, den Rückleitungspfad 40 bei Vorliegen bzw. Eintreten eines nicht sicheren Zustands ihres jeweiligen Schutzgeräts 24 zu unterbrechen. Die Anschaltungsmodule 26 weisen jeweils eine Testschaltung 62 auf, die über Verbindungen 64 der Anschaltungsleitung 30 mit Schutzkanälen des jeweiligen Schutzgeräts 24 verbunden ist, wobei die Testschaltung 62 in Zusammenwirken mit den Schutzkanälen des Schutzgeräts 24 eine Unterbrechung des Rückleitungspfads 40 des Testsignalpfads 36 bei Vorliegen eines nicht sicheren Zustands des Schutzgeräts 24 bewirkt.

Die Anschaltungsmodule 26 umfassen ferner jeweils einen Unterbrechungsschalter 66, der ebenfalls zur Unterbrechung des Rückleitungspfads 40 des Testsignalpads 36 ausgebildet ist und der in nachstehend noch genauer erläuterter Weise von der, in diesem Zusammenhang auch als Auswerteeinheit bezeichneten, Logikeinheit 50 angesteuert wird, mit der er über einen Signalpfad 54 verbunden ist.

Die Logikeinheiten 56, 50 des Abschlusselements 32 und der Anschaltungsmodule 26 sind jeweils in dem Datenpfad 42 bzw. Datenrückleitungspfad 44 angeordnet und dazu eingerichtet, in der im Folgenden näher erläuterten Weise Daten über den Datenpfad 42 zu empfangen und an den Datenrückleitungspfad 44 zu senden. Die von einem Sicherheitsteilnehmer 22 erzeugten und über den Datenrückleitungspfad 44 gesendeten Daten umfassen vorzugsweise von dem jeweiligen Sicherheitsteilnehmer 22 erzeugte Diagnose- und/oder Statusinformationen. Insbesondere können diese Informationen den sicherheitsrelevanten Schaltzustand des jeweiligen Schutzgeräts 24 wiedergeben, der auch für die Unterbrechung des Testsignalpfads ausschlaggebend ist, d.h. den von dem Schutzgerät 24 eingenommenen Zustand "sicher" oder "nicht sicher". Dadurch wird es der Sicherheitssteuerung 10 ermöglicht, im Fall einer Auslösung einer Sicherheitsabschaltung festzustellen, durch welchen Sicherheitsteilnehmer 22 die Abschaltung verursacht wurde. Ferner können die an die Sicherheitssteuerung 10 gesendeten Daten von dem Schutzgerät 24 erzeugte Zusatzinformationen umfassen, wie z.B. eine Information, die von einem als Laserscanner ausgebildeten Schutzgerät 24 erzeugten "Weak"-Signal abgeleitet ist, das einen Verschmutzungsgrad der Frontscheibe des Laserscanners anzeigt. Bei den von der Sicherheitssteuerung 10 gesendeten und von dem Sicherheitsteilnehmer 22 empfangenen Daten kann es sich z.B. um eine von der Sicherheitssteuerung 10 erzeugte Anforderung einer Funktion des Schutzgeräts 24 handeln, wie z.B. einer Aktivierung einer Zuhaltefunktion, wenn das Schutzgerät 24 als Türzuhaltung für eine Sicherheitstür ausgebildet ist.

Die Anschaltungsmodule 26 weisen jeweils eine über einen Signalpfad 54 mit der Logikeinheit 50 verbundene, insbesondere binäre, Ein-/Ausgabeschnittstelle 68 auf, die über wenigstens eine in der Anschaltungsleitung 30 vorgesehene Signalader 70 mit einer, insbesondere binären und/oder nicht sicheren Ein-/Ausgabe-Schnittstelle 68 des Schutzgeräts 24 verbunden ist, um über den Datenrückleitungspfad 44 empfangene Daten an das Schutzgerät 24 zu übertragen und/oder um von dem Schutzgerät 24 erzeugte Ausgangsdaten über den Datenrückleitungspfad 44 an die Sicherheitssteuerung 10 zu senden.

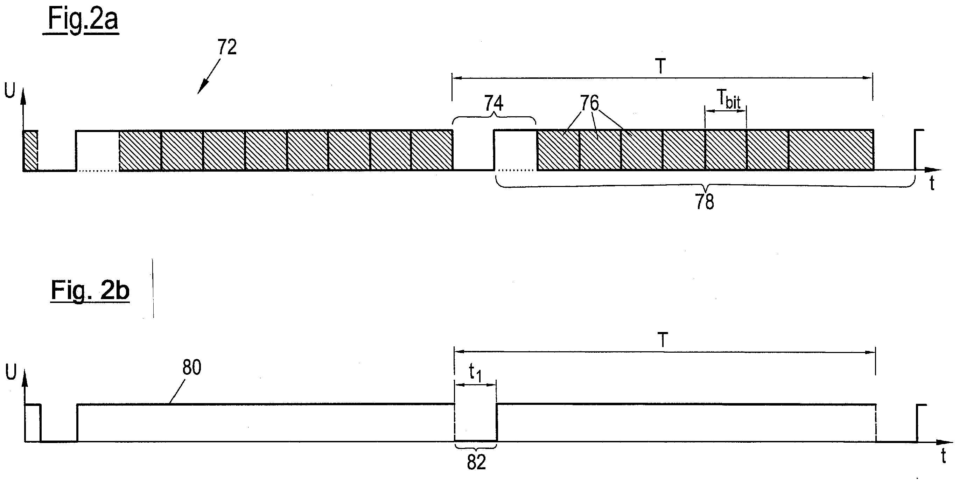

Die Funktionsweise der vorstehend beschriebenen Ausführungsform des erfindungsgemäßen Sicherheitssystems ist nachstehend unter Bezugnahme auf Fig. 1 und Fig. 2 erläutert, wobei Fig. 2 beispielhafte Verläufe der auf der Busleitung 18 des Sicherheitssystems übertragenen Signale zeigt.

Fig. 2a zeigt ein beispielhaftes, von der Sicherheitssteuerung 10 erzeugtes und über den Ausgang X1 ausgesendetes Ausgangssignal 72. Das Ausgangssignal 72 basiert auf der elektrischen Spannung U und weist mit einer Zykluszeit T periodisch auftretende Synchronisationsmerkmale 74 und zwischen den Synchronisationsmerkmalen 74 angeordnete Datenmerkmale 76 auf, die jeweils ein Datenbit der von der Sicherheitssteuerung 10 gesendeten Ausgangsdaten repräsentieren. Der Signalabschnitt zwischen der steigenden Flanke eines Synchronisationsmerkmals 74 mit den darauf folgenden Datenmerkmalen 76 bis zur steigenden Flanke des nächsten Synchronisationsmerkmals 74 bildet jeweils einen von mehreren aufeinander folgenden Datenframes 78. Ein Synchronisationsmerkmal 74 besteht jeweils aus einem für eine Bitdauer T_{bit} dauerhaft anliegenden niedrigen Spannungspegel (z.B. Massepotential bzw. 0 Volt) mit einem darauf folgenden für eine Bitdauer T_{bit} dauerhaft anliegenden hohen Spannungspegel (z.B. 24 Volt).

Wie vorstehend beschrieben, wird das Ausgangssignal 72 über den Hinleitungspfad 38 im Wesentlichen unverändert zu dem Abschlusselement 32 übertragen, welches das Ausgangssignal 72 empfängt und daraus unter Verwendung der Logikeinheit 56 und des Testsignalgenerators 60 ein gegenüber dem Ausgangssignal 72 verändertes, in Fig. 2b beispielhaft dargestelltes Testsignal 80 erzeugt und dieses signaltreibend an den Rückleitungspfad 40 des Testsignalpfads 36 aussendet. Das Testsignal 80 weist mit der Zykluszeit T periodisch auftretende Testlücken 82 mit einer Dauer t₁ auf, wobei das Signal während der Dauer t₁ der Testlücken 82 jeweils dauerhaft einen niedrigen Signalpegel aufweist und zwischen zwei aufeinander folgenden Testlücken 82 einen dauerhaft anliegenden hohen Signalpegel aufweist. Die Logikeinheit 56 synchronisiert das Testsignal 80 mit dem empfangenen Ausgangssignal 72, so dass der Beginn der Testlücken 82 jeweils zeitlich zumindest bis auf eine geringfügige Toleranz mit dem Beginn der Synchronisationsmerkmale 74 zusammenfällt. Das Abschlusselement 32 verwendet dazu eine eigene Zeitbasis, wie z.B. einen Taktgeber des Mikroprozessors 58, und überwacht das Auftreten der Synchronisationsmerkmale 74 in dem empfangenen Ausgangssignal 72, um diese eigene Zeitbasis mit dem Auftreten der Synchronisationsmerkmale 74 abzugleichen.

Die Sicherheitsteilnehmer 22 sind dazu ausgebildet, das über den Rückleitungspfad 40 übertragene Testsignal 80 bei Vorliegen eines fehlerfreien Zustands des Sicherheitsteilnehmers 22 und im sicheren Zustand des jeweiligen Schutzgeräts 24 zu dem jeweiligen nächsten Sicherheitsteilnehmer 22 in der Linie bzw. zuletzt an die Sicherheitssteuerung 10 durchzulassen bzw. weiterzusenden, so dass das Testsignal 80 im sicheren Zustand aller Sicherheitsteilnehmer 22 im Wesentlichen unverändert zu dem Sicherheitseingang I1 der Sicherheitssteuerung 10 gelangt. Die Sicherheitssteuerung 10 ist dazu eingerichtet, das über den Rückleitungspfad 40 des Testsignalpfads 36 übertragene Signal an dem Sicherheitseingang I1 zu empfangen und mit einer in der Sicherheitssteuerung 10 konfigurierten Erwartungshaltung zu vergleichen. Dabei überprüft die Sicherheitssteuerung 10, ob in den erwarteten Abständen und zu den erwarteten Zeitpunkten, d.h. synchron zu den ausgesendeten Synchronisationsmerkmalen 74, jeweils eine Testlücke 82 mit der erwarteten Dauer t₁ empfangen wird. Entspricht das empfangene Signal nicht dieser Erwartungshaltung, lässt dies auf einen nicht sicheren Zustand zumindest eines Schutzgeräts 24 oder einen Funktionsfehler des Sicherheitssystems schließen und die Sicherheitssteuerung 10 leitet eine geeignete Sicherheitsmaßnahme ein, z.B. eine Sicherheitsabschaltung einer überwachten Anlage durch Unterbrechung der Stromzufuhr zu dieser Anlage.

Da sich das bei dem Betrieb des Sicherheitssystems über den Rückleitungspfad 40 übertragene Testsignal 80 von dem über den Hinleitungspfad 38 übertragenen Ausgangssignal 72 unterscheidet und nur das Testsignal 80 der Erwartungshaltung der Sicherheitssteuerung 10 entspricht, führt z.B. ein Querschluss zwischen dem Hinleitungspfad 38 und dem Rückleitungspfad 40 des Testsignalpfads 36 zu einem Ausbleiben des erwarteten Signals an dem Sicherheitseingang I1. Ein solcher Funktionsfehler, wie er beispielsweise bei einer Quetschung eines Buskabels 20 auftreten kann, führt folglich zuverlässig zu einer Verletzung der Erwartungshaltung der Sicherheitssteuerung und zu einer Sicherheitsabschaltung, so dass eine Tolerierung eines solchen Fehlerzustands durch die Sicherheitsteuerung 10 ausgeschlossen ist.

Der an den Ausgang X1 angeschlossene Hinleitungspfad 38 des Testsignalpfads 36 bildet mit dem an den Eingang I2 angeschlossenen Datenrückleitungspfad 44 einen als Ringbus ausgebildeten ringförmigen Datenpfad 42, über den die Sicherheitssteuerung 10, das Abschlusselement 32 und die Sicherheitsteilnehmer 22 miteinander kommunizieren und zwar nach Art einer nachstehend beschriebenen Daisy-Chain-Buskommunikation. Die Sicherheitssteuerung 10, das Abschlusselement 32 und die Sicherheitsteilnehmer 22 bilden dabei die Teilnehmer der Buskommunikation, wobei die Sicherheitssteuerung 10 gleichzeitig den Busmaster darstellt.

Um Daten von dem Datenpfad 42 zu empfangen und Daten über den Datenpfad 42 zu senden, ist jeder Teilnehmer 22, 32 dazu ausgebildet, an einem Eingang ein über den Datenpfad 42 übertragenes eingehendes Datensignal zu empfangen, die empfangenen Daten zu verarbeiten, und bevorzugt gleichzeitig an einem von dem Eingang verschiedenen Ausgang ein ausgehendes Datensignal an den Datenpfad 42 auszusenden, so dass die Teilnehmer 22, 32 eine Nachrichtenkette bilden, in der die Daten in einer vorgegebenen Datenflussrichtung von einem Teilnehmer 22, 32 zum nächsten übertragen werden. Die Logikeinheiten 50, 56 der Sicherheitsteilnehmer 22 und des Abschlusselements 32 dienen dabei als Sende- und Empfangsschaltung, über die der jeweilige Teilnehmer 22, 32 Daten empfängt und sendet. Jedem Teilnehmer 22, 32 ist eine eindeutige Adresse zugeordnet, die seiner auf die Datenflussrichtung bezogenen Position in der Nachrichtenkette entspricht. Da das die Ausgangsdaten der Sicherheitssteuerung 10 enthaltende Ausgangssignal 72 zunächst durch die Sicherheitsteilnehmer 22 ohne Unterbrechung bis zu dem Abschlusselement 32 durchgeschleift wird, ist das Abschlusselement 32 das erste Element in der Nachrichtenkette und hat die Adresse 1. Die Sicherheitsteilnehmer 22 sind ausgehend von der Adresse 1 entsprechend ihrer Reihenfolge, in der sie auf dem Datenrückleitungspfad 44 ausgehend von dem Abschlusselement 32 aufeinander folgen und zur Datenkommunikation an den Datenrückleitungspfad 44 angeschlossen sind, aufsteigend durchadressiert.

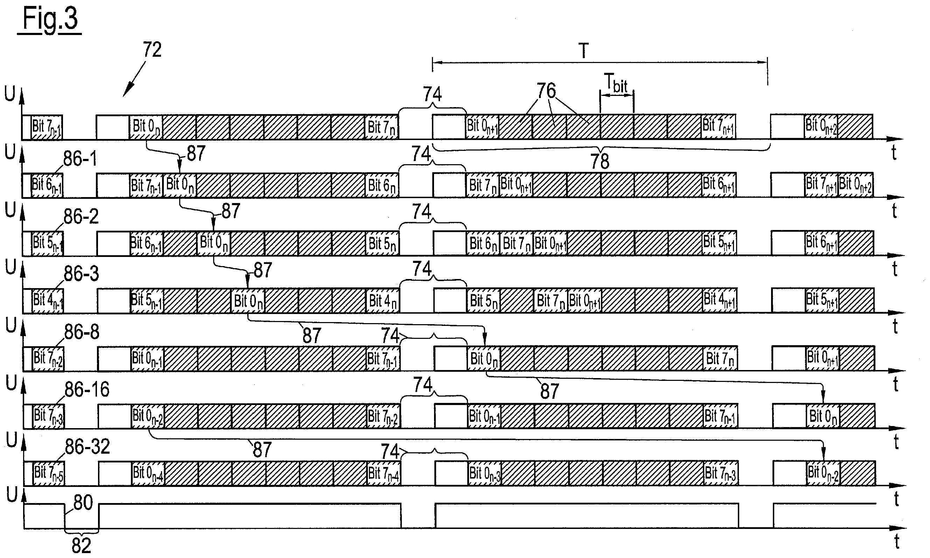

Fig. 3 veranschaulicht die Datenkommunikation und zeigt beispielhafte Signale, die auf dem Datenpfad 42 übertragen werden.

Ganz oben in Fig. 3 ist das Ausgangssignal 72 der Sicherheitssteuerung 10 gezeigt, welches, wie vorstehend in Bezug auf Fig. 2 beschrieben, zyklische Synchronisationsmerkmale 74 und dazwischen liegende Datenmerkmale 76 bzw. Bits aufweist, die aufeinander folgende Datenframes 78 bilden. Die übrigen in Fig. 3 gezeigten Datensignale 86_x mit x = 1, 2, 3, 8, 16, 32 stellen jeweils die Datensignale dar, die der Teilnehmer 22, 32 mit der Adresse x = 1, 2, 3, 8, 16, 32 jeweils an den nächsten Teilnehmer 22, 32 mit der nächsthöheren Adresse sendet und die von diesem empfangen werden. In Fig. 3 wird von einem System mit 32 Kommunikationsteilnehmern 22, 32 ausgegangen, wobei in Fig. 3 aber nur die Datensignale 86_1, 86_2, 86_3, 86_8, 86_16 und 86_32 der Teilnehmer 22, 32 mit den Adressen 1, 2, 3, 8, 16 und 32 gezeigt sind.

Die in dem Ausgangssignal 72 enthaltenen Synchronisationsmerkmale 74 werden bei der Buskommunikation als Frame-Signal verwendet, dessen steigende Signalflanken jeweils den Anfang und das Ende eines Frames markieren. Die Teilnehmer 22, 32 synchronisieren ihre Kommunikation auf dem Bus unter Verwendung der Synchronisationsmerkmale 74. Die Teilnehmer 32 können dazu das Auftreten der Synchronisationsmerkmale 74 entweder auf dem Hinleitungspfad 38 oder auf dem Datenrückleitungspfad 44 überwachen und das Auslesen und Senden der Daten mit diesen synchronisieren. Wie in Fig. 3 gezeigt, enthalten auch die von den Teilnehmern 22, 32 gesendeten Datensignale 86_1 bis 86_32 die Synchronisationsmerkmale 74 zu den gleichen Zeitpunkten wie das Ausgangssignal 72.

Jeder Teilnehmer 22, 32 identifiziert anhand seiner ihm bekannten Adresse und dem Frame-Signal die Zeitfenster, zu denen die für ihn vorgesehenen Datenmerkmale 76 in seinem eingehenden Datensignal enthalten sind und zu denen er ausgehende Datenmerkmale 76 in seinem ausgehenden Datensignal senden darf. Jeder Teilnehmer 22, 32 liest die für ihn bestimmten Daten aus dem eingehenden Datensignal aus und sendet ein ausgehendes Datensignal, welches die in seinem eingehenden Datensignal enthaltenen, an die übrigen Teilnehmer 22, 32 adressierten Daten umfasst und zusätzlich die von dem jeweiligen Teilnehmer 22, 32 erzeugten Ausgangsdaten. Die von einem Teilnehmer 22, 32 gesendeten Daten entsprechen folglich teilweise den von dem Teilnehmer 22, 32 empfangenen Daten, so dass diese Daten unverändert weitergeleitet werden, und enthalten außerdem zusätzliche, von dem jeweiligen Teilnehmer 22, 32 erzeugte Daten. Die an einen Teilnehmer 22, 32 adressierten und von diesem ausgelesenen Daten werden vorzugsweise nicht an die nachfolgenden Teilnehmer 22, 32 weitergeleitet. Stattdessen können die frei werdenden Zeitfenster bzw. Bits für die Übersendung der von demselben Teilnehmer 22, 32 erzeugten Ausgangsdaten genutzt werden, so dass die Datenkapazität auf dem Datenpfad 42 optimal ausgenutzt wird.

Die von einem Teilnehmer 22, 32 unverändert weitergeleiteten Daten werden, wie in Fig. 3 durch Pfeile 87 dargestellt, gegenüber den entsprechenden eingehenden Daten um eine einem Bit entsprechende Dauer t_{Bit} verzögert ausgesendet, so dass ein von einem Teilnehmer 22, 32 für die mit der Datenkommunikation in Zusammenhang stehenden Vorgänge benötigter Zeitbedarf ausgeglichen wird. Die dadurch in dem Ringbus hervorgerufene Verzögerung der Daten wird von den Teilnehmern 22, 32 bei dem Identifizieren der für den jeweiligen Teilnehmer 22, 32 vorgesehen Zeitfenster und bei dem Auslesen und Senden von Daten in diesen Zeitfenstern berücksichtigt.

Die Kommunikation auf dem Ringbus folgt einem festgelegten Protokoll, welches z.B. die Übertragung von festgelegten Daten des Abschlusselements 32 und/oder der Sicherheitsteilnehmer 22 an die Sicherheitssteuerung 10 vorsieht. Das Protokoll ist so gewählt, dass nur bei intaktem Datenpfad 42, d.h. bei Nichtvorliegen von Leitungsfehlern wie Querschlüssen, Kurzschlüssen oder Unterbrechungen des Datenpfads 42, ein dem Protokoll entsprechendes Datensignal 86_32 zu der Sicherheitssteuerung gelangt. Die Sicherheitssteuerung verifiziert das empfangene Datensignal 86_32, d.h. überprüft z.B. die Integrität der empfangenen Datenframes 78 auf Übertragungsfehler und Plausibilitätsfehler. Wenn das empfangene Signal dem Protokoll nicht entspricht bzw. eine dauerhaft ungültige Kommunikation festgestellt wird, kann eine Sicherheitsabschaltung durchgeführt werden.

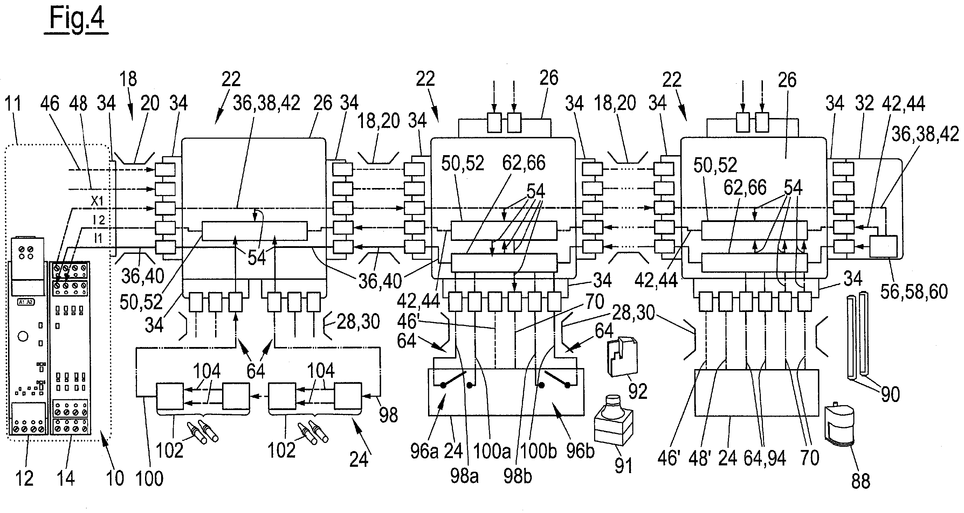

Fig. 4 zeigt ein erfindungsgemäßes Sicherheitssystem, welches im Wesentlichen dem in Fig. 1 gezeigten Sicherheitssystem entspricht, wobei zusätzliche Details von drei verschiedenartigen Sicherheitsteilnehmern 22 dargestellt sind. Der in Fig. 4 rechts dargestellte Sicherheitsteilnehmer 22 umfasst ein Schutzgerät 24, welches als Laserscanner 88, als Lichtgitter 90 oder als Transponderschalter ausgebildet sein kann und welches zwei als OSSD-(output signal switching device)-Ausgänge ausgebildete Schaltsignalausgänge aufweist, die jeweils über eine durch eine einzelne Schaltsignalleitung 94 des Anschaltungskabels 28 gebildete Verbindung 64 mit der Testschaltung 62 des Anschaltungsmoduls 26 verbunden sind. Durch einen Schaltsignalausgang wird jeweils ein in der Testschaltung 62 des Sicherheitsteilnehmers 22 angeordneter unterbrechbarer Signalübertragungspfad angesteuert, der in dem Rückleitungspfad 40 des Testsignalpfads 36 angeordnet ist, um den Testsignalpfad 36 bei Eintreten des nicht sicheren Zustands des Schutzgeräts 24 zu unterbrechen. Zudem ist das Schutzgerät 24 über die Stromversorgungsadern 46', 48' des Anschaltungskabels 28 an die Stromversorgung des Sicherheitssystems angeschlossen. Das Schutzgerät 24 ist ferner über zwei Signaladern 70 des Anschaltungskabels 28, die mit einer Ein-/Ausgabeschnittstelle des Schutzgeräts 24 in Verbindung stehen, und über in dem Anschaltungsmodul 26 angeordnete Signalpfade 54 mit der Logikeinheit 50 des Sicherheitsteilnehmers 22 verbunden.

Der mittlere Sicherheitsteilnehmer 22 in Fig. 4 umfasst ein Schutzgerät 24, welches als zweikanaliger Not-Aus-Taster 91 oder als zweikanalige Türzuhaltung 92 für eine Sicherheitstür ausgebildet ist. Das Schutzgerät 24 umfasst zwei jeweils einen mechanischen elektrischen Schaltkontakt aufweisende Schalter 96a, 96b, die jeweils über eine Verbindung 64 der Anschaltungsleitung 30 mit der Testschaltung 62 verbunden sind, wobei eine Verbindung 64 jeweils einen Hinleiter 98a, 98b und einen Rückleiter 100a, 100b umfasst, die zusammen mit dem Schalter 96a, 96b einen ersten und einen zweiten elektrischen Schaltpfad bilden. Wenn das mittlere Schutzgerät 24 als Türzuhaltung 92 ausgebildet ist, kann die zugehörige Anschaltungsleitung 30 eine wie in Fig. 4 gezeigte Signalader 70 der Anschaltungsleitung 30 umfassen, die einerseits über einen Signalpfad 54 mit der Logikeinheit 50 des Anschaltungsmoduls 26 und andererseits mit einem Signaleingang des Schutzgeräts 24 verbunden ist, so dass eine Zuhaltefunktion der Türzuhaltung 92 durch Übermitteln eines entsprechenden Steuersignals über die Signalader 70 aktivierbar ist. Ferner ist eine erste Stromversorgungsader 46' der Anschaltungsleitung 30 gezeigt.

Der in Fig. 4 links gezeigte Sicherheitsteilnehmer 22 umfasst als Schutzgerät 24 zwei elektrisch in Serie geschaltete Lichtschranken 102 mit jeweils zwei parallelen und beim Eintreten eines Objekt unterbrechbaren optischen Signalpfaden 104. Die Lichtschranken 102 sind über eine durch einen Hinleiter 98 und einen Rückleiter 100 gebildete Verbindung 64 des Anschaltungskabels 30 mit dem Anschaltungsmodul 26 verbunden und über das Anschaltungsmodul 26 direkt, d.h. ohne Zwischenschaltung einer Testschaltung des Anschaltungsmoduls 26, in den Testsignalpfad 36 eingebunden, so dass das Testsignal die optischen Signalpfade 104 als unmittelbaren Übertragungsweg nutzt und der Testsignalpfad 36 durch Unterbrechen der Lichtschranken unterbrechbar ist.

Die Logikeinheiten 50 der Anschaltungsmodule 26 sind, wie z.B. in Fig. 4 gezeigt, über mehrere Signalpfade 54 mit dem Rückleitungspfad 40 des Testsignalpfads 36 bzw. mit der in diesem Rückleitungspfad 40 angeordneten Testschaltung 62 verbunden. Die Logikeinheit 50 und deren Mikroprozessor 52 stellen dabei eine Auswerteeinheit dar, die die über den Rückleitungspfad 40 übertragenen Signale und den Schaltzustand der Schutzgeräte 24 überwachen kann und in einem Fehlerfall einen in dem Rückleitungspfad 40 angeordneten Unterbrechungsschalter 66 (siehe Fig. 1) ansteuern kann, um diesen zu öffnen und dadurch den Rückleitungspfad 40 zu unterbrechen und eine Sicherheitsabschaltung zu verursachen.

Beispielsweise kann die Logikeinheit 50 überprüfen, ob bei Verwendung eines mehrkanaligen Schutzgeräts 24 die Schutzkanäle des Schutzgeräts 24 funktionsgemäß gemeinsam schalten oder ob eine Diskrepanz zwischen den beiden Schutzkanälen vorliegt und kann im Fall einer Diskrepanz den Unterbrechungsschalter 66 öffnen. Auch wenn der Testsignalpfad 36 bei einem Öffnen zumindest eines der Schutzkanäle des Schutzgeräts 24 gemäß der Sicherheitsfunktion des Sicherheitssystems ohnehin bereits unterbrochen werden kann, wird die Sicherheit des Gesamtsystems dadurch erhöht. So kann die Logikeinheit 50 den Überbrückungsschalter 66 in dem vorstehend beschriebenen Fehlerfall permanent öffnen, auch wenn das Sicherheitsgerät 24 wieder in den sicheren Zustand mit geschlossenen Schutzkanälen zurückkehrt, bis die Funktionstüchtigkeit des Sicherheitsteilnehmers 22 wieder hergestellt ist. Bis dahin wird ein Wiederaktivieren des Sicherheitssystems verhindert, sodass eine Tolerierung des vorhandenen Fehlers ausgeschlossen ist.

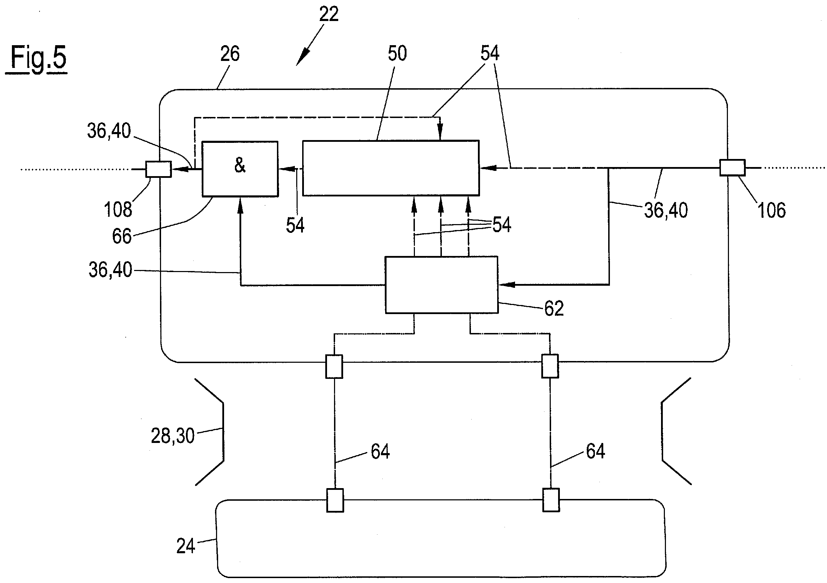

Eine beispielhafte Funktionsweise der Logikeinheit 50 als eine Auswerteeinheit, die eine Diskrepanz zwischen den Schutzkanälen erkennt, wird nachfolgend in Bezug auf Fig. 5 näher erläutert.

Fig. 5 zeigt einen Sicherheitsteilnehmer 22 mit einem zweikanaligen, d.h. zwei Schutzkanäle aufweisenden, Schutzgerät 24. Jedem Schutzkanal des Schutzgeräts 24 ist einer von zwei in Fig. 5 nicht eigens dargestellten, in dem Rückleitungspfad 40 angeordneten unterbrechbaren Signalübertragungspfaden des Sicherheitsteilnehmers 22 bzw. des Schutzgeräts 24 zugeordnet, die bei dem Eintreten eines nicht sicheren Zustands des Schutzgeräts 24 gemeinsam unterbrechbar sind. Die unterbrechbaren Signalübertragungspfade sind vorzugsweise miteinander zwischen einem Testsignaleingang 106 und einem Testsignalausgang 108 des Sicherheitsteilnehmers 22 elektrisch in Reihe, d.h. in Serie, geschaltet.

Jeder Schutzkanal des Schutzgeräts 24 ist über eine Verbindung 64 der Anschaltungsleitung 30 mit dem Anschaltungsmodul 26 bzw. einer Testschaltung 62 des Anschaltungsmoduls 26 verbunden. Wie vorstehend in Bezug auf Fig. 4 und den dort in der Mitte gezeigten Sicherheitsteilnehmer 22 beschrieben, kann eine solche Verbindung 64 beispielsweise durch einen Hinleiter und einen Rückleiter gebildet sein, zwischen denen ein in dem Schutzgerät 24 angeordneter unterbrechbarer elektrischer Schalter oder optischer Signalübertragungspfad angeordnet ist. Ebenso kann die Verbindung 64 eine mit einem z.B. digitalen Schaltsignalausgang, beispielsweise einem OSSD-Ausgang, des Schutzgeräts 24 verbundene bevorzugt einadrige Schaltsignalleitung umfassen, wobei durch den Schaltsignalausgang ein in dem Sicherheitsteilnehmer 22 bzw. in der Testschaltung 62 angeordneter unterbrechbarer Signalübertragungspfad angesteuert wird, um diesen abhängig von dem sicheren oder nicht sicheren Zustand des Schutzgeräts zu öffnen und zu schließen.

Die Logik- bzw. Auswerteeinheit 50 ist über mehrere Signalpfade 54 mit den unterbrechbaren Signalübertragungspfaden und/oder den Verbindungen 64 verbunden, um festzustellen, ob die ersten und zweiten unterbrechbaren Signalübertragungspfade gemeinsam unterbrochen oder zur Unterbrechung angesteuert werden, wenn ein nicht sicherer Zustand des Schutzgeräts 24 eintritt. Die Logikeinheit 50 kann dazu überprüfen, ob die beiden unterbrechbaren Signalübertragungspfade, gegebenenfalls bis auf eine vorgegebene zeitliche Toleranz, gleichzeitig unterbrochen werden, wofür die Logikeinheit 50 einen Mikroprozessor 52 (Fig. 1) sowie eine eigene Zeitbasis der Logikeinheit 50 wie insbesondere einen Taktgeber des Mikroprozessors einsetzen kann. Falls ein Schutzkanal des Schutzgeräts 24, wie vorstehend beschrieben, einen Schaltsignalausgang umfasst, mit dem ein unterbrechbarer Signalübertragungspfad angesteuert wird, kann die Logikeinheit 50 über die Verbindung 64 mit dem entsprechenden Schaltsignalausgang verbunden sein. Anstatt zu überprüfen, ob der jeweilige unterbrechbare Signalübertragungspfad tatsächlich unterbrochen wird, kann die Logikeinheit 50 dann überprüfen, ob der unterbrechbare Signalübertragungspfad zur Unterbrechung angesteuert wird. Die Logikeinheit 50 steuert über einen zwischen der Auswerteeinheit 50 und dem Unterbrechungsschalter 66 angeordneten Signalpfad 54 den Unterbrechungsschalter 66 an, um diesen zu öffnen, wenn die zwei unterbrechbaren Signalübertragungspfade nicht gemeinsam unterbrochen oder zur Unterbrechung angesteuert werden.

Die Auswerteeinheit 50 kann auch dazu eingerichtet sein, einen Leitungsfehler einer oder mehrerer Verbindungsleitungen 64 zu erkennen, wie beispielsweise einen Querschluss zwischen verschiedenen Verbindungsleitungen 64 oder einen Kurzschluss zwischen einem Hinleiter und einem Rückleiter derselben Verbindungsleitung 64.

Wie in Fig. 5 ebenfalls gezeigt, ist die Auswerteeinheit 50 über einen weiteren Signalpfad 54 auch mit dem Testsignalausgang 108 verbunden, so dass die Auswerteeinheit 50 auch das über den Testsignalausgang 108 ausgehende Testsignal überwachen kann. Die Auswerteeinheit 50 kann somit zusätzlich zu oder im Rahmen der vorstehend beschriebenen Diskrepanzüberwachung auch das ausgehende Testsignal des Sicherheitsteilnehmers 22 überwachen und ggf. abhängig von dieser Überwachung eine Unterbrechung des Unterbrechungsschalters 66 hervorrufen.

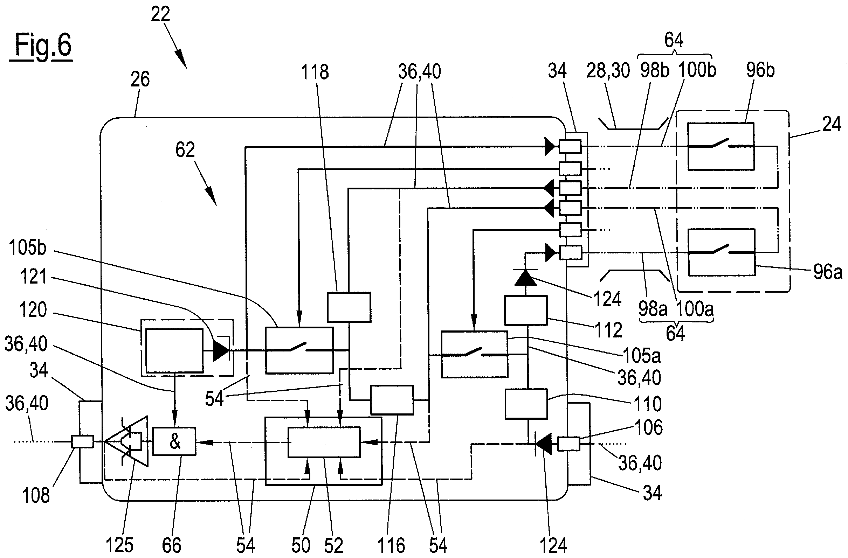

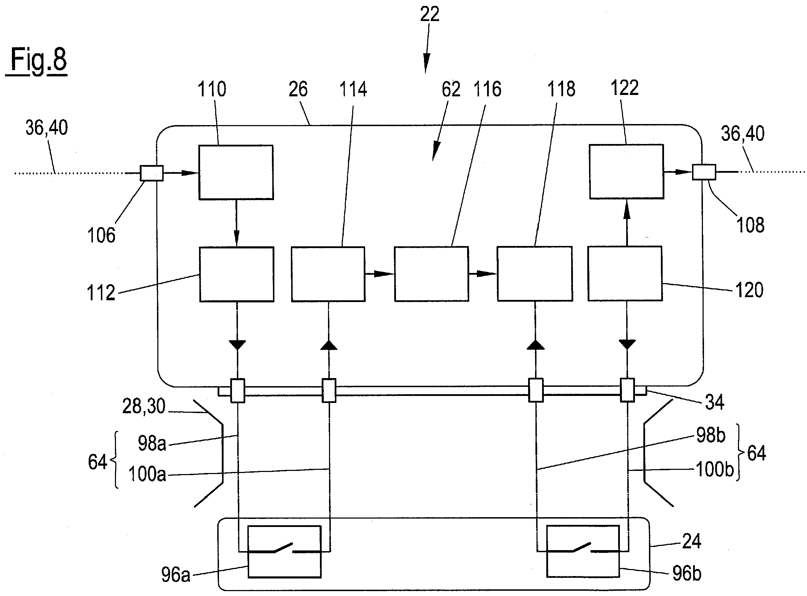

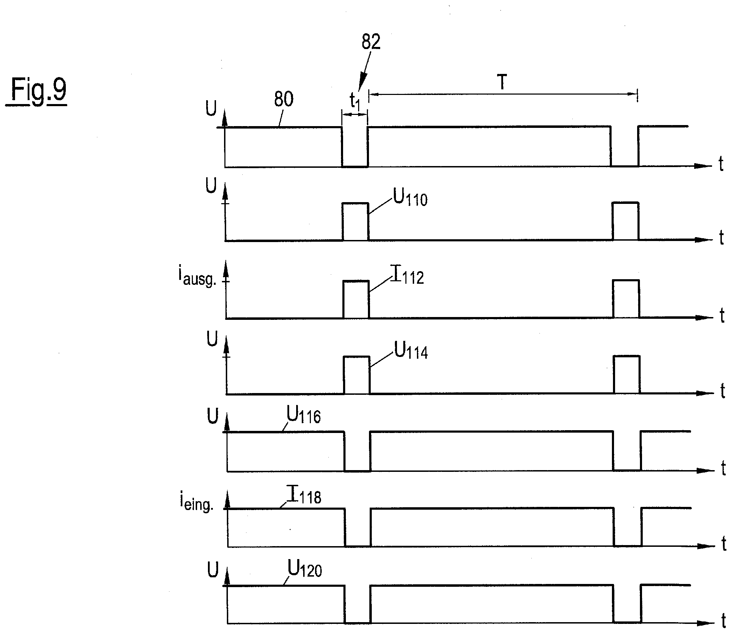

Fig. 6 zeigt eine weitere Ausführungsform eines Sicherheitsteilnehmers 22 zur Verwendung in einem wie in Fig. 1 gezeigten Sicherheitssystem mit einer Auswerteeinheit 50, die die Schutzkanäle des Schutzgeräts 24 auf eine Diskrepanz überprüft. Zusätzlich zeigt Fig. 6 die Bestandteile einer nachfolgend in Bezug auf Fig. 8 und 9 erläuterten Testschaltung 62 des Sicherheitsteilnehmers 22.

Bei dem in Fig. 6 gezeigten Sicherheitsteilnehmer 22 sind die unterbrechbaren Signalübertragungspfade durch Schalter 96a, 96b des Schutzgeräts 24 gebildet. Die Schalter 96a, 96b sind jeweils über einen Hinleiter 98a, 98b und einen Rückleiter 100a, 100b der Anschaltungsleitung 30 mit dem Anschaltungsmodul 26 verbunden und über eine Testschaltung 62 elektrisch miteinander in Serie geschaltet, wie es nachfolgend in Zusammenhang mit Fig. 8 im Detail beschrieben ist. Die Logikeinheit 50 ist über entsprechende Signalpfade 54 mit den beiden Hinleitern 98a, 98b und Rückleitern 100a, 100b verbunden. Die Logikeinheit 50 ist dazu ausgebildet, über die Signalpfade 54 den Schaltzustand der beiden Schalter 96a, 96b zu erfassen und zu überprüfen, ob die beiden Schalter 96a, 96b im Falle des Eintretens eines nicht sicheren Zustands des Schutzgeräts 24 gemeinsam unterbrochen werden, und um den Unterbrechungsschalter 66 über einen weiteren Signalpfad 54 anzusteuern und zu unterbrechen, wenn eine Diskrepanz der beiden Schalter 96a, 96b erkannt wird, d.h. wenn die beiden Schalter 96a, 96b nicht gemeinsam unterbrochen werden.

Das in Fig. 6 gezeigte Anschaltungsmodul 26 ist sowohl mit einem wie in Fig. 4 gezeigten Schutzgerät 24 mit elektrischen Schaltern 96a, 96b als auch mit einem Schutzgerät 24 mit digitalen Schaltsignalausgängen verwendbar oder mit einem Schutzgerät 24 mit einer Kombination von beidem.

Das in Fig. 6 gezeigte Anschaltungsmodul 62 bzw. deren Testschaltung 62 weist dazu neben den für die Verbindungen 64 mit den Schaltern 96a, 96b über die Anschaltungsleitung 30 vorgesehenen Anschlüssen noch zwei weitere in dem Testsignalpfad 36 angeordnete elektrisch oder elektronisch ansteuerbare Schalter 105a, 105b auf, die beispielsweise Feldeffekttransistoren oder Bipolartransistoren umfassen können, und die abhängig von einem Schaltsignal eines entsprechenden Schaltsignalausgangs eines Schutzgeräts 24 angesteuert und insbesondere bei Eintreten eines nicht sicheren Zustands des Schutzgeräts 24 geöffnet werden können, um den Testsignalpfad 36 zu unterbrechen. Die Schalter 105a, 105b stellen somit Signalübertragungspfade dar, die bei Anschluss entsprechender Schaltsignalausgänge des Schutzgeräts 24 normalerweise geschlossen sind bzw. durch die ständig ausgesendeten Schaltsignale des Schutzgeräts 24 in dem geschlossenen Zustand gehalten werden, und die bei dem Eintreten eines nicht sicheren Zustands des Schutzgeräts 24 gemeinsam unterbrechbar sind. Das Anschaltungsmodul 26 weist dazu Anschlüsse auf, über die die Steuereingänge der elektrisch oder elektronisch ansteuerbaren Schalter 105a, 105b jeweils mit einem entsprechenden Schaltsignalausgang des Schutzgeräts 24 bzw. einer bevorzugt einadrigen Schaltsignalleitung der Anschaltungsleitung 30 verbindbar sind. Ist, wie in Fig. 6 gezeigt, ein Schutzgerät 24 ohne entsprechende Schaltsignalausgänge an das Anschaltungsmodul 26 angeschlossen, d.h. werden die Steuereingänge der Schalter 105a, 105b nicht mit einem Schaltsignal beaufschlagt, sind die Schalter 105a, 105b dauerhaft geöffnet.

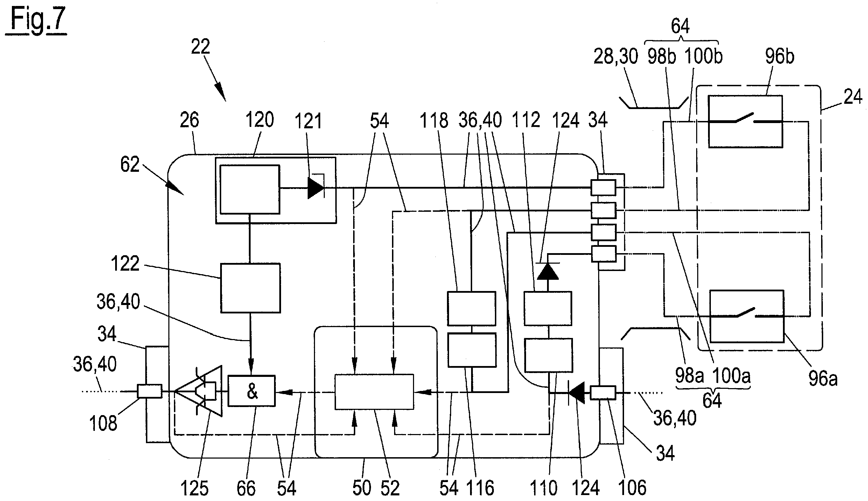

Ein dem Sicherheitsteilnehmer von Fig. 6 entsprechender Sicherheitsteilnehmer 22 mit einem Anschaltungsmodul 26, das nur für die Verwendung mit einem Schutzgerät 24 mit Schaltern 96a, 96b ausgebildet ist, ist in Fig. 7 gezeigt. Ebenso kann ein Anschaltungsmodul 26 prinzipiell nur für die Verwendung mit einem Schutzgerät 24 mit Schaltsignalausgängen ausgebildet sein, die wie in Fig. 6 gezeigte Schalter 105a, 105b des Anschaltungsmoduls 26 ansteuern. Die Ausgestaltung der Testschaltung 62 kann prinzipiell an die Art der Schutzgeräte 24 angepasst sein, für deren Verwendung das jeweilige Anschaltungsmodul 26 eingerichtet ist.

Fig. 6 und 7 zeigen darüber hinaus die einzelnen Komponenten der Testschaltung 62, die nachstehend in Bezug auf Fig. 8 genauer erläutert ist und die einen ersten Invertierer 110, eine gesteuerte Stromquelle 112, einen zweiten Invertierer 116, eine gesteuerte Stromsenke 118, ein Stromrichtungselement 120 mit einer Zenerdiode 121, eine Dynamikeinheit 122 (Fig. 7) und zwei Dioden 124 umfasst. Außerdem ist ein Signalverstärker oder Signaltreiber 125 gezeigt, der zwischen dem Unterbrechungsschalter 66 und dem Testsignalausgang 108 angeordnet ist und das Testsignal signaltreibend an den nachfolgenden Abschnitt des Rückleitungspfads 40 ausgibt.

Fig. 8 zeigt einen Sicherheitsteilnehmer 22 mit einer wie in Fig. 6 und 7 gezeigten Testschaltung 62, die zum Erkennen eines Querschlusses oder anderen Fehlers in der Anschaltungsleitung 30 dient.

An dem Testsignaleingang 106 des Anschaltungsmoduls 26 wird das über den Rückleitungspfad 40 des Testsignalpfads 36 übertragene dynamische

Testsignal 80 (Fig. 9) empfangen. Wie vorstehend beschrieben, handelt es sich bevorzugt um ein spannungsbasiertes Signal, insbesondere binärwertiges Gleichspannungssignal, welches in periodischen Abständen Testlücken 82 einer vorgegebenen konstanten Dauer aufweist, während derer das Testsignal dauerhaft einen niedrigen Spannungspegel aufweist und zwischen denen das Testsignal dauerhaft einen hohen Spannungspegel aufweist.

Der Testsignaleingang 106 ist mit dem Eingang des Invertierers 110 verbunden, der das eingehende Testsignal empfängt und invertiert und an seinem Ausgang ein invertiertes, bevorzugt ebenfalls spannungsbasiertes Testsignal ausgibt. Bei der Invertierung wird ein hoher Signal- bzw. Spannungspegel des eingehenden Signals in einen niedrigen Signal- bzw. Spannungspegel des ausgehenden Signals umgewandelt und ein niedriger Signal- bzw. Spannungspegel des eingehenden Signals wird in einen hohen Signal- bzw. Spannungspegel des ausgehenden Signals umgewandelt. Zwischen dem Testsignaleingang 106 und dem Eingang des Invertierers 110 kann, wie in Fig. 6 und 7 gezeigt, eine Diode 124 angeordnet sein, die in positiver Signalflussrichtung des Testsignals gepolt ist und einen positiven Stromfluss von dem Sicherheitsteilnehmer 22 zu dem vorhergehenden Abschnitt des Rückleitungspfads 40 des Testsignalpfads 36 verhindert. Diese Diode 124 ist aber nicht unbedingt erforderlich.

Der Ausgang des Invertierers 110 ist mit dem Steuereingang der gesteuerten Stromquelle 112 verbunden, die dazu ausgebildet ist, das von dem Invertierer 110 gelieferte Gleichspannungssignal in ein Gleichstromsignal umzuwandeln, derart, dass ein hoher Pegel des von dem Invertierer 110 gelieferten Gleichspannungssignal mit einem hohen Pegel des Gleichstromsignals korrespondiert und ein niedriger Pegel des von dem Invertierer 110 gelieferten Gleichspannungssignal mit einem niedrigen Pegel des Gleichstromsignals korrespondiert. Die gesteuerte Stromquelle 112 ist als aktive Stromquelle ausgebildet und dazu eingerichtet, an ihrem Ausgang aktiv einen, bezogen auf die technische Stromflussrichtung, positiven ausgehenden elektrischen Stromfluss zu erzeugen, der wie vorstehend beschrieben von dem anliegenden Steuersignal abhängt. Zwischen dem Ausgang der gesteuerten Stromquelle 112 und dem Hinleiter 98a kann, wie in Fig. 6 und 7 gezeigt, eine in der Richtung des ausgehenden Stroms der Stromquelle 112 gepolte Diode 124 angeordnet sein, die einen in die Stromquelle 112 eingehenden Stromfluss verhindert. Ein eingehender Stromfluss in die Stromquelle 112 kann prinzipiell auf beliebige Weise verhindert werden, beispielsweise indem die Stromquelle 112 selbst so ausgebildet ist, dass ein solcher Strom vermieden wird. Ebenso könnte anstelle der Diode 124 ein ähnliches Sperrelement vorgesehen sein, welches einen eingehenden Strom in die Stromquelle 112 verhindert.

Das von der gesteuerten Stromquelle 112 erzeugte Stromsignal wird über den ersten elektrischen Schaltpfad, d.h. über den Hinleiter 98a, den im sicheren Zustand des Schutzgeräts 24 geschlossenen Schalter 96a und den Rückleiter 100a, zu einem Stromflusselement 114 der Testschaltung 62 übertragen. Das Stromflusselement 114 ist eine elektrische Last bzw. ein passives elektrisches Element oder Bauteil und ist dazu ausgebildet, an seinem Eingang das über den Rückleiter 100a übertragene Stromsignal zu empfangen und an seinem Ausgang ein Gleichspannungssignal auszugeben, das von dem empfangenen Stromsignal abhängt und zwar im vorliegenden Ausführungsbeispiel derart, dass ein hoher Strompegel des eingehenden Stromsignals mit einem hohen Spannungspegel des ausgehenden Spannungssignals korrespondiert und ein niedriger Strompegel des eingehenden Stromsignals mit einem niedrigen Spannungspegel des ausgehenden Spannungssignals korrespondiert.

Das von dem Stromflusselement 114 erzeugte Spannungssignal wird an den zweiten Invertierer 116 übertragen, der das Signal empfängt und invertiert und an seinem Ausgang ein invertiertes Signal ausgibt, wobei bei der Invertierung ein hoher Signal- bzw. Spannungspegel des eingehenden Signals in einen niedrigen Signal- bzw. Spannungspegel des ausgehenden Signals umgewandelt wird und ein niedriger Signal- bzw. Spannungspegel des eingehenden Signals in einen hohen Signal- bzw. Spannungspegel des ausgehenden Signals umgewandelt wird.

Der Ausgang des Invertierers 116 ist mit einem Steuereingang der gesteuerten Stromsenke 118 verbunden, die dazu ausgebildet ist, das von dem Invertierer 116 gelieferte Gleichspannungssignal in ein Gleichstromsignal umzuwandeln, derart, dass ein hoher Pegel des von dem Invertierer 116 gelieferten Gleichspannungssignals mit einem hohen Pegel des Gleichstromsignals korrespondiert und ein niedriger Pegel des von dem Intertierer 116 gelieferten Gleichspannungssignals mit einem niedrigen Pegel des Gleichstromsignals korrespondiert. Die gesteuerte Stromsenke 118 ist als aktive Stromsenke ausgebildet und dazu eingerichtet, an ihrem Ausgang einen, bezogen auf die technische Stromrichtung, positiven eingehenden, d.h. negativen ausgehenden, elektrischen Stromfluss zu erzeugen, der in der vorstehend beschriebenen Weise von dem anliegenden Steuersignal abhängt.

Das von der gesteuerten Stromsenke 118 erzeugte Gleichstromsignal wird über den zweiten elektrischen Schaltpfad, d.h. über den Hinleiter 98b, den im sicheren Zustand des Schutzgeräts 24 geschlossenen Schalter 96b und den Rückleiter 100b, zu dem Stromrichtungselement 120 übertragen. Wie an dieser Stelle deutlich wird, beziehen sich die Bezeichnungen der Leiter 98b, 100b als "Hin"-leiter bzw. "Rück"-leiter nicht auf die technische Stromflussrichtung, sondern auf die Signalflussrichtung, die im Falle des Schalters 96b der technischen Stromflussrichtung entgegen gesetzt ist, da die Stromsenke 118 ein durch einen eingehenden Strom definiertes Stromsignal erzeugt und überträgt.

Das Stromrichtungselement 120 ist dazu ausgebildet, an seinem Ausgang ein von dem empfangenen Gleichstromsignal abhängiges Gleichspannungssignal auszugeben. Das Stromrichtungselement 120 erzeugt ein dem empfangenen Stromsignal entsprechendes Spannungssignal, so lange der Wert des über den zweiten Schaltpfad übertragenen, von dem Stromrichtungselement 120 empfangenen und durch einen ausgehenden Strom des Stromrichtungselements 120 definierten Stromsignals zwischen einem erwarteten niedrigen Pegel, z.B. 0 mA, und einem erwarteten hohen Pegel, z.B. 10 mA, wechselt. In diesem Fall erzeugt das Stromrichtungselement 120 bevorzugt an seinem Ausgang ein Gleichspannungssignal, welches dem an seinem Eingang empfangenen Stromsignal entspricht, d.h. dass ein hoher ausgehender Strompegel des Stromsignals mit einem hohen Spannungspegel des Spannungssignals korrespondiert und ein niedriger ausgehender Strompegel des Stromsignals mit einem niedrigen Pegel des Spannungssignals korrespondiert.

Das Stromrichtungselement 120 ist ferner dazu eingerichtet, zu erkennen, wenn - entgegen der Erwartung bei fehlerfreiem Betrieb - an dem Stromrichtungselement 120 ein eingehender Stromfluss vorliegt, und/oder zu erkennen, wenn zwar ein ausgehender Stromfluss an dem Stromrichtungselement 120 vorliegt, dessen Pegel aber zumindest für eine bestimmte Zeit keinem bei einem fehlerfreien Betrieb des Sicherheitsteilnehmers 22 erwarteten Pegel entspricht, d.h. vorliegend weder dem bei fehlerfreiem Betrieb erwarteten hohen Pegel noch dem bei fehlerfreiem Betrieb erwarteten niedrigen Pegel des über den zweiten elektrischen Schaltpfads übertragenen Stromsignals. Beispielsweise kann ein Fehler angenommen werden, wenn der Wert des ausgehenden Stroms an dem Stromrichtungselement 120 unter dem erwarteten hohen Pegel des Stromsignals von der Stromsenke 118 und über dem erwarteten niedrigen Pegel des Stromsignals von der Stromsenke 118 liegt. In den vorstehenden Fällen erzeugt das Stromrichtungselement 120 an seinem Ausgang vorzugsweise ein Spannungssignal, das zu einer Verletzung der Erwartungshaltung der Sicherheitssteuerung führt, ggf. in Zusammenwirken mit der nachstehend erläuterten Dynamikeinheit 122. Das Stromrichtungselement 120 erzeugt beispielsweise ein Spannungssignal mit einem Pegel, der dauerhaft bzw. zumindest für eine vollständige Testzyklusdauer, d.h. die Dauer von dem Beginn einer Testlücke bis zu dem Beginn der nächsten Testlücke des von der Sicherheitssteuerung erwarteten Testsignals, einen im Wesentlichen konstanten Wert annimmt.

Das Stromrichtungselement 120 kann als elektrische Last bzw. als passives elektrisches Element bzw. Bauteil ausgebildet sein. Das Stromrichtungselement 120 kann, wie in Fig. 6 und 7 gezeigt, eine Zenerdiode 121 umfassen, die in Richtung des aus dem Stromrichtungselement 120 ausgehenden Stroms gepolt ist, wobei die Zenerdiode 121 aber nicht unbedingt erforderlich ist. Die Zenerdiode 121 kann sich bei einem erwarteten hohen Pegel des aus dem Stromrichtungselement 120 ausgehenden Stromflusses in ihrem Durchlassbereich befinden, in der eine Spannung an der Zenerdiode 121 anliegt, die im Bereich einer Durchlassspannung der Zenerdiode 121 liegt, und kann sich bei einem demgegenüber verringerten aus dem Stromrichtungselement 120 ausgehenden Stromfluss in einem Sperrbereich befinden, in dem eine geringere als die Durchlassspannung an der Zenerdiode 121 anliegt.

Zusätzlich zu den vorstehenden Komponenten kann eine wie in Fig. 8 gezeigte Dynamikeinheit 122 vorgesehen sein, die an ihrem Eingang das von dem Stromrichtungselement 120 erzeugte Spannungssignal empfängt und dazu eingerichtet ist, das empfangene Signal im Wesentlichen unverändert weiterzuleiten, wenn das empfangene Signal die erwartete Dynamik aufweist, d.h. insbesondere regelmäßig auftretende Testlücken. Wenn das empfangene Signal nicht die erwartete Dynamik aufweist, gibt die Dynamikeinheit ein Signal mit einem im Wesentlichen konstanten Pegel aus. Die Dynamikeinheit bildet dabei sowohl einen konstant hohen Pegel ihres Eingangssignals als auch einen konstant niedrigen Pegel ihres Eingangssignals auf denselben, hohen oder niedrigen, Pegel ihres Ausgangssignals ab. Die einheitliche Abbildung sowohl eines konstant hohen Pegels als auch eines konstant niedrigen Pegels auf denselben Pegel führt zu einer Zustandsreduktion, die es erleichtert, an der Sicherheitssteuerung anhand des eingehenden Testsignals einen Abschaltfall, d.h. das Vorliegen eines nicht sicheren Zustands eines Sicherheitsteilnehmers, von einem Systemfehler zu unterscheiden.

Im Folgenden wird die Funktionsweise der Testschaltung 62 unter Bezugnahme auf die Fig. 8 und Fig. 9 erläutert, wobei Fig. 9 die Strom- und Spannungssignale zeigt, die auf den zwischen den Komponenten der Testschaltung 62 angeordneten Abschnitten des Testsignalpfads 36 bei fehlerfreier Funktion des Sicherheitsteilnehmers 22 und im sicheren Zustand des Schutzgeräts 24, in dem die beiden Schalter 96a, 96b geschlossen sind, jeweils vorhanden sind. Ganz oben in Fig. 9 ist das an dem Testsignaleingang 106 eingehende, auf der elektrischen Spannung U basierende Testsignal 80 gezeigt, wie es von dem Abschlusselement 32 ausgesendet wird. Der Invertierer 110 erzeugt ein zu dem empfangenen Testsignal 80 invertiertes Spannungssignal U₁₁₀, d.h. ein wie in Fig. 9 gezeigtes Spannungssignal U₁₁₀ mit einem niedrigen Spannungspegel während des hohen Signalpegels des eingehenden Testsignals 80 und einem hohen Spannungspegel in der Form eines Testpulses während der Testlücke 82 des empfangenen Testsignals 80. Die gesteuerte Stromquelle 112 erzeugt daraus ein durch einen ausgehenden Strom i_{ausg} der Stromquelle 112 gebildetes Stromsignal I₁₁₂ mit einer zu dem Spannungssignal U₁₁₀ im Wesentlichen identischen Form, d.h. einem Strompuls mit einem hohen ausgehenden Strompegel während der Testlücke 82 des empfangenen Testsignals 80 und einem niedrigen Strompegel zwischen zwei Strompulsen.

Dieses Stromsignal I₁₁₂ wird zu dem Stromflusselement 114 übertragen, welches aus dem übertragenen Stromsignal I₁₁₂ ein Spannungssignal U₁₁₄ generiert, das in seiner Form mit dem von dem Invertierer 110 erzeugten Spannungssignal U₁₁₀ identisch ist. Das von dem Stromflusselement 114 erzeugte Spannungssignal U₁₁₄ wird durch den Invertierer 116 invertiert, so dass dieser an seinem Ausgang ein Spannungssignal U₁₁₆ bereitstellt und an die gesteuerte Stromsenke 118 übermittelt, welches in seiner Form mit dem an dem Testsignaleingang 106 empfangenen Testsignal 80 identisch ist. Die Stromsenke 118 erzeugt daraus ein durch einen eingehenden elektrischen Strom i_{eing} der Stromsenke 118 gebildetes Stromsignal I₁₁₈, das in seiner Form mit dem von dem Invertierer 116 gelieferten Spannungssignal U₁₁₆ identisch ist und über den Schalter 96b zu dem Stromrichtungselement 120 übertragen wird, welches daraus ein Spannungssignal U₁₂₀ erzeugt, das in seiner Form mit dem von der Stromsenke 118 gelieferten Stromsignal I₁₁₈ und folglich mit dem an dem Testsignaleingang 106 eingehenden Testsignal 80 identisch ist. Die Dynamikeinheit 122 leitet das Signal U₁₂₀ im Wesentlichen unverändert weiter, wenn das Signal U₁₂₀ die erwartete Dynamik aufweist. Andernfalls gibt die Dynamikeinheit 122 ein Signal mit einem im Wesentlichen konstanten Pegel aus. Das Ausgangssignal der Dynamikeinheit 122 wird an dem Testsignalausgang 108 des Sicherheitsteilnehmers 22 bereitgestellt.

Somit wird bei intaktem Sicherheitselement 22 und im sicheren Zustand des Schutzgeräts 24 an dem Testsignalausgang 108 ein Testsignal bereitgestellt, welches mit dem an dem Testsignaleingang 106 empfangenen Testsignal im Hinblick auf die von der Sicherheitssteuerung 10 überprüften Eigenschaften, insbesondere Signalform und Signalsynchronität, identisch ist, so dass die Erwartungshaltung der Sicherheitssteuerung erfüllt wird.

Wird zumindest einer der Schalter 96a, 96b des Schutzgeräts 24 bei dem Eintreten eines nicht sicheren Zustands des Schutzgeräts 24 geöffnet, wird das Stromflusselement 114 und/oder das Stromrichtungselement 116 nicht mehr durch das eingehende Testsignal 80 angeregt, was zu einem Verlust der Dynamik des an dem Ausgang 108 ausgegebenen Testsignals und somit zuverlässig zu einer Sicherheitsabschaltung durch die Sicherheitssteuerung führt. Dieselbe Wirkung hat eine Leitungsunterbrechung eines Hinleiters 98a, 98b oder Rückleiters 100a, 100b in der Anschaltungsleitung 30, so dass auch in diesem Fehlerfall zuverlässig eine Sicherheitsabschaltung erfolgt. Im Falle der Unterbrechung des Hinleiters 98a oder Rückleiters 100a liegt an dem Ausgang des Invertierers 116 dauerhaft ein hoher Pegel an, so dass eine permanente Ansteuerung der Stromsenke 118 erfolgt und somit ein dauerhafter eingehender Stromfluss am Ausgang der Stromsenke 118 ohne die erwartete Signaldynamik auftritt. Im Falle der Unterbrechung des Hinleiters 98b oder Rückleiters 100b wird an dem Stromrichtungselement 120 dauerhaft kein ausgehender Strom erzeugt, so dass dessen Ausgangssignal U₁₂₀ einen dauerhaft niedrigen Pegel ohne die erwartete Signaldynamik annimmt.

Zudem bewirkt die Testschaltung 62, dass auch ein Querschluss zwischen den beiden Schaltpfaden, d.h. ein Querschluss zwischen dem Hinleiter 98a und/oder Rückleiter 100a eines elektrischen Schaltpfades mit dem Hinleiter 98b und/oder Rückleiter 100b des anderen elektrischen Schaltpfades erkannt wird und zu einer Sicherheitsabschaltung führt. Im Falle eines solchen Querschlusses wird der zweite Schaltpfad unmittelbar mit der Stromquelle 112 verbunden, welche im Falle eines Signals mit einem hohen Pegel an ihrem Steuereingang einen ausgehenden Stromfluss antreibt. Die Stromquelle 112 wirkt somit einem ausgehenden Stromfluss an dem Stromrichtungselement 120 entgegen, so dass sich an dem Stromrichtungselement 120 zumindest zeitweise ein eingehender Stromfluss einstellt oder zumindest ein Stromfluss mit einem zumindest für eine bestimmte Zeit vorliegenden Pegel, der sich von dem bei fehlerfreiem Betrieb erwarteten Pegel des Stromsignals I₁₁₈ unterscheidet und beispielsweise unterhalb des erwarteten hohen Pegels und gleichzeitig oberhalb des erwarteten niedrigen Pegels von z.B. 0 mA liegt. Das Stromrichtungselement 120 ist dazu ausgebildet, eine solche Abweichung von dem fehlerfreien Betrieb anhand des Stromflusses durch das Stromrichtungselement 120 zu erkennen und in diesem Fall ein Spannungssignal U₁₂₀ an seinem Ausgang zu erzeugen, welches vorzugsweise einen dauerhaft konstanten Spannungspegel aufweist und welches zu einem die Erwartungshaltung der Sicherheitssteuerung 10 verletzenden Testsignal an dem Testsignalausgang 108 führt. Somit wird auch dieser Fehlerfall, der aufgrund der parallelen Führung der Hinleiter 98a, 98b und Rückleiter 100a, 100b beider elektrischer Schaltpfade in einem gemeinsamen Anschaltungskabel 28 prinzipiell auftreten kann, zuverlässig erkannt und kann somit nicht zu einem Verlust der Sicherheitsfunktion führen.

Die Testschaltung 62 wird allein durch das an dem Eingang 106 empfangene Testsignal angeregt und die Dynamik des an dem Ausgang 108 ausgegebenen Testsignals wird allein durch die Dynamik dieses eingehenden Testsignals erzeugt. Die Testschaltung 62 kommt dementsprechende vollständig ohne eigene Zeitbasis und insbesondere ohne einen eigenen Taktgeber aus und die hierin beschriebenen Bestandteile der Testschaltung 62 können sämtlich durch diskrete Bauteile gebildet sein, d.h. dass auf die Verwendung eines integrierten Schaltkreises wie z.B. eines Mikroprozessors verzichtet werden kann. Die Zuverlässigkeit und Fehlersicherheit der Testschaltung 62 wird dadurch erheblich gesteigert. Außerdem wird eine Verzögerung zwischen dem an dem Testsignaleingang 106 eingehenden Testsignal und dem an dem Testsignalausgang 108 ausgehenden Testsignal weitestgehend vermieden und die Ansprechzeit des Sicherheitssystems insgesamt optimiert.

In dem vorstehend beschriebenen Ausführungsbeispiel einer Testschaltung 62 bilden der Invertierer 110 und die nicht-invertierende gesteuerte Stromquelle 112 zusammen eine invertierende gesteuerte Stromquelle und der Invertierer 116 und die nicht-invertierende gesteuerte Stromsenke 118 bilden zusammen eine invertierende gesteuerte Stromsenke. Anstelle des Aufbaus dieser gesteuerten invertierenden Stromquelle bzw. -senke aus separaten Bauteilen, nämlich aus dem Invertierer 110, 116 und der gesteuerten nicht-invertierenden Stromquelle 112 bzw. -senke 118, könnte jeweils auch eine einteilige gesteuerte invertierende Stromquelle bzw. - senke eingesetzt werden, d.h. eine gesteuerte Stromquelle bzw. Stromsenke, die bei einem hohen Pegel des Steuersignals einen ausgehenden bzw. eingehenden Strom mit einem niedrigen Pegel erzeugt und die bei einem niedrigen Pegel des Steuersignals einen ausgehenden bzw. eingehenden Strom mit einem hohen Pegel erzeugt. Ebenso kann prinzipiell auf das Stromflusselement 114 verzichtet werden bzw. dessen Funktion in den Invertierer 116 oder eine invertierende gesteuerte Stromsenke integriert werden, indem ein stromgesteuerter Invertierer bzw. eine stromgesteuerte invertierende Stromsenke verwendet wird.

Die die Sicherheit erhöhende Funktionalität der vorstehend beschriebenen Testschaltung 62 kann auch erreicht werden, wenn Stromquelle 112 und Stromsenke 118 gegenüber der beschriebenen Ausführungsform vertauscht sind. An dem Stromrichtungselement 120 wird dann bei fehlerfreiem Betrieb ein eingehender Stromfluss erwartet, der durch die Stromquelle 112 erzeugt wird, so dass das Stromrichtungselement 120 bevorzugt dazu ausgebildet ist, einen Fehler daran zu erkennen, dass unerwarteter Weise ein ausgehender Stromfluss an dem Stromrichtungselement auftritt oder ein eingehender Stromfluss, der keinen bei fehlerfreiem Betrieb erwarteten Pegel aufweist. Die Stromsenke 118 ist dann bevorzugt so ausgebildet oder beschaltet, dass ein ausgehender Stromfluss aus der Stromsenke 118 verhindert wird. Dazu könnte beispielsweise eine der in Fig. 9 gezeigten, mit dem Ausgang der Stromquelle 112 verbundenen Diode 124 entsprechende Diode an dem Ausgang der Stromsenke 118 vorgesehen sein, welche eine gegenüber der Darstellung in Fig. 9 entgegen gesetzte Polung besitzt.

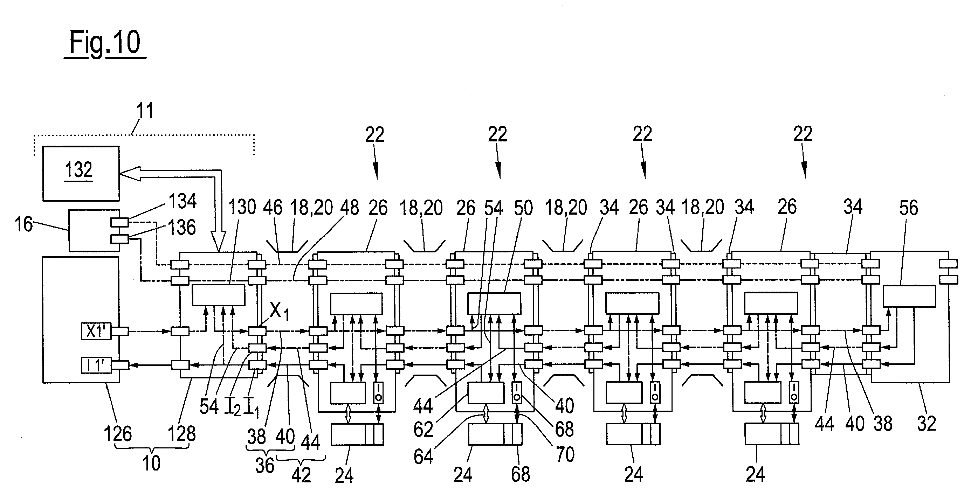

Fig. 10 zeigt eine weitere Ausführungsform eines erfindungsgemäßen Sicherheitssystems, welches mit Ausnahme der aus dem Nachstehenden hervorgehenden Unterschiede dem in Fig. 1 gezeigten Sicherheitssystem entspricht. Die aus der Busleitung 18, den Sicherheitsteilnehmern 22 und dem Abschlusselement 32 gebildete linienförmige Kaskade ist in derselben Weise ausgebildet und eingerichtet wie vorstehend in Bezug auf die übrigen Figuren beschrieben.

In Fig. 10 sind, ebenso wie in Fig. 1 und 11, der Übersichtlichkeit halber nicht alle einzelnen, die Bussignalpfade 38, 40, 44 darstellenden Pfeillinien einzeln mit Bezugszeichen versehen. In Fig. 10 und 11 gehören allerdings alle Pfeillinien, die zumindest abschnittsweise entlang derselben parallel zur Bildhorizontalen verlaufenden Geraden verlaufen, jeweils zu demselben aus Hinleitungspfad 38, Rückleitungspfad 40 und Datenrückleitungspfad 44, d.h. die Pfeillinien mit einem auf der Höhe des Ausgangs X1 parallel zur Bildhorizontalen verlaufenden Abschnitt gehören zu dem Hinleitungspfad 38 des Testsignalpfads 36, die Pfeillinien mit einem auf der Höhe des Eingangs I2 parallel zur Bildhorizontalen verlaufenden Abschnitt gehören zu dem Rückleitungspfad 44 des Datenpfads 42 und die Pfeillinien mit einem auf der Höhe des Sicherheitseingangs I1 parallel zur Bildhorizontalen verlaufenden Abschnitt gehören zu dem Rückleitungspfad 40 des Testsignalpfads 36.

Die Sicherheitssteuerung 10 umfasst ein Sicherheitsmodul 126 und ein Anschlussmodul 128, die unabhängig voneinander ausgebildet und in getrennten Gehäusen untergebracht sind. Die Busleitung 18, die Sicherheitsteilnehmer 22 und das Abschlusselement 32 sind über das Anschlussmodul 128 mit dem Sicherheitsmodul 126 verbunden. Während die vorstehend beschriebenen Anschaltungsmodule 26 also Teil des jeweiligen Sicherheitsteilnehmers 22 sind, ist das Anschlussmodul 128 ein Teil der Sicherheitssteuerung 10. Das Sicherheitsmodul 126 weist einen Standardausgang X1' und einen Sicherheitseingang I1' auf und ist dazu ausgebildet, an seinem Standardausgang X1' ein Testsignal auszusenden, welches beispielsweise einen hohen Signalpegel mit mehreren periodisch auftretenden, den hohen Signalpegel unterbrechenden Testlücken aulweisen kann. An seinem Sicherheitseingang I1' empfängt das Sicherheitsmodul 126 vorzugsweise ein wiederkehrendes Testsignal und vergleicht dieses mit einer Erwartungshaltung, wobei das Sicherheitsmodul 126 im vorliegenden Ausführungsbeispiel vorzugsweise nach der Art eines an sich bekannten herkömmlichen Sicherheitsmoduls 126 die Erwartungshaltung hat, dass an dem Eingang I1' ein mit dem an dem Ausgangs X1' ausgesendeten Testsignal im Wesentlichen identisches Testsignal empfangen wird.

Das Anschlussmodul 128 empfängt das von dem Sicherheitsmodul 126 ausgesendete Testsignal und erzeugt in Abhängigkeit von diesem Testsignal und unter Verwendung einer Logikeinheit 130 mit einem Mikroprozessor ein an dem Ausgang X1 auszusendendes Ausgangssignal der Sicherheitssteuerung 10, welches dem vorstehend in Bezug auf Fig. 1 bis 3 beschriebenen Ausgangssignal 72 (Fig. 2a) entspricht. Das Ausgangssignal enthält periodisch auftretende Synchronisationsmerkmale, deren Auftreten synchron zu den Testlücken in dem von dem Sicherheitsmodul 126 ausgesendeten Testsignal ist und die z.B. durch einen für eine Bitdauer anliegenden niedrigen Signalpegel gefolgt von einem für eine Bitdauer anliegenden hohen Signalpegel gebildet sind. Zusätzlich enthält das Ausgangssignal im vorliegenden Ausführungsbeispiel Ausgangsdaten, die das Anschlussmodul 128 von einer mit ihm verbundenen speicherprogrammierbaren Steuerung 132 erhält und in Form von zwischen den Synchronisationsmerkmalen angeordneten Datenmerkmale in das Ausgangssignal einfügt.

Dieses Ausgangssignal durchläuft den Hinleitungspfad 38 der Linie von Sicherheitsteilnehmern 22 in der vorstehend in Bezug auf Fig. 1 bis 3 beschriebenen Weise bis zu dem Abschlusselement 32. Das Abschlusselement 32 ist dazu eingerichtet, das Ausgangssignal von dem Hinleitungspfad 38 zu empfangen und ein der Erwartungshaltung des Sicherheitsmoduls 126 entsprechendes Testsignal an den Rückleitungspfad 40 des Testsignalpfads 36 auszusenden. Das Anschlussmodul 128 kann dazu eingerichtet sein, vor der Inbetriebnahme des Sicherheitssystems, insbesondere während einer Einlernphase, das von dem Sicherheitsmodul 126 erzeugte Testsignal zu empfangen und anhand dieses empfangenen Testsignals das Abschlusselement 32 so zu konfigurieren, dass dieses während des ordnungsgemäßen Betriebs ein der Erwartungshaltung des Sicherheitsmoduls 126 entsprechendes Testsignal erzeugt und aussendet. Zum Zweck dieser Konfiguration kann das Anschlussmodul 128, vorzugsweise während der Einlernphase, Eigenschaften des von dem Sicherheitsmodul 126 erzeugten Testsignals ermitteln, beispielsweise die Dauer zwischen zwei Testlücken oder die Dauer der Testlücke, und diese Informationen an das Abschlusselement 32 übertragen, welches die Informationen erfasst, vorzugsweise abspeichert, und zur Erzeugung des Testsignals nutzt. Das Anschlussmodul 128 kann dazu ein von dem Sicherheitsmodul 126 empfangenes Testsignal abtasten, um dessen Form zu ermitteln. Eine wie vorstehend beschriebene Konfiguration des Abschlusselements 32 vor der Inbetriebnahme des Sicherheitssystems kann auch auf andere Weise durchgeführt werden, beispielsweise durch einen an das Sicherheitssystem während der Konfigurationsphase angeschlossenen Konfigurationscomputer.

Das Anschlussmodul 128 empfängt das über den Rückleitungspfad 40 übertragene Testsignal an dem Sicherheitseingang I1 und das über den Datenrückleitungspfad 44 übertragene Datensignal an dem nicht-sicheren Standardeingang I2. Das an dem Sicherheitseingang I1 empfangene Testsignal wird von dem Anschlussmodul 128 über eine entsprechende Verbindungsleitung direkt an den Sicherheitseingang I1' des Sicherheitsmoduls 126 durchgeschleift. Das an dem Eingang I2 empfangene Datensignal wird durch die Logikeinheit 130 des Anschlussmoduls 128 ausgewertet und die enthaltenen Daten werden an eine speicherprogrammierbare Steuerung 132 übermittelt, welche diese verarbeitet und auswertet.

Das Anschlussmodul 128, die Sicherheitsteilnehmer 22 und das Abschlusselement 32 stellen Verbraucher elektrischer Leistung dar und werden, wie in Fig. 10 gezeigt, durch eine gemeinsame als Netzteil wie z.B. als Schaltnetzteil ausgebildete Stromversorgungseinheit 16 mit elektrischer Leistung versorgt. Die Stromversorgungseinheit 16 stellt an einem ersten Anschluss 134 ein Gleichspannungspotential von beispielsweise 24 Volt gegenüber Masse bereit und stellt an einem zweiten Anschluss 136 ein zweites Gleichspannungspotential, beispielsweise ein Massepotential, bereit. Das Anschlussmodul 128, die Sicherheitsteilnehmer 22 und das Abschlusselement 32 sind ausgehend von der Stromversorgungseinheit 16 entlang einer ersten Stromversorgungsleitung 46 in Reihe hintereinander geschaltet und über die erste Stromversorgungsleitung 46 an den ersten Anschuss 134 zur Stromversorgung galvanisch leitfähig angeschlossen. Ebenso sind das Anschlussmodul 128, die Sicherheitsteilnehmer 22 und das Abschlusselement 32 über eine zweite Stromversorgungsleitung 48 mit dem zweiten Anschluss 136 zur Stromversorgung galvanisch leitfähig verbunden. Wie in Fig. 10 gezeigt, verlaufen die erste und die zweite Stromverorgungsleitung 46, 48 jeweils abschnittsweise in der Busleitung 18 und sind mit den Leitungsadern der Busleitung 18, die den Testsignalpfad 36 und den Datenpfad 42 bilden, in gemeinsamen Buskabeln 20 angeordnet.

Das Anschlussmodul 128 mit der vorstehend beschriebenen Funktionsweise ermöglicht es, ein Sicherheitsmodul 126 an das Sicherheitssystem anzukoppeln, welches selbst nicht dazu eingerichtet ist, die von dem Anschlussmodul 128 realisierten Funktionen für die angeschlossenen Sicherheitsteilnehmer 22 und das Abschlusselement 32 bereitzustellen, sondern welches dazu eingerichtet ist, in der für Sicherheitsmodule 126 an sich bekannten Weise ein dynamisches Testsignal auszusenden und zu überprüfen, ob ein empfangenes Testsignal dem ausgesendeten Testsignal entspricht. Durch die Verwendbarkeit derartiger Sicherheitsmodule 126 wird der Aufwand für die Bereitstellung des beschriebenen Sicherheitssystems verringert.

Fig. 11 zeigt eine weitere Ausführungsform eines erfindungsgemäßen Sicherheitssystems, welches im Wesentlichen dem in Fig. 1 und Fig. 10 gezeigten Sicherheitssystem entspricht und welches eine gegenüber dem System von Fig. 1 und 10 verbesserte Stromversorgung aufweist.

Das in Fig. 11 gezeigte Sicherheitssystem ist in Bezug auf seine Stromversorgung in zwei Segmente A und B aufgeteilt, die jeweils mehrere, im vorliegenden Ausführungsbeispiel durch die Sicherheitsteilnehmer 22, das Abschlusselement 32 und ein nachstehend beschriebenes Einspeisemodul 140b gebildete, Verbraucher 138a, 138b von elektrischer Leistung umfassen. Jedem Segment A, B ist jeweils eine von zwei separaten elektrischen Stromversorgungseinheiten 16a, 16b zugeordnet, die zur Bereitstellung der elektrischen Spannung jeweils an einem ersten Anschluss 134a, 134b ein erstes Gleichspannungspotential, z.B. 24 Volt gegenüber Masse, und an einem zweiten Anschluss 136a, 136b ein zweites Gleichspannungspotential, z.B. 0 Volt gegenüber Masse bzw. ein Massepotential, bereitstellen. Prinzipiell könnte das Sicherheitssystem auch in mehr als zwei wie vorstehend beschriebene Segmente mit jeweils einem oder mehreren Verbrauchern 138a, 138b aufgeteilt sein.

Die zwei benachbarten Segmente A, B weisen jeweils eine erste Stromversorgungsleitung 46a, 46b und eine zweite Stromversorgungsleitung 48a, 48b auf, über die die Verbraucher 138a, 138b des jeweiligen Segments A, B jeweils mit dem entsprechenden ersten bzw. zweiten Anschluss 134a, 134b, 136a, 136b der zugeordneten Stromversorgungseinheit 16a, 16b elektrisch leitfähig verbunden sind und zwischen denen die elektrische Spannung der jeweiligen Stromversorgungseinheit 16a, 16b breitgestellt ist. Dadurch werden die Verbraucher 138a, 138b mit Strom versorgt, um ihre hierin beschriebenen Funktionen bereitstellen zu können. Die erste und die zweite Stromversorgungsleitung 46a, 48a des einen Segments A sind dabei von der ersten und der zweiten Stromversorgungsleitung 46b, 48b des zweiten Segments B galvanisch getrennt.

Das in Fig. 11 gezeigte Sicherheitssystem umfasst ein Einspeisemodul 140b, das dem Segment B des Sicherheitssystems zugeordnet ist und das Segment B sowohl über das Kabel 146b mit der zugeordneten Stromversorgungseinheit 16b als auch über ein Buskabel 20 mit den Verbrauchern 138a des benachbarten Segments A verbindet. Die Verbraucher 138b des Segments B sind durch das Einspeisemodul 140b, die zwei in Fig. 11 rechts dargestellten Sicherheitsteilnehmer 22 und das Abschlusselement 32 gebildet. Das Einspeisemodul 140b weist ein eigenes Gehäuse auf, welches bevorzugt nach der Gehäuseschutzart IP 20, IP 67 oder einer anderen vor Schmutz oder Feuchtigkeit schützenden Gehäuseschutzart ausgebildet ist.

Die Verbraucher 138a des Segments A sind durch zwei in Fig. 11 links dargestellte Sicherheitsteilnehmer 22 gebildet, wobei der unmittelbar mit der Sicherheitssteuerung 10 verbundene linke Sicherheitsteilnehmer 22 des Segments A über das Kabel 146a direkt ohne Zwischenschaltung eines Einspeisemoduls 140b mit der Stromversorgungseinheit 16a verbunden ist.

Das Einspeisemodul 140b ist nicht nur mit der ersten und zweiten Stromversorgungsleitung 46b, 48b des Segments B verbunden, sondern zudem mit der ersten und zweiten Stromversorgungsleitung 46a, 48a des benachbarten Segments A, wobei die erste und die zweite Stromversorgungsleitung 46a, 48a des Segments A und die erste und zweite Stromversorgungsleitung 46b, 48b des Segments B in dem Einspeisemodul 140b galvanisch voneinander getrennt sind.

Die Bussignalpfade, d.h. der Hinleitungspfad 38 und der Rückleitungspfad 40 des Testsignalpfads 36 und der Datenrückleitungspfad 44, sind jeweils in zwei Abschnitte unterteilt, wobei jeder Abschnitt jeweils einem Segment A, B zugeordnet und mit den Verbrauchern 138a, 138b des jeweiligen Segments A, B elektrisch leitfähig verbunden ist. Ebenso wie die Stromversorgungsleitungen 46a, 48a, 46b, 48b sind auch diejenigen Abschnitte der Bussignalpfade 38, 40, 44, die verschiedenen Segmenten A, B zugeordnet sind, galvanisch voneinander getrennt. Gleichzeitig sind die galvanisch getrennten Abschnitte der Bussignalpfade 38, 40, 44 jeweils durch eine in dem Einspeisemodul 140b angeordnete Kopplungseinheit 142 nicht-galvanisch, insbesondere optisch, induktiv oder kapazitiv, miteinander gekoppelt, so dass trotz der galvanischen Trennung eine durchgehende signalübertragende Verbindung vorhanden ist. Die Kopplungseinheiten 142 werden vorzugsweise durch wenigstens eine der Stromversorgungseinheiten 16a, 16b mit Strom versorgt und können dazu, bevorzugt über entsprechende Anschlüsse des Einspeisemoduls 140b, mit der ersten und/oder zweiten Stromversorgungsleitung 46a, 46b, 48a, 48b des ersten und/oder zweiten Segments A, B verbunden sein, wobei die vorstehend beschriebene galvanische Trennung dieser Stromversorgungsleitungen 46a, 46b, 48a, 48b aufrecht erhalten bleibt. Die entsprechenden Verbindungen zur Stromversorgung der Kopplungseinheiten 142 sind in Fig. 11 nicht dargestellt.

Gemäß einer Ausführungsform umfassen die Kopplungseinheiten 142 jeweils einen Sender und Empfänger zur nicht-galvanischen Signalübertragung, die jeweils einem Segment A, B zugeordnet sind und jeweils mit einem demselben Segment A, B zugeordneten Abschnitt eines Bussignalpfads 38, 40, 44 direkt elektrisch leitfähig verbunden sind. Die Sender sind dabei jeweils dazu ausgebildet, die von dem jeweiligen Abschnitt des Bussignalpfads 38, 40, 44, mit dem sie direkt verbunden sind, empfangenen Signale an einen zugeordneten, mit dem anderen Abschnitt des jeweiligen Bussignalpfads 38, 40, 44 verbundenen Empfänger nicht-galvanisch zu übersenden. Die Empfänger sind dementsprechend dazu ausgebildet, von einem zugeordneten Sender nicht-galvanisch Signale zu empfangen und diese an einen mit dem jeweiligen Empfänger verbundenen Abschnitt des jeweiligen Bussignalpfads 38, 40, 44 auszugeben.

Hierbei wird ein Sender und/oder Empfänger bevorzugt von der Stromversorgungseinheit 16a, 16b mit Strom versorgt, die demselben Segment A, B zugeordnet ist wie der Sender bzw. Empfänger.

Die zwischen zwei Verbrauchern 138a, 138b angeordneten Abschnitte der ersten und zweiten Stromversorgungsleitung 46a, 48a, 46b, 48b sind, wie in Fig. 11 gezeigt, jeweils zusammen mit den entsprechenden Abschnitten der Bussignalpfade 38, 40, 44 in einem gemeinsamen Buskabel 20 angeordnet. Das Einspeisemodul 140b und die übrigen Verbraucher 138a, 138b weisen dabei jeweils Steckverbindungselemente, d.h. Steckverbinder oder Steckerbuchsen, auf, über die sie mit entsprechenden Steckverbindungselementen der Buskabel 20 zur Bildung einer Steckverbindung 34 verbindbar sind, wodurch die elektrische Verbindung zu den in dem Buskabel 20 enthaltenen Leitungsadern hergestellt wird. Zwischen der Sicherheitssteuerung 10 und dem in Fig. 11 links dargestellten Verbraucher 138a ist ein Buskabel 20 angeordnet, welches jeweils eine Leitungsader für jeden der Bussignalpfade 38, 40, 44 umfasst.

Weitere Steckverbindungen 34 dienen zur Verbindung des in Fig. 11 links gezeigten Verbrauchers 138a mit der Stromversorgungseinheit 16a über das Kabel 146a und zur Verbindung des Einspeisemoduls 140b mit der Stromversorgungseinheit 16b über ein entsprechendes Kabel 146b.

In den Stromversorgungsleitungen 48a und 46b ist jeweils eine elektrische Sicherung 148a, 148b angeordnet, wobei die elektrische Sicherung 148a in dem mit der Stromversorgungseinheit 16a verbundenen Kabel 146a angeordnet ist und die elektrische Sicherung 148b in dem Einspeisemodul 140b angeordnet ist. Bei den Sicherungen 148a, 148b kann es sich um strombegrenzende Sicherungen wie z.B. Schmelzsicherungen oder andere Überstromschutzsicherungen handeln.

Durch die Segmentierung des Sicherheitssystems in Bezug auf die Energieversorgung und durch die galvanische Trennung der Stromversorgungsleitungen 46a, 46b, 48a, 48b und der Abschnitte der Bussignalpfade 38, 40, 44 zwischen den Segmenten A, B wird die elektromagnetische Verträglichkeit (EMV) des Sicherheitssystems erheblich gesteigert. Außerdem wird die Strombelastung, für die die Komponenten des Sicherheitssystems einschließlich der Verbraucher 138a, 138b ausgelegt sein müssen, reduziert, so dass das Sicherungskonzept des Sicherheitssystems vereinfacht und die Komplexität des Sicherheitssystems reduziert wird. Gleichzeitig lässt sich das segmentierte Sicherheitssystem sehr einfach planen und implementieren, indem an geeigneten Stellen zwischen zwei zu erzeugenden galvanisch getrennten Segmenten ein wie vorstehend beschriebenes Einspeisemodul 140b mit einer entsprechenden Stromversorgungseinheit 16a, 16b eingesetzt wird. Für die Auslegung der Stromversorgungseinheiten 16a, 16b müssen dabei nur die maximale Stromaufnahme der Verbraucher 138a, 138b des jeweils zugeordneten Segments A, B und die Leitungslängen in demselben Segment A, B berücksichtigt werden.

### Bezugszeichenliste

- 10: Sicherheitssteuerung
- 11: Schaltschrank
- 12: Hauptmodul
- 14: Ein-/Ausgangsmodul
- 16, 16a, 16b: Stromversorgungseinheit
- 18: Busleitung
- 20: Buskabel
- 22: Sicherheitsteilnehmer
- 24: Schutzgerät
- 26: Anschaltungsmodul
- 28: Anschaltungskabel
- 30: Anschaltungsleitung
- 32: Abschlusselement
- 34: Steckverbindung
- 36: Testsignalpfad
- 38: Hinleitungspfad, Datenhinleitungspfad
- 40: Rückleitungspfad des Testsignalpfads
- 42: Datenpfad
- 44: Datenrückleitungspfad
- 46, 46a, 46b: erste Stromversorgungsleitung
- 46': erste Stromversorgungsader
- 48, 48a, 48b: zweite Stromversorgungsleitung
- 48': zweite Stromversorgungsader
- 50: Logikeinheit, Auswerteeinheit
- 52: Mikroprozessor
- 54: Signalpfad
- 56: Logikeinheit
- 58: Mikroprozessor
- 60: Testsignalgenerator
- 62: Testschaltung
- 64: Verbindung
- 66: Unterbrechungsschalter
- 68: Ein-/Ausgabeschnittstelle
- 70: Signalader
- 72: Ausgangssignal
- 74: Synchronisationsmerkmal
- 76: Datenmerkmal
- 78: Datenframe
- 80: Testsignal
- 82: Testlücke
- 86_1-86_3, 86_8: Datensignal
- 86_16, 86_32: Datensignal
- 87: Pfeil
- 88: Laserscanner
- 90: Lichtgitter
- 91: Not-Aus-Taster
- 92: Türzuhaltung
- 94: Schaltsignalleitung
- 96a, 96b: Schalter
- 98, 98a, 98b: Hinleiter
- 100, 100a, 100b: Rückleiter
- 102: Lichtschranke
- 104: optischer Signalpfad
- 105a, 105b: Schalter
- 106: Testsignaleingang
- 108: Testsignalausgang
- 110: Invertierer
- 112: gesteuerte Stromquelle
- 114: Stromflusselement
- 116: Invertierer
- 118: gesteuerte Stromsenke
- 120: Stromrichtungselement
- 121: Zenerdiode
- 122: Dynamikeinheit
- 124: Diode
- 125: Signalverstärker
- 126: Sicherheitsmodul
- 128: Anschlussmodul
- 130: Logikeinheit
- 132: speicherprogrammierbare Steuerung
- 134, 134a, 134b: erster Anschluss
- 136, 136a, 136b: zweiter Anschluss
- 138a, 138b: Verbraucher
- 140b: Einspeisemodul
- 142: Kopplungseinheit
- 146a, 146b: Kabel
- 148a, 148b: elektrische Sicherung
- A1: Gleichspannungsanschluss
- A2: Masseanschluss
- A, B: Segment
- i_{eing}: eingehender elektrischer Strom
- i_{ausg}: ausgehender elektrischer Strom
- I₁₁₂, I₁₁₈: Stromsignal
- I1, I1': Sicherheitseingang
- I2: Eingang
- T: Zykluszeit
- T_{bit}: Bitdauer
- t₁: Dauer der Testlücke
- U: elektrische Spannung
- U₁₁₀, U₁₁₄: Spannungssignal
- U₁₁₆, U₁₂₀: Spannungssignal
- X1, X1': Ausgang

## Patentansprüche

1. Sicherheitssystem umfassend
- eine Sicherheitseinheit (10) mit einem Ausgang (X1) und einem Sicherheitseingang (I1),
- eine Busleitung (18), die an dem Ausgang (X1) und dem Sicherheitseingang (I1) der Sicherheitseinheit (10) angeschlossen ist,
- mehrere an die Busleitung (18) angeschlossene Sicherheitsteilnehmer (22), die jeweils ein Schutzgerät (24) umfassen, wobei ein Schutzgerät (24) ein sicheres Schutzgerät ist, das dazu ausgebildet ist, abhängig von einer für die Sicherheit einer Person relevanten äußeren Einwirkung einen sicheren oder nicht sicheren Zustand anzunehmen,
wobei die Busleitung (18) und die an die Busleitung (18) angeschlossenen Sicherheitsteilnehmer (22) einen Testsignalpfad (36) mit einem mit dem Ausgang (X1) der Sicherheitseinheit (10) verbundenen Hinleitungspfad (38) und einem mit dem Sicherheitseingang (I1) der Sicherheitseinheit (10) verbundenen Rückleitungspfad (40) bilden,
wobei das Sicherheitssystem ferner ein den Hinleitungspfad (38) und den Rückleitungspfad (40) des Testsignalpfads (36) verbindendes Abschlusselement (32) umfasst,
wobei das Sicherheitssystem einen von den Sicherheitsteilnehmern (22) und dem Abschlusselement (32) gemeinsam genutzten Datenpfad (42) umfasst, wobei die Sicherheitsteilnehmer (22) und das Abschlusselement (32) in einer Reihe hintereinander zum Empfangen und/oder Senden von Daten an den Datenpfad (42) angeschlossen und mit diesem verbunden sind,
wobei der Datenpfad (42) als zwischen einem Ausgang (X1) und einem Eingang (I2) der Sicherheitseinheit (10) angeordneter ringförmiger Datenpfad (42) mit dem zwischen der Sicherheitseinheit (10) und dem Abschlusselement (32) verlaufenden Hinleitungspfad (38) und einem von dem Abschlusselement (32) zu der Sicherheitseinheit (10) verlaufenden Datenrückleitungspfad (44) ausgebildet ist, wobei mehrere Sicherheitsteilnehmer (22) entlang der Busleitung (18) so in einer Linie angeordnet sind, dass sowohl der Hinleitungspfad (38) als auch der Rückleitungspfad (40) des Testsignalpfads (36) durch dieselben Sicherheitsteilnehmer (22) hindurch verlaufen und
wobei die Sicherheitseinheit (10) dazu ausgebildet ist, an ihrem mit dem Hinleitungspfad (38) verbundenen Ausgang (X1) ein Ausgangssignal (72) auszusenden,
**dadurch gekennzeichnet,**
**dass** die Sicherheitsteilnehmer (22) derart eingerichtet sind, dass das Vorliegen eines nicht sicheren Zustandes des zugeordneten Schutzgeräts (24) eine Unterbrechung des Testsignalpfads (36) bewirkt,
**dass** das Ausgangssignal (72) durch die Sicherheitsteilnehmer (22) ohne Unterbrechung bis zu dem Abschlusselement (32) durchgeschleift wird,
**dass** das Abschlusselement (32) dazu ausgebildet ist, das Ausgangssignal (72) von dem Hinleitungspfad (38) zu empfangen und in Abhängigkeit von dem von dem Hinleitungspfad (38) empfangenen Ausgangssignal (72) ein gegenüber dem empfangenen Ausgangssignal (72) verändertes Testsignal (80) an den Rückleitungspfad (40) des Testsignalpfads (36) auszugeben,
wobei das Ausgangssignal (72) wiederkehrende Synchronisationsmerkmale (74) aufweist und das Abschlusselement (32) dazu ausgebildet ist, die Synchronisationsmerkmale (74) zu erfassen und ein zu dem Auftreten der Synchronisationsmerkmale (74) in dem Ausgangssignal (72) synchronisiertes Testsignal (80) auszusenden, und dass die Sicherheitseinheit (10) dazu eingerichtet ist, zu überprüfen, ob ein an ihrem Sicherheitseingang (II) empfangenes Testsignal einer Erwartungshaltung entspricht, und andernfalls eine Sicherheitsmaßnahme durchzuführen oder zu veranlassen.

2. Sicherheitssystem nach zumindest einem der vorstehenden Ansprüche,
**dadurch gekennzeichnet, dass**
die Sicherheitseinheit (10) dazu eingerichtet ist, Daten an die Sicherheitsteilnehmer (22) und/oder das Abschlusselement (32) zu senden und/oder dass
das Abschlusselement (32) und/oder die Sicherheitsteilnehmer (22) dazu eingerichtet sind, Daten an die Sicherheitseinheit (10) zu senden.

3. Sicherheitssystem nach zumindest einem der vorstehenden Ansprüche,
**dadurch gekennzeichnet, dass**
das von der Sicherheitseinheit (10) ausgesendete Ausgangssignal (72) wiederkehrende Synchronisationsmerkmale (74) und Ausgangsdaten repräsentierende Datenmerkmale (76) umfasst, wobei die Synchronisationsmerkmale (74) und die Datenmerkmale (76) in dem Ausgangssignal (72) zeitlich aufeinander folgen.

4. Sicherheitssystem nach zumindest einem der vorstehenden Ansprüche,
**dadurch gekennzeichnet, dass**
die Sicherheitseinheit (10) ein Sicherheitsmodul (126) und ein mit dem Sicherheitsmodul (126) verbundenes Anschlussmodul (128) umfasst, wobei die Busleitung (18), die Sicherheitsteilnehmer (22) und das Abschlusselement (32) über das Anschlussmodul (128) mit dem Sicherheitsmodul (126) verbunden sind.

5. Sicherheitssystem nach Anspruch 4,
**dadurch gekennzeichnet, dass**
das Sicherheitsmodul (126) der Sicherheitseinheit (10) dazu eingerichtet ist, an einem Ausgang (X1') des Sicherheitsmoduls (126) ein Testsignal bereitzustellen und an das Anschlussmodul (128) zu senden, welches einem von dem Sicherheitsmodul (126) erwarteten Testsignal entspricht, und zu überprüfen, ob das an einem Sicherheitseingang (I1') des Sicherheitsmoduls (126) empfangene Testsignal dem erwarteten Testsignal entspricht, und dass das Anschlussmodul (128) dazu ausgebildet ist, in Abhängigkeit von dem an dem Ausgang (X1') des Sicherheitsmoduls (126) ausgesendeten Testsignal das Ausgangssignal (72) der Sicherheitseinheit (10) zu erzeugen und auszusenden.

6. Sicherheitssystem nach Anspruch 4 oder 5,
**dadurch gekennzeichnet, dass**
das Anschlussmodul (128) dazu eingerichtet ist, das Abschlusselement (32) so zu konfigurieren, dass das Abschlusselement (32) ein Testsignal (80) erzeugt und an den Rückleitungspfad (40) des Testsignalpfads (36) ausgibt, welches einem von dem Sicherheitsmodul (126) erwarteten Testsignal entspricht.

7. Sicherheitssystem nach zumindest einem der vorstehenden Ansprüche,
**dadurch gekennzeichnet, dass**
wenigstens einer der Sicherheitsteilnehmer (22) zumindest einen elektrischen Schaltpfad umfasst, der einen Schalter (96a, 96b) des Schutzgeräts (24) umfasst, wobei der Schaltpfad in dem Testsignalpfad (36) angeordnet ist und durch Öffnen und Schließen des Schalters (96a, 96b) des Schutzgeräts (24) geöffnet und geschlossen werden kann, um den Testsignalpfad (36) zu unterbrechen und zu schließen.

8. Sicherheitssystem nach zumindest einem der vorstehenden Ansprüche,
**dadurch gekennzeichnet, dass**
wenigstens einer der Sicherheitsteilnehmer (22) ein Anschaltungsmodul (26) umfasst, über das der Sicherheitsteilnehmer (22) in das Sicherheitssystem eingebunden ist.

9. Sicherheitssystem nach zumindest einem der vorstehenden Ansprüche,
**dadurch gekennzeichnet, dass**
der Sicherheitseingang (I1) der Sicherheitseinheit (10) ein sicherer Eingang ist, welcher dazu ausgebildet ist, eine fehlersichere Auswertung des an dem sicheren Eingang eingehenden Signals zu gewährleisten.

10. Sicherheitssystem nach zumindest einem der vorstehenden Ansprüche,
**dadurch gekennzeichnet, dass**
das von dem Abschlusselement (32) erzeugte binäre Testsignal (80) einen hohen Pegel und eine wiederkehrende Testlücke (82) mit einem niedrigen Pegel aufweist.

11. Sicherheitssystem nach Anspruch 10,
**dadurch gekennzeichnet, dass**
die Testlücke (82) in periodischen Abständen wiederkehrt.

## Claims

1. A safety system comprising
- a safety unit (10) having an output (X1) and a safety input (11);
- a bus line (18) which is connected to the output (X1) and to the safety input (I1) of the safety unit (10); and
- a plurality of safety participants (22) which are connected to the bus line (18) and which each comprise a protective device (24), with a protective device (24) being a secure protective device which is configured to take on a secure state or a non-secure state in dependence on an external influence relevant for the safety of a person,
wherein the bus line (18) and the safety participants (22) connected to the bus line (18) form a test signal path (36) having a forward path (38) connected to the output (X1) of the safety unit (10) and having a return path (40) connected to the safety input (11) of the safety unit (10);
wherein the safety system further comprises a termination element (32) connecting the forward path (38) to the return path (40) of the test signal path (36);
wherein the safety system comprises a data path (42) used in common by the safety participants (22) and the termination element (32), with the safety participants (22) and the termination element (32) being connected in a series one after the other for the reception and/or transmission of data to and from the data path (42) and being connected to said data path (42);
wherein the data path (42) is configured as a ring-shaped data path (42) which is arranged between an output (X1) and an input (12) of the safety unit (10), which has the forward path (38) running between the safety unit (10) and the termination element (32) and which has a data return path (44) running from the termination element (32) to the safety unit (10);
wherein a plurality of safety participants (22) are arranged along the bus line (18) in a line such that both the forward path (38) and the return path (40) of the test signal path (36) run through the same safety participants (22); and
wherein the safety unit (10) is configured to transmit an output signal (72) at its output (X1) connected to the forward path (38), **characterized in that**
the safety participants (22) are adapted such that the presence of a non-secure state of the associated protective device (24) brings about an interruption of the test signal path (36);
**in that** the output signal (72) is looped through the safety participants (22) without interruption up to the termination element (32);
**in that** the termination element (32) is configured to receive the output signal (72) from the forward path (38) and to transmit a test signal (80), which is changed with respect to the received output signal (72), to the return path (40) of the test signal path (36) in dependence on the output signal (72) received from the forward path (38),
with the output signal (72) having recurring synchronization features (74) and the termination element (32) being configured to detect the synchronization features (74) and to transmit a test signal (80) synchronized with respect to the occurrence of the synchronization features (74) in the output signal (72); and
**in that** the safety unit (10) is adapted to check whether a test signal received at its safety input (11) corresponds to an expectation and otherwise to carry out or to initiate a safety measure.

2. A safety system in accordance with at least one of the preceding claims,
**characterized in that**
the safety unit (10) is adapted to transmit data to the safety participants (22) and/or to the termination element (32); and/or **in that**
the termination element (32) and/or the safety participants (22) is/are adapted to transmit data to the safety unit (10).

3. A safety system in accordance with at least one of the preceding claims,
**characterized in that**
the output signal (72) transmitted by the safety unit (10) has recurring synchronization features (74) and data features (76) representing output data, with the synchronization features (74) and the data features (76) following one another in time in the output signal (72).

4. A safety system in accordance with at least one of the preceding claims,
**characterized in that**
the safety unit (10) comprises a safety module (126) and a connection module (128) connected to the safety module (126), with the bus line (18), the safety participants (22) and the termination element (32) being connected to the safety module (126) via the connection module (128).

5. A safety system in accordance with claim 4,
**characterized in that**
the safety module (126) of the safety unit (10) is adapted to make available a test signal, which corresponds to a test signal expected by the safety module (126), at an output (X1') of the safety module (126) and to transmit it to the connection module (128) and to check whether the test signal received at a safety input (I1') of the safety module (126) corresponds to the expected test signal; and **in that** the connection module (128) is configured to generate and to transmit the output signal (72) of the safety unit (10) in dependence on the test signal transmitted at the output (X1') of the safety module (126).

6. A safety system in accordance with claim 4 or claim 5,
**characterized in that**
the connection module (128) is adapted to configure the termination element (32) such that the termination element (32) generates a test signal (80), which corresponds to a test signal expected by the safety module (126), and transmits it to the return path (40) of the test signal path (36).

7. A safety system in accordance with at least one of the preceding claims,
**characterized in that**
at least one of the safety participants (22) comprises at least one electrical switching path which comprises a switch (96a, 96b) of the protective device (24), with the switching path being arranged in the test signal path (36) and being able to be opened and closed by an opening and a closing of the switch (96a, 96b) of the protective device (24) to interrupt and to close the test signal path (36).

8. A safety system in accordance with at least one of the preceding claims,
**characterized in that**
at least one of the safety participants (22) comprises an interconnection module (26) via which the safety participant (22) is incorporated in the safety system.

9. A safety system in accordance with at least one of the preceding claims,
**characterized in that**
the safety input (I1) of the safety unit (10) is a secure input which is configured to ensure an error-safe evaluation of the signal arriving at the secure input.

10. A safety system in accordance with at least one of the preceding claims,
**characterized in that**
the binary test signal (80) generated by the termination element (32) has a high level and a recurring test gap (82) having a low level.

11. A safety system in accordance claim 10,
**characterized in that**
the test gap (82) recurs at periodic intervals.

## Revendications

1. Système de sécurité comprenant
- une unité de sécurité (10) présentant une sortie (X1) et une entrée de sécurité (I1),
- une ligne de bus (18) connectée à la sortie (X1) et à l'entrée de sécurité (I1) de l'unité de sécurité (10),
- plusieurs intervenants de sécurité (22) connectés à la ligne de bus (18), chacun comprenant un appareil de protection (24), un appareil de protection (24) étant un appareil de protection sécurisé qui est conçu pour prendre un état sécurisé ou non sécurisé en fonction d'une influence externe pertinente pour la sécurité d'une personne,
dans lequel
la ligne de bus (18) et les intervenants de sécurité (22) connectés à la ligne de bus (18) forment un trajet de signal test (36) avec un trajet d'arrivée (38) connecté à la sortie (X1) de l'unité de sécurité (10) et un trajet de retour (40) connecté à l'entrée de sécurité (I1) de l'unité de sécurité (10),
le système de sécurité comprend en outre un élément de terminaison (32) reliant le trajet d'arrivée (38) et le trajet de retour (40) du trajet de signal test (36),
le système de sécurité comprend un trajet de données (42) utilisé conjointement par les intervenants de sécurité (22) et par l'élément de terminaison (32), les intervenants de sécurité (22) et l'élément de terminaison (32) étant connectés et reliés au trajet de données (42) en une rangée les uns derrière les autres pour recevoir et/ou pour émettre des données,
le trajet de données (42) est formé comme un trajet de données annulaire (42) disposé entre une sortie (X1) et une entrée (I2) de l'unité de sécurité (10), ayant le trajet d'arrivée (38) s'étendant entre l'unité de sécurité (10) et l'élément de terminaison (32) et ayant un trajet de retour de données (44) s'étendant depuis l'élément de terminaison (32) jusqu'à l'unité de sécurité (10),
plusieurs intervenants de sécurité (22) sont disposés en une ligne le long de la ligne de bus (18) de telle sorte que le trajet d'arrivée (38) et également le trajet de retour (30) du trajet de signal test (36) passent par les mêmes intervenants de sécurité (22), et
l'unité de sécurité (10) est réalisée pour émettre un signal de sortie (72) à sa sortie connectée (X1) au trajet d'arrivée (38),
**caractérisé en ce que**
les intervenants de sécurité (22) sont conçus de telle sorte que la présence d'un état non sécurisé de l'appareil de protection (24) associé provoque une interruption du trajet de signal test (36),
le signal de sortie (72) est mis en boucle sans interruption jusqu'à l'élément de terminaison (32) par les intervenants de sécurité (22),
l'élément de terminaison (32) est réalisé pour recevoir le signal de sortie (72) depuis le trajet d'arrivée (38) et, en fonction du signal de sortie (72) reçu depuis le trajet d'arrivée (38), pour émettre vers le trajet de retour (40) du trajet de signal test (36), un signal test (80) qui est modifié par rapport au signal de sortie (72) reçu,
le signal de sortie (72) présente des caractéristiques de synchronisation récurrentes (74) et l'élément de terminaison (32) est adapté pour détecter les caractéristiques de synchronisation (74) et pour émettre un signal test (80) synchronisé à l'apparition des caractéristiques de synchronisation (74) dans le signal de sortie (72), et **en ce que**
l'unité de sécurité (10) est conçue pour vérifier si un signal test reçu à son entrée de sécurité (I1) correspond à des attentes et, dans le cas contraire, pour mettre en œuvre ou lancer une mesure de sécurité.

2. Système de sécurité selon la revendication précédente,
**caractérisé en ce que**
l'unité de sécurité (10) est conçue pour émettre des données aux intervenants de sécurité (22) et/ou à l'élément de terminaison (32), et/ou **en ce que** l'élément de terminaison (32) et/ou les intervenants de sécurité (22) sont conçus pour émettre des données à l'unité de sécurité (10).

3. Système de sécurité selon l'une des revendications précédentes,
**caractérisé en ce que**
le signal de sortie (72) émis par l'unité de sécurité (10) comprend des caractéristiques de synchronisation récurrentes (74) et des caractéristiques de données (76) représentant des données de sortie, et les caractéristiques de synchronisation (74) et les caractéristiques de données (76) dans le signal de sortie (72) se suivent mutuellement dans le temps.

4. Système de sécurité selon l'une au moins des revendications précédentes,
**caractérisé en ce que**
l'unité de sécurité (10) comprend un module de sécurité (126) et un module de raccordement (128) relié au module de sécurité (126), la ligne de bus (18), les intervenants de sécurité (22) et l'élément de terminaison (32) étant reliés au module de sécurité (126) par le module de raccordement (128).

5. Système de sécurité selon la revendication 4,
**caractérisé en ce que**
le module de sécurité (126) de l'unité de sécurité (10) est conçu pour fournir un signal test à une sortie (X1') du module de sécurité (126) et pour l'émettre au module de raccordement (128), qui correspond à un signal test attendu par le module de sécurité (126), et pour vérifier si le signal test reçu à une entrée de sécurité (I1') du module de sécurité (126) correspond au signal test attendu, et **en ce que**
le module de raccordement (128) est réalisé pour générer et émettre le signal de sortie (72) de l'unité de sécurité (10) en fonction du signal test émis à la sortie (X1') du module de sécurité (126).

6. Système de sécurité selon la revendication 4 ou 5,
**caractérisé en ce que**
le module de raccordement (128) est conçu pour configurer l'élément de terminaison (32) de telle sorte que l'élément de terminaison (32) génère un signal test (80) et l'émet au trajet de retour (40) du trajet de signal test (36), qui correspond à un signal test attendu par le module de sécurité (126).

7. Système de sécurité selon l'une au moins des revendications précédentes,
**caractérisé en ce que**
l'un au moins des intervenants de sécurité (22) comprend au moins un trajet de commutation électrique qui comprend un commutateur (96a, 96b) de l'appareil de protection (24), le trajet de commutation étant disposé dans le trajet de signal test (36) et pouvant être ouvert et fermé par une ouverture et une fermeture du commutateur (96a, 96b) de l'appareil de protection (24), afin d'interrompre et de fermer le trajet de signal test (36).

8. Système de sécurité selon l'une au moins des revendications précédentes,
**caractérisé en ce que**
l'un au moins des intervenants de sécurité (22) comprend un module de sélection (26) par lequel l'intervenant de sécurité (22) est intégré dans le système de sécurité.

9. Système de sécurité selon l'une au moins des revendications précédentes,
**caractérisé en ce que**
l'entrée de sécurité (I1) de l'unité de sécurité (10) est une entrée sécurisée qui est conçue pour assurer une évaluation à sécurité intégrée du signal entrant à l'entrée sécurisée.

10. Système de sécurité selon l'une au moins des revendications précédentes,
**caractérisé en ce que**
le signal test binaire (80) généré par l'élément de terminaison (32) présente un niveau élevé et une lacune de test récurrente (82) avec un niveau faible.

11. Système de sécurité selon la revendication 10,
**caractérisé en ce que**
la lacune de test (82) se reproduit à des intervalles périodiques.
